# EUROPEAN PATENT APPLICATION

(11) **EP 3 101 614 A1**
(43) Date of publication of application: **07.12.2016**
(21) Application number: 16001227.4
(22) Date of filing: 31.05.2016
(51) Int. Cl.: G06Q 50/00, G06Q 20/32

(54) **FUNDRAISING THROUGH GROUP OF PARTICIPANTS USING MOBILE DEVICE**

(30) Priority: 04.06.2015 KR 20150079131; 04.06.2015 KR 20150079132
(71) Applicant: LG ELECTRONICS INC., Yeongdeungpo-gu Seoul 07336 (KR)
(72) Inventor: PARK, Mihyun, 06772 Seoul (KR); JEON, Youjin, 06772 Seoul (KR); SHIN, Woohyoung, 06772 Seoul (KR); KIM, Heejin, 06772 Seoul (KR)
(74) Representative: Beyer, Andreas

(57) **Abstract**

A mobile terminal including a display; a communication device configured to communicate with an external device; and a controller configured to display a first interface on the display including information of a multitude of members participating in raising a common fund by being associated with a prescribed account for the common fund, obtain security information on a prescribed first account from a first member among the members, in response to a first command received through the first interface, if the obtained security information matches preset security information for the first account, deposit a prescribed amount into the prescribed account using the first account, and automatically delete the information of the first member from the first interface after payment of the first member.

## Description

### CROSS REFERENCE TO THE RELATED APPLICATIONS

This application claims priority to Korean Patent Applications Nos. 10-2015-0079131, filed on June 4, 2015, and 10-2015-0079132, filed on June 4, 2015, in Korea, the entire contents of which is hereby incorporated by reference in its entirety.

### BACKGROUND OF THE INVENTION

### Field of the Invention

The present invention relates to a mobile terminal, and more particularly, to a mobile terminal and method for controlling the same. Although the present invention is suitable for a wide scope of applications, it is particularly suitable for facilitating the use of a terminal in further consideration of user's convenience.

### Discussion of the Related Art

Terminals may be generally classified as mobile/portable terminals or stationary terminals. Mobile terminals may also be classified as handheld terminals or vehicle mounted terminals. Mobile terminals have become increasingly more functional. Examples of such functions include data and voice communications, capturing images and video via a camera, recording audio, playing music files via a speaker system, and displaying images and video on a display.

Some mobile terminals include additional functionality which supports game playing, while other terminals are configured as multimedia players. More recently, mobile terminals have been configured to receive broadcast and multicast signals which permit viewing of content such as videos and television programs. Efforts are ongoing to support and increase the functionality of mobile terminals. Such efforts include software and hardware improvements, as well as changes and improvements in the structural components.

Recently, the number of users tending to utilize a mobile terminal as a payment mechanism for making a payment using a virtual card built in the mobile terminal or doing an account transfer using the mobile terminal is increasing. However, in administering and using a common fund by a group unit or at a specific meeting, a user's need for intending to use a mobile terminal as a payment/administration means has not been satisfied.

### SUMMARY OF THE INVENTION

Accordingly, an object of the present invention is to address the above-noted and other problems.

One object of the present application is to provide a user environment capable of administering and using a common fund using an application installed on a mobile terminal.

Another object of the present application is to provide a method for a master user administering a common fund to grant or transfer authority to another user using an application installed on a mobile terminal.

Additional advantages, objects, and features of the invention will be set forth in the disclosure herein as well as the accompanying drawings. Such aspects may also be appreciated by those skilled in the art based on the disclosure herein.

To achieve these objects and other advantages and in accordance with the purpose of the invention, as embodied and broadly described herein, a mobile terminal according to one embodiment of the present application may include a display configured to display various information, a communication device configured to communicate with an external device, and a controller connected to the display and the communication device, the controller providing the display with a first interface including information of a multitude of members participating in raising a common fund by being associated with a prescribed account for the common fund, the controller, if receiving a first command through the first interface, obtaining a security information on a prescribed first account from a first member among the members, the controller, if the obtained security information matches a security information preset at the first account, depositing a prescribed amount into the prescribed account using the first account, the controller automatically deleting the information of the first member from the first interface after payment of the first member.

Effects obtainable from the present invention may be non-limited by the above mentioned effect. And, other unmentioned effects can be clearly understood from the following description by those having ordinary skill in the technical field to which the present invention pertains. Both the foregoing general description and the following detailed description of the present invention are exemplary and explanatory and are intended to provide further explanation of the invention as claimed.

Further scope of applicability of the present invention will become apparent from the detailed description given hereinafter. However, it should be understood that the detailed description and specific examples, while indicating preferred embodiments of the invention, are given by illustration only, since various changes and modifications within the spirit and scope of the invention will become apparent to those skilled in the art from this detailed description.

### BRIEF DESCRIPTION OF THE DRAWINGS

The present invention will become more fully understood from the detailed description given herein below and the accompanying drawings, which are given by illustration only, and thus are not limitative of the present invention, and wherein:
FIG. 1A is a block diagram of a mobile terminal according to an embodiment of the present disclosure;
FIGS. 1B and 1C are conceptual views of one example of the mobile terminal, viewed from different directions;
FIG. 2 is a conceptual view of a deformable mobile terminal according to an alternative embodiment of the present disclosure.;
FIG. 3 is a conceptual view of a wearable mobile terminal according to another alternative embodiment of the present disclosure;
FIG. 4 is a conceptual view of a wearable mobile terminal according to another alternative embodiment of the present disclosure;
FIG. 5 is a diagram illustrating one example of a method of using a mobile terminal as a payment mechanism according to one embodiment of the present invention;
FIG. 6 is a diagram illustrating one example of a method of administering and using a common fund using a mobile terminal according to one embodiment of the present invention;
FIG. 7 is a diagram illustrating one example of a method of creating a pay room for administering a common fund in a mobile terminal according to one embodiment of the present invention;
FIG. 8 is a diagram illustrating another example of a method of creating a pay room for administering a common fund in a mobile terminal according to one embodiment of the present invention;
FIG. 9 is a diagram illustrating further example of a method of creating a pay room for administering a common fund in a mobile terminal according to one embodiment of the present invention;
FIG. 10 is a diagram illustrating examples of a virtual card output to a display unit of a mobile terminal according to one embodiment of the present invention;
FIG. 11 is a diagram illustrating examples of a virtual card output to a mobile terminal of a master member or a mobile terminal of a non-master member according to one embodiment of the present invention;
FIG. 12 is a diagram illustrating one example of a method of administering a pay room in a mobile terminal according to one embodiment of the present invention;
FIG. 13 is a diagram illustrating another example of a method of administering a pay room in a mobile terminal according to one embodiment of the present invention;
FIG. 14 is a diagram illustrating one example of a method of collecting membership fees for a common fund in a mobile terminal according to one embodiment of the present invention;
FIG. 15 is a diagram illustrating one example of a method of making a membership fee payment in a mobile terminal according to one embodiment of the present invention;
FIG. 16 is a diagram illustrating one example of a message output through a display unit in case of completing a membership fee payment of each member in a mobile terminal according to one embodiment of the present invention;
FIG. 17 is a diagram illustrating one example of a method of checking a membership fee payment status of members belonging to a pay room in a mobile terminal according to one embodiment of the present invention;
FIG. 18 is a diagram illustrating one example of a method of making a payment off-line using a virtual card in a mobile terminal according to one embodiment of the present invention;
FIG. 19 is a diagram illustrating one example of a method of making a payment on-line using a virtual card in a mobile terminal according to one embodiment of the present invention;
FIG. 20 is a diagram illustrating one example of a method for a master member to grant a use authority of a virtual card to a non-master member in a mobile terminal according to one embodiment of the present invention;
FIG. 21 is a diagram illustrating one example of a method of administering a pay room (or a virtual card) after granting a use authority of a virtual card to a non-master member in a mobile terminal according to one embodiment of the present invention;
FIG. 22 is a diagram illustrating a difference between a GUI of a virtual card output through a mobile terminal of a master member and a GUI of a virtual card output though a mobile terminal of a non-master member in case of granting a use authority of the virtual card to the non-master member in a mobile terminal according to one embodiment of the present invention;
FIG. 23 is a diagram illustrating one example of a method for a master member to transfer a use authority of a virtual card to a non-master member in a mobile terminal according to one embodiment of the present invention;
FIG. 24 is a diagram illustrating one example of a method of administering a pay room (or a virtual card) after transferring a use authority of a virtual card to a member used to be a non-master member in a mobile terminal according to one embodiment of the present invention;
FIG. 25 is a diagram illustrating another example of a method of making a payment of a membership fee in a mobile terminal of a non-master member according to one embodiment of the present invention;
FIG. 26 is a flowchart illustrating one example of a method of controlling a mobile terminal according to one embodiment of the present invention;
FIG. 27 is a diagram illustrating one example of a method of creating a pay room for collecting/administering a common fund in a mobile terminal according to one embodiment of the present invention;
FIG. 28 is a diagram illustrating another example of a method of creating a pay room for administering a common fund in a mobile terminal according to one embodiment of the present invention;
FIG. 29 is a diagram illustrating another example of a method of creating a pay room for administering a common fund in a mobile terminal according to one embodiment of the present invention;
FIG. 30 is a diagram illustrating another example of a method of creating a pay room for administering a common fund in a mobile terminal according to one embodiment of the present invention;
FIG. 31 is a diagram illustrating another example of a method of creating a pay room for administering a common fund in a mobile terminal according to one embodiment of the present invention;
FIG. 32 is a diagram illustrating another example of a method of creating a pay room for administering a common fund in a mobile terminal according to one embodiment of the present invention;
FIG. 33 is a diagram illustrating further example of a method of creating a pay room for administering a common fund in a mobile terminal according to one embodiment of the present invention;
FIG. 34 is a diagram illustrating another further example of a method of creating a pay room for collecting/administering a common fund in a mobile terminal according to one embodiment of the present invention;
FIG. 35 is a diagram illustrating one example of a method of selecting/editing a member to invite to a pay room after creating the pay room in a mobile terminal according to one embodiment of the present invention;
FIG. 36 is a diagram illustrating another example of a method of selecting/editing a member to invite to a pay room after creating the pay room in a mobile terminal according to one embodiment of the present invention;
FIG. 37 is a diagram illustrating one example of a method for a friend invited to a pay room to participate in as a member of the pay room in a mobile terminal according to one embodiment of the present invention;
FIG. 38 is a diagram illustrating one example of a method for a user to participate in as a member of a pay room in a mobile terminal according to one embodiment of the present invention;
FIG. 39 is a diagram illustrating one example of a method for a user to make a request for user's participation in a pay room in a mobile terminal according to one embodiment of the present invention;
FIG. 40 is a diagram illustrating examples of a GUI of a pay room output through a display unit in a mobile terminal according to one embodiment of the present invention;
FIG. 41 is a diagram illustrating one example of a case of eliminating a pay room in a mobile terminal according to one embodiment of the present invention;
FIG. 42 is a diagram illustrating one example of a method of distinguishing a payment-complete member and a payment-incomplete member from each other in a mobile terminal according to one embodiment of the present invention;
FIG. 43 is a diagram illustrating one example of information shown to a payment-incomplete member in a mobile terminal according to one embodiment of the present invention;
FIG. 44 is a diagram illustrating one example of information shown to a payment-complete member in a mobile terminal according to one embodiment of the present invention;
FIG. 45 is a diagram illustrating one example of a method of outputting information mapped to a pay room in a mobile terminal according to one embodiment of the present invention;
FIG. 46 is a diagram illustrating another example of a method of outputting information mapped to a pay room in a mobile terminal according to one embodiment of the present invention;
FIG. 47 is a diagram illustrating one example of a method of making a payment of a prescribed amount using a pay room in a mobile terminal according to one embodiment of the present invention;
FIG. 48 is a diagram illustrating one example of a method of displaying a fingerprint recognizing procedure on a display unit in a mobile terminal according to one embodiment of the present invention;
FIG. 49 is a diagram illustrating another example of a method of making a payment of a prescribed amount using a pay room in a mobile terminal according to one embodiment of the present invention;
FIG. 50 is a diagram illustrating one example of a GUI of a pay room output to a display unit of a mobile terminal according to one embodiment of the present invention;
FIG. 51 is a diagram illustrating one example of a method of providing a notification to members failing to complete payments despite belonging to a payment member in a mobile terminal according to one embodiment of the present invention;
FIG. 52 is a diagram illustrating another example of a method of providing a notification to members failing to complete payments despite belonging to a payment member in a mobile terminal according to one embodiment of the present invention;
FIG. 53 is a diagram illustrating one example of a method for a payment-complete member to make a payment of an amount corresponding to a payment-incomplete member by proxy among members belonging to a pay room in a mobile terminal according to one embodiment of the present invention;
FIG. 54 is a diagram illustrating one example of a method of making a payment of a prescribed amount in a mobile terminal according to one embodiment of the present invention;
FIG. 55 is a diagram illustrating one example of a screen output to a display unit in case of a shortage of a balance in the course of making a payment in a mobile terminal according to one embodiment of the present invention;
FIG. 56 is a diagram illustrating one example of a method of making a payment of a prescribed amount on a list of a pay room in a mobile terminal according to one embodiment of the present invention;
FIG. 57 is a diagram illustrating another example of a method of making a payment of a prescribed amount in a mobile terminal according to one embodiment of the present invention;
FIG. 58 is a diagram illustrating one example of a method of differentiating an information displayed on a display unit in accordance with a status of a pay room in a mobile terminal according to one embodiment of the present invention;
FIG. 59 is a diagram illustrating one example of a method for a payment-complete member to make a payment for another member by proxy in a mobile terminal according to one embodiment of the present invention;
FIG. 60 is a diagram illustrating one example of a method for a master member to administer a pay room in a mobile terminal according to one embodiment of the present invention;
FIG. 61 is a diagram illustrating another example of a method for a master member to administer a pay room in a mobile terminal according to one embodiment of the present invention;
FIG. 62 is a diagram illustrating further example of a method for a master member to administer a pay room in a mobile terminal according to one embodiment of the present invention;
FIG. 63 is a diagram illustrating one example of a virtual card output to a display unit in a mobile terminal according to one embodiment of the present invention;
FIG. 64 is a diagram illustrating one example of a method of making a payment using a virtual card in a mobile terminal according to one embodiment of the present invention; and
FIG. 65 is a diagram illustrating one example of a screen output to a display unit in a mobile terminal according to one embodiment of the present invention.

### DETAILED DESCRIPTION OF THE INVENTION

Description will now be given in detail according to exemplary embodiments disclosed herein, with reference to the accompanying drawings. For the sake of brief description with reference to the drawings, the same or equivalent components may be provided with the same reference numbers, and description thereof will not be repeated. In general, a suffix such as "module" and "unit" may be used to refer to elements or components. Use of such a suffix herein is merely intended to facilitate description of the specification, and the suffix itself is not intended to give any special meaning or function. In the present disclosure, that which is well-known to one of ordinary skill in the relevant art has generally been omitted for the sake of brevity. The accompanying drawings are used to help easily understand various technical features and it should be understood that the embodiments presented herein are not limited by the accompanying drawings. As such, the present disclosure should be construed to extend to any alterations, equivalents and substitutes in addition to those which are particularly set out in the accompanying drawings.

Although the terms first, second, etc. may be used herein to describe various elements, these elements should not be limited by these terms. These terms are generally only used to distinguish one element from another. When an element is referred to as being "connected with" another element, the element can be connected with the other element or intervening elements may also be present. In contrast, when an element is referred to as being "directly connected with" another element, there are no intervening elements present.

A singular representation may include a plural representation unless it represents a definitely different meaning from the context. Terms such as "include" or "has" are used herein and should be understood that they are intended to indicate an existence of several components, functions or steps, disclosed in the specification, and it is also understood that greater or fewer components, functions, or steps may likewise be utilized.

Mobile terminals presented herein may be implemented using a variety of different types of terminals. Examples of such terminals include cellular phones, smart phones, user equipment, laptop computers, digital broadcast terminals, personal digital assistants (PDAs), portable multimedia players (PMPs), navigators, portable computers (PCs), slate PCs, tablet PCs, ultra books, wearable devices (for example, smart watches, smart glasses, head mounted displays (HMDs)), and the like.

By way of non-limiting example only, further description will be made with reference to particular types of mobile terminals. However, such teachings apply equally to other types of terminals, such as those types noted above. In addition, these teachings may also be applied to stationary terminals such as digital TV, desktop computers, and the like.

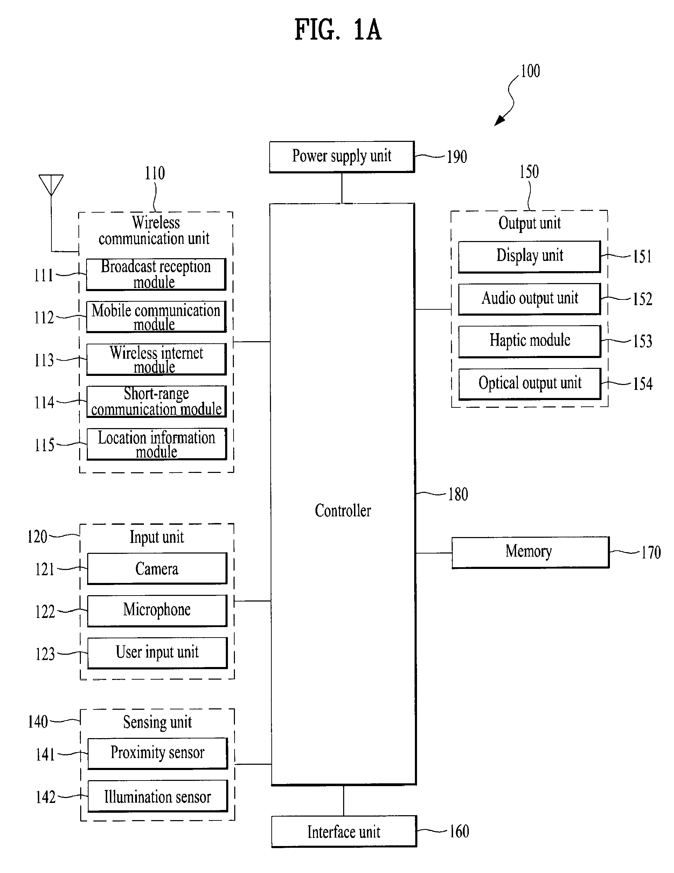

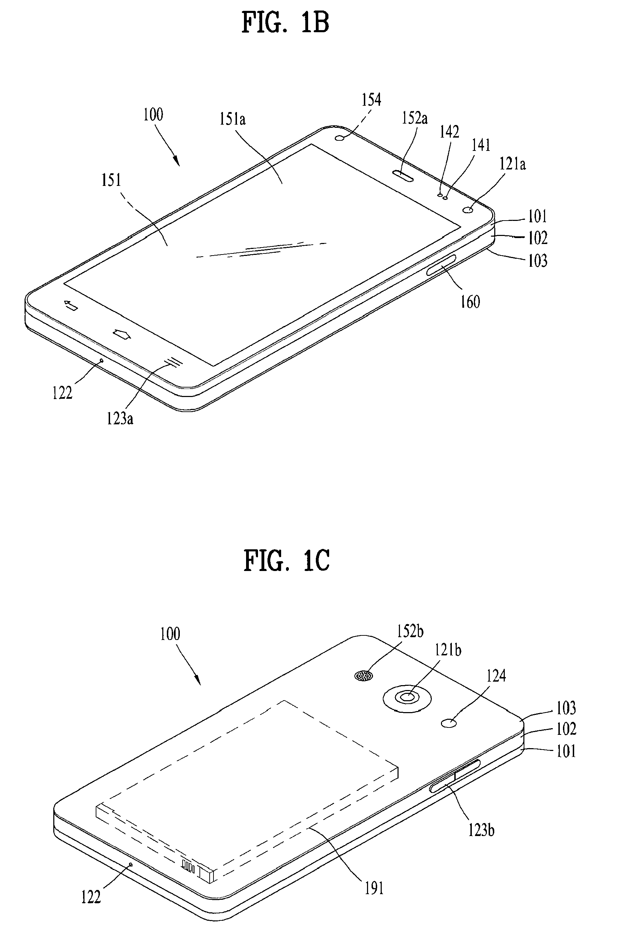

Reference is now made to FIGS. 1A-1C, where FIG. 1A is a block diagram of a mobile terminal in accordance with the present disclosure, and FIGS. 1B and 1C are conceptual views of one example of the mobile terminal, viewed from different directions.

The mobile terminal 100 is shown having components such as a wireless communication unit 110, an input unit 120, a sensing unit 140, an output unit 150, an interface unit 160, a memory 170, a controller 180, and a power supply unit 190. Implementing all of the illustrated components is not a requirement, and that greater or fewer components may alternatively be implemented.

Referring now to FIG. 1A, the mobile terminal 100 is shown having wireless communication unit 110 configured with several commonly implemented components. For instance, the wireless communication unit 110 typically includes one or more components which permit wireless communication between the mobile terminal 100 and a wireless communication system or network within which the mobile terminal is located.

The wireless communication unit 110 typically includes one or more modules which permit communications such as wireless communications between the mobile terminal 100 and a wireless communication system, communications between the mobile terminal 100 and another mobile terminal, communications between the mobile terminal 100 and an external server. Further, the wireless communication unit 110 typically includes one or more modules which connect the mobile terminal 100 to one or more networks. To facilitate such communications, the wireless communication unit 110 includes one or more of a broadcast receiving module 111, a mobile communication module 112, a wireless Internet module 113, a short-range communication module 114, and a location information module 115.

The input unit 120 includes a camera 121 for obtaining images or video, a microphone 122, which is one type of audio input device for inputting an audio signal, and a user input unit 123 (for example, a touch key, a push key, a mechanical key, a soft key, and the like) for allowing a user to input information. Data (for example, audio, video, image, and the like) is obtained by the input unit 120 and may be analyzed and processed by controller 180 according to device parameters, user commands, and combinations thereof.

The sensing unit 140 is typically implemented using one or more sensors configured to sense internal information of the mobile terminal, the surrounding environment of the mobile terminal, user information, and the like. For example, in FIG. 1A, the sensing unit 140 is shown having a proximity sensor 141 and an illumination sensor 142.

If desired, the sensing unit 140 may alternatively or additionally include other types of sensors or devices, such as a touch sensor, an acceleration sensor, a magnetic sensor, a G-sensor, a gyroscope sensor, a motion sensor, an RGB sensor, an infrared (IR) sensor, a finger scan sensor, a ultrasonic sensor, an optical sensor (for example, camera 121), a microphone 122, a battery gauge, an environment sensor (for example, a barometer, a hygrometer, a thermometer, a radiation detection sensor, a thermal sensor, and a gas sensor, among others), and a chemical sensor (for example, an electronic nose, a health care sensor, a biometric sensor, and the like), to name a few. The mobile terminal 100 may be configured to utilize information obtained from sensing unit 140, and in particular, information obtained from one or more sensors of the sensing unit 140, and combinations thereof.

The output unit 150 is typically configured to output various types of information, such as audio, video, tactile output, and the like. The output unit 150 is shown having a display unit 151, an audio output module 152, a haptic module 153, and an optical output module 154.

The display unit 151 may have an inter-layered structure or an integrated structure with a touch sensor in order to facilitate a touch screen. The touch screen may provide an output interface between the mobile terminal 100 and a user, as well as function as the user input unit 123 which provides an input interface between the mobile terminal 100 and the user.

The interface unit 160 serves as an interface with various types of external devices that can be coupled to the mobile terminal 100. The interface unit 160, for example, may include any of wired or wireless ports, external power supply ports, wired or wireless data ports, memory card ports, ports for connecting a device having an identification module, audio input/output (I/O) ports, video I/O ports, earphone ports, and the like. In some cases, the mobile terminal 100 may perform assorted control functions associated with a connected external device, in response to the external device being connected to the interface unit 160.

The memory 170 is typically implemented to store data to support various functions or features of the mobile terminal 100. For instance, the memory 170 may be configured to store application programs executed in the mobile terminal 100, data or instructions for operations of the mobile terminal 100, and the like. Some of these application programs may be downloaded from an external server via wireless communication. Other application programs may be installed within the mobile terminal 100 at time of manufacturing or shipping, which is typically the case for basic functions of the mobile terminal 100 (for example, receiving a call, placing a call, receiving a message, sending a message, and the like). It is common for application programs to be stored in the memory 170, installed in the mobile terminal 100, and executed by the controller 180 to perform an operation (or function) for the mobile terminal 100.

The controller 180 typically functions to control overall operation of the mobile terminal 100, in addition to the operations associated with the application programs. The controller 180 can provide or process information or functions appropriate for a user by processing signals, data, information and the like, which are input or output by the various components depicted in Fig. 1A, or activating application programs stored in the memory 170. As one example, the controller 180 controls some or all of the components illustrated in FIGS. 1A-1C according to the execution of an application program that have been stored in the memory 170.

The power supply unit 190 can be configured to receive external power or provide internal power in order to supply appropriate power required for operating elements and components included in the mobile terminal 100. The power supply unit 190 may include a battery, and the battery may be configured to be embedded in the terminal body, or configured to be detachable from the terminal body.

Referring still to FIG. 1A, various components depicted in this figure will now be described in more detail. Regarding the wireless communication unit 110, the broadcast receiving module 111 is typically configured to receive a broadcast signal and/or broadcast associated information from an external broadcast managing entity via a broadcast channel. The broadcast channel may include a satellite channel, a terrestrial channel, or both. In some embodiments, two or more broadcast receiving modules 111 may be utilized to facilitate simultaneously receiving of two or more broadcast channels, or to support switching among broadcast channels.

This includes a system which generates and transmits a broadcast signal and/or broadcast associated information, or a server which receives a pre-generated broadcast signal and/or broadcast associated information, and sends such items to the mobile terminal. The broadcast signal may be implemented using any of a TV broadcast signal, a radio broadcast signal, a data broadcast signal, and combinations thereof, among others. The broadcast signal in some cases may further include a data broadcast signal combined with a TV or radio broadcast signal.

The broadcast signal may be encoded according to any of a variety of technical standards or broadcasting methods (for example, International Organization for Standardization (ISO), International Electrotechnical Commission (IEC), Digital Video Broadcast (DVB), Advanced Television Systems Committee (ATSC), and the like) for transmission and reception of digital broadcast signals. The broadcast receiving module 111 can receive the digital broadcast signals using a method appropriate for the transmission method utilized.

Examples of broadcast associated information may include information associated with a broadcast channel, a broadcast program, a broadcast event, a broadcast service provider, or the like. The broadcast associated information may also be provided via a mobile communication network, and in this instance, received by the mobile communication module 112.

The broadcast associated information may be implemented in various formats. For instance, broadcast associated information may include an Electronic Program Guide (EPG) of Digital Multimedia Broadcasting (DMB), an Electronic Service Guide (ESG) of Digital Video Broadcast-Handheld (DVB-H), and the like. Broadcast signals and/or broadcast associated information received via the broadcast receiving module 111 may be stored in a suitable device, such as a memory 170.

The mobile communication module 112 can transmit and/or receive wireless signals to and from one or more network entities. Typical examples of a network entity include a base station, an external mobile terminal, a server, and the like. Such network entities form part of a mobile communication network, which is constructed according to technical standards or communication methods for mobile communications (for example, Global System for Mobile Communication (GSM), Code Division Multi Access (CDMA), CDMA2000 (Code Division Multi Access 2000), EV-DO (Enhanced Voice-Data Optimized or Enhanced Voice-Data Only), Wideband CDMA (WCDMA), High Speed Downlink Packet access (HSDPA), HSUPA (High Speed Uplink Packet Access), Long Term Evolution (LTE), LTE-A (Long Term Evolution-Advanced), and the like). Examples of wireless signals transmitted and/or received via the mobile communication module 112 include audio call signals, video (telephony) call signals, or various formats of data to support communication of text and multimedia messages.

The wireless Internet module 113 is configured to facilitate wireless Internet access. This module may be internally or externally coupled to the mobile terminal 100. The wireless Internet module 113 may transmit and/or receive wireless signals via communication networks according to wireless Internet technologies.

Examples of such wireless Internet access include Wireless LAN (WLAN), Wireless Fidelity (Wi-Fi), Wi-Fi Direct, Digital Living Network Alliance (DLNA), Wireless Broadband (WiBro), Worldwide Interoperability for Microwave Access (WiMAX), High Speed Downlink Packet Access (HSDPA), HSUPA (High Speed Uplink Packet Access), Long Term Evolution (LTE), LTE-A (Long Term Evolution-Advanced), and the like. The wireless Internet module 113 may transmit/receive data according to one or more of such wireless Internet technologies, and other Internet technologies as well.

In some embodiments, when the wireless Internet access is implemented according to, for example, WiBro, HSDPA,HSUPA, GSM, CDMA, WCDMA, LTE, LTE-A and the like, as part of a mobile communication network, the wireless Internet module 113 performs such wireless Internet access. As such, the Internet module 113 may cooperate with, or function as, the mobile communication module 112.

The short-range communication module 114 is configured to facilitate short-range communications. Suitable technologies for implementing such short-range communications include BLUETOOTHTM, Radio Frequency IDentification (RFID), Infrared Data Association (IrDA), Ultra-WideBand (UWB), ZigBee, Near Field Communication (NFC), Wireless-Fidelity (Wi-Fi), Wi-Fi Direct, Wireless USB (Wireless Universal Serial Bus), and the like. The short-range communication module 114 in general supports wireless communications between the mobile terminal 100 and a wireless communication system, communications between the mobile terminal 100 and another mobile terminal 100, or communications between the mobile terminal and a network where another mobile terminal 100 (or an external server) is located, via wireless area networks. One example of the wireless area networks is a wireless personal area networks.

In some embodiments, another mobile terminal (which may be configured similarly to mobile terminal 100) may be a wearable device, for example, a smart watch, a smart glass or a head mounted display (HMD), which can exchange data with the mobile terminal 100 (or otherwise cooperate with the mobile terminal 100). The short-range communication module 114 may sense or recognize the wearable device, and permit communication between the wearable device and the mobile terminal 100. In addition, when the sensed wearable device is a device which is authenticated to communicate with the mobile terminal 100, the controller 180, for example, may cause transmission of data processed in the mobile terminal 100 to the wearable device via the short-range communication module 114. Hence, a user of the wearable device may use the data processed in the mobile terminal 100 on the wearable device. For example, when a call is received in the mobile terminal 100, the user may answer the call using the wearable device. Also, when a message is received in the mobile terminal 100, the user can check the received message using the wearable device.

The location information module 115 is generally configured to detect, calculate, derive or otherwise identify a position of the mobile terminal. As an example, the location information module 115 includes a Global Position System (GPS) module, a Wi-Fi module, or both. If desired, the location information module 115 may alternatively or additionally function with any of the other modules of the wireless communication unit 110 to obtain data related to the position of the mobile terminal.

As one example, when the mobile terminal uses a GPS module, a position of the mobile terminal may be acquired using a signal sent from a GPS satellite. As another example, when the mobile terminal uses the Wi-Fi module, a position of the mobile terminal can be acquired based on information related to a wireless access point (AP) which transmits or receives a wireless signal to or from the Wi-Fi module.

The input unit 120 may be configured to permit various types of input to the mobile terminal 120. Examples of such input include audio, image, video, data, and user input. Image and video input is often obtained using one or more cameras 121. Such cameras 121 may process image frames of still pictures or video obtained by image sensors in a video or image capture mode. The processed image frames can be displayed on the display unit 151 or stored in memory 170. In some cases, the cameras 121 may be arranged in a matrix configuration to permit a plurality of images having various angles or focal points to be input to the mobile terminal 100. As another example, the cameras 121 may be located in a stereoscopic arrangement to acquire left and right images for implementing a stereoscopic image.

The microphone 122 is generally implemented to permit audio input to the mobile terminal 100. The audio input can be processed in various manners according to a function being executed in the mobile terminal 100. If desired, the microphone 122 may include assorted noise removing algorithms to remove unwanted noise generated in the course of receiving the external audio.

The user input unit 123 is a component that permits input by a user. Such user input may enable the controller 180 to control operation of the mobile terminal 100. The user input unit 123 may include one or more of a mechanical input element (for example, a key, a button located on a front and/or rear surface or a side surface of the mobile terminal 100, a dome switch, a jog wheel, a jog switch, and the like), or a touch-sensitive input, among others. As one example, the touch-sensitive input may be a virtual key or a soft key, which is displayed on a touch screen through software processing, or a touch key which is located on the mobile terminal at a location that is other than the touch screen. Further, the virtual key or the visual key may be displayed on the touch screen in various shapes, for example, graphic, text, icon, video, or a combination thereof.

The sensing unit 140 is generally configured to sense one or more of internal information of the mobile terminal, surrounding environment information of the mobile terminal, user information, or the like. The controller 180 generally cooperates with the sending unit 140 to control operation of the mobile terminal 100 or execute data processing, a function or an operation associated with an application program installed in the mobile terminal based on the sensing provided by the sensing unit 140. The sensing unit 140 may be implemented using any of a variety of sensors, some of which will now be described in more detail.

The proximity sensor 141 may include a sensor to sense presence or absence of an object approaching a surface, or an object located near a surface, by using an electromagnetic field, infrared rays, or the like without a mechanical contact. The proximity sensor 141 may be arranged at an inner region of the mobile terminal covered by the touch screen, or near the touch screen.

The proximity sensor 141, for example, may include any of a transmissive type photoelectric sensor, a direct reflective type photoelectric sensor, a mirror reflective type photoelectric sensor, a high-frequency oscillation proximity sensor, a capacitance type proximity sensor, a magnetic type proximity sensor, an infrared rays proximity sensor, and the like. When the touch screen is implemented as a capacitance type, the proximity sensor 141 can sense proximity of a pointer relative to the touch screen by changes of an electromagnetic field, which is responsive to an approach of an object with conductivity. In this instance, the touch screen (touch sensor) may also be categorized as a proximity sensor.

The term "proximity touch" will often be referred to herein to denote the scenario in which a pointer is positioned to be proximate to the touch screen without contacting the touch screen. The term "contact touch" will often be referred to herein to denote the scenario in which a pointer makes physical contact with the touch screen. For the position corresponding to the proximity touch of the pointer relative to the touch screen, such position will correspond to a position where the pointer is perpendicular to the touch screen. The proximity sensor 141 may sense proximity touch, and proximity touch patterns (for example, distance, direction, speed, time, position, moving status, and the like).

In general, controller 180 processes data corresponding to proximity touches and proximity touch patterns sensed by the proximity sensor 141, and cause output of visual information on the touch screen. In addition, the controller 180 can control the mobile terminal 100 to execute different operations or process different data according to whether a touch with respect to a point on the touch screen is either a proximity touch or a contact touch.

A touch sensor can sense a touch applied to the touch screen, such as display unit 151, using any of a variety of touch methods. Examples of such touch methods include a resistive type, a capacitive type, an infrared type, and a magnetic field type, among others.

As one example, the touch sensor may be configured to convert changes of pressure applied to a specific part of the display unit 151, or convert capacitance occurring at a specific part of the display unit 151, into electric input signals. The touch sensor may also be configured to sense not only a touched position and a touched area, but also touch pressure and/or touch capacitance. A touch object is generally used to apply a touch input to the touch sensor. Examples of typical touch objects include a finger, a touch pen, a stylus pen, a pointer, or the like.

When a touch input is sensed by a touch sensor, corresponding signals may be transmitted to a touch controller. The touch controller may process the received signals, and then transmit corresponding data to the controller 180. Accordingly, the controller 180 can sense which region of the display unit 151 has been touched. Here, the touch controller may be a component separate from the controller 180, the controller 180, and combinations thereof.

In some embodiments, the controller 180 can execute the same or different controls according to a type of touch object that touches the touch screen or a touch key provided in addition to the touch screen. Whether to execute the same or different control according to the object which provides a touch input may be decided based on a current operating state of the mobile terminal 100 or a currently executed application program, for example.

The touch sensor and the proximity sensor may be implemented individually, or in combination, to sense various types of touches. Such touches includes a short (or tap) touch, a long touch, a multi-touch, a drag touch, a flick touch, a pinch-in touch, a pinch-out touch, a swipe touch, a hovering touch, and the like.

If desired, an ultrasonic sensor may be implemented to recognize position information relating to a touch object using ultrasonic waves. The controller 180, for example, may calculate a position of a wave generation source based on information sensed by an illumination sensor and a plurality of ultrasonic sensors. Since light is much faster than ultrasonic waves, the time for which the light reaches the optical sensor is much shorter than the time for which the ultrasonic wave reaches the ultrasonic sensor. The position of the wave generation source may be calculated using this fact. For instance, the position of the wave generation source may be calculated using the time difference from the time that the ultrasonic wave reaches the sensor based on the light as a reference signal.

The camera 121 typically includes at least one a camera sensor (CCD, CMOS etc.), a photo sensor (or image sensors), and a laser sensor. Implementing the camera 121 with a laser sensor may allow detection of a touch of a physical object with respect to a 3D stereoscopic image. The photo sensor may be laminated on, or overlapped with, the display device. The photo sensor may be configured to scan movement of the physical object in proximity to the touch screen. In more detail, the photo sensor may include photo diodes and transistors at rows and columns to scan content received at the photo sensor using an electrical signal which changes according to the quantity of applied light. Namely, the photo sensor may calculate the coordinates of the physical object according to variation of light to thus obtain position information of the physical object.

The display unit 151 is generally configured to output information processed in the mobile terminal 100. For example, the display unit 151 may display execution screen information of an application program executing at the mobile terminal 100 or user interface (UI) and graphic user interface (GUI) information in response to the execution screen information.

In some embodiments, the display unit 151 may be implemented as a stereoscopic display unit for displaying stereoscopic images. A typical stereoscopic display unit may employ a stereoscopic display scheme such as a stereoscopic scheme (a glass scheme), an auto-stereoscopic scheme (glassless scheme), a projection scheme (holographic scheme), or the like.

In general, a 3D stereoscopic image may include a left image (e.g., a left eye image) and a right image (e.g., a right eye image). According to how left and right images are combined into a 3D stereoscopic image, a 3D stereoscopic imaging method can be divided into a top-down method in which left and right images are located up and down in a frame, an L-to-R (left-to-right or side by side) method in which left and right images are located left and right in a frame, a checker board method in which fragments of left and right images are located in a tile form, an interlaced method in which left and right images are alternately located by columns or rows, and a time sequential (or frame by frame) method in which left and right images are alternately displayed on a time basis.

Also, as for a 3D thumbnail image, a left image thumbnail and a right image thumbnail can be generated from a left image and a right image of an original image frame, respectively, and then combined to generate a single 3D thumbnail image. In general, the term "thumbnail" may be used to refer to a reduced image or a reduced still image. A generated left image thumbnail and right image thumbnail may be displayed with a horizontal distance difference there between by a depth corresponding to the disparity between the left image and the right image on the screen, thereby providing a stereoscopic space sense.

A left image and a right image required for implementing a 3D stereoscopic image may be displayed on the stereoscopic display unit using a stereoscopic processing unit. The stereoscopic processing unit can receive the 3D image and extract the left image and the right image, or can receive the 2D image and change it into a left image and a right image.

The audio output module 152 is generally configured to output audio data. Such audio data may be obtained from any of a number of different sources, such that the audio data may be received from the wireless communication unit 110 or may have been stored in the memory 170. The audio data may be output during modes such as a signal reception mode, a call mode, a record mode, a voice recognition mode, a broadcast reception mode, and the like. The audio output module 152 can provide audible output related to a particular function (e.g., a call signal reception sound, a message reception sound, etc.) performed by the mobile terminal 100. The audio output module 152 may also be implemented as a receiver, a speaker, a buzzer, or the like.

A haptic module 153 can be configured to generate various tactile effects that a user feels, perceive, or otherwise experience. A typical example of a tactile effect generated by the haptic module 153 is vibration. The strength, pattern and the like of the vibration generated by the haptic module 153 can be controlled by user selection or setting by the controller. For example, the haptic module 153 may output different vibrations in a combining manner or a sequential manner.

Besides vibration, the haptic module 153 can generate various other tactile effects, including an effect by stimulation such as a pin arrangement vertically moving to contact skin, a spray force or suction force of air through a jet orifice or a suction opening, a touch to the skin, a contact of an electrode, electrostatic force, an effect by reproducing the sense of cold and warmth using an element that can absorb or generate heat, and the like.

The haptic module 153 can also be implemented to allow the user to feel a tactile effect through a muscle sensation such as the user's fingers or arm, as well as transferring the tactile effect through direct contact. Two or more haptic modules 153 may be provided according to the particular configuration of the mobile terminal 100.

An optical output module 154 can output a signal for indicating an event generation using light of a light source. Examples of events generated in the mobile terminal 100 may include message reception, call signal reception, a missed call, an alarm, a schedule notice, an email reception, information reception through an application, and the like.

A signal output by the optical output module 154 may be implemented so the mobile terminal emits monochromatic light or light with a plurality of colors. The signal output may be terminated as the mobile terminal senses that a user has checked the generated event, for example.

The interface unit 160 serves as an interface for external devices to be connected with the mobile terminal 100. For example, the interface unit 160 can receive data transmitted from an external device, receive power to transfer to elements and components within the mobile terminal 100, or transmit internal data of the mobile terminal 100 to such external device. The interface unit 160 may include wired or wireless headset ports, external power supply ports, wired or wireless data ports, memory card ports, ports for connecting a device having an identification module, audio input/output (I/O) ports, video I/O ports, earphone ports, or the like.

The identification module may be a chip that stores various information for authenticating authority of using the mobile terminal 100 and may include a user identity module (UIM), a subscriber identity module (SIM), a universal subscriber identity module (USIM), and the like. In addition, the device having the identification module (also referred to herein as an "identifying device") may take the form of a smart card. Accordingly, the identifying device can be connected with the terminal 100 via the interface unit 160.

When the mobile terminal 100 is connected with an external cradle, the interface unit 160 can serve as a passage to allow power from the cradle to be supplied to the mobile terminal 100 or may serve as a passage to allow various command signals input by the user from the cradle to be transferred to the mobile terminal there through. Various command signals or power input from the cradle may operate as signals for recognizing that the mobile terminal is properly mounted on the cradle.

The memory 170 can store programs to support operations of the controller 180 and store input/output data (for example, phonebook, messages, still images, videos, etc.). The memory 170 may store data related to various patterns of vibrations and audio which are output in response to touch inputs on the touch screen.

The memory 170 may include one or more types of storage mediums including a Flash memory, a hard disk, a solid state disk, a silicon disk, a multimedia card micro type, a card-type memory (e.g., SD or DX memory, etc.), a Random Access Memory (RAM), a Static Random Access Memory (SRAM), a Read-Only Memory (ROM), an Electrically Erasable Programmable Read-Only Memory (EEPROM), a Programmable Read-Only memory (PROM), a magnetic memory, a magnetic disk, an optical disk, and the like. The mobile terminal 100 may also be operated in relation to a network storage device that performs the storage function of the memory 170 over a network, such as the Internet.

The controller 180 can typically control the general operations of the mobile terminal 100. For example, the controller 180 can set or release a lock state for restricting a user from inputting a control command with respect to applications when a status of the mobile terminal meets a preset condition.

The controller 180 can also perform the controlling and processing associated with voice calls, data communications, video calls, and the like, or perform pattern recognition processing to recognize a handwriting input or a picture drawing input performed on the touch screen as characters or images, respectively. In addition, the controller 180 can control one or a combination of those components in order to implement various exemplary embodiments disclosed herein.

The power supply unit 190 receives external power or provide internal power and supply the appropriate power required for operating respective elements and components included in the mobile terminal 100. The power supply unit 190 may include a battery, which is typically rechargeable or be detachably coupled to the terminal body for charging.

The power supply unit 190 may include a connection port. The connection port may be configured as one example of the interface unit 160 to which an external charger for supplying power to recharge the battery is electrically connected. As another example, the power supply unit 190 may be configured to recharge the battery in a wireless manner without use of the connection port. In this example, the power supply unit 190 can receive power, transferred from an external wireless power transmitter, using at least one of an inductive coupling method which is based on magnetic induction or a magnetic resonance coupling method which is based on electromagnetic resonance. Various embodiments described herein may be implemented in a computer-readable medium, a machine-readable medium, or similar medium using, for example, software, hardware, or any combination thereof.

Referring now to FIGS. 1B and 1C, the mobile terminal 100 is described with reference to a bar-type terminal body. However, the mobile terminal 100 may alternatively be implemented in any of a variety of different configurations. Examples of such configurations include watch-type, clip-type, glasses-type, or as a folder-type, flip-type, slide-type, swing-type, and swivel-type in which two and more bodies are combined with each other in a relatively movable manner, and combinations thereof. Discussion herein will often relate to a particular type of mobile terminal (for example, bar-type, watch-type, glasses-type, and the like). However, such teachings with regard to a particular type of mobile terminal will generally apply to other types of mobile terminals as well.

The mobile terminal 100 will generally include a case (for example, frame, housing, cover, and the like) forming the appearance of the terminal. In this embodiment, the case is formed using a front case 101 and a rear case 102. Various electronic components are incorporated into a space formed between the front case 101 and the rear case 102. At least one middle case may be additionally positioned between the front case 101 and the rear case 102.

The display unit 151 is shown located on the front side of the terminal body to output information. As illustrated, a window 151a of the display unit 151 may be mounted to the front case 101 to form the front surface of the terminal body together with the front case 101.

In some embodiments, electronic components may also be mounted to the rear case 102. Examples of such electronic components include a detachable battery 191, an identification module, a memory card, and the like. Rear cover 103 is shown covering the electronic components, and this cover may be detachably coupled to the rear case 102. Therefore, when the rear cover 103 is detached from the rear case 102, the electronic components mounted to the rear case 102 are externally exposed.

As illustrated, when the rear cover 103 is coupled to the rear case 102, a side surface of the rear case 102 is partially exposed. In some cases, upon the coupling, the rear case 102 may also be completely shielded by the rear cover 103. In some embodiments, the rear cover 103 may include an opening for externally exposing a camera 121b or an audio output module 152b.

The cases 101, 102, 103 may be formed by injection-molding synthetic resin or may be formed of a metal, for example, stainless steel (STS), aluminum (Al), titanium (Ti), or the like. As an alternative to the example in which the plurality of cases form an inner space for accommodating components, the mobile terminal 100 may be configured such that one case forms the inner space. In this example, a mobile terminal 100 having a uni-body is formed so synthetic resin or metal extends from a side surface to a rear surface.

If desired, the mobile terminal 100 may include a waterproofing unit for preventing introduction of water into the terminal body. For example, the waterproofing unit may include a waterproofing member which is located between the window 151a and the front case 101, between the front case 101 and the rear case 102, or between the rear case 102 and the rear cover 103, to hermetically seal an inner space when those cases are coupled.

FIGS. 1B and 1C depict certain components as arranged on the mobile terminal. However, alternative arrangements are possible and within the teachings of the instant disclosure. Some components may be omitted or rearranged. For example, the first manipulation unit 123a may be located on another surface of the terminal body, and the second audio output module 152b may be located on the side surface of the terminal body.

The display unit 151 outputs information processed in the mobile terminal 100. The display unit 151 may be implemented using one or more suitable display devices. Examples of such suitable display devices include a liquid crystal display (LCD), a thin film transistor-liquid crystal display (TFT-LCD), an organic light emitting diode (OLED), a flexible display, a 3-dimensional (3D) display, an e-ink display, and combinations thereof.

The display unit 151 may be implemented using two display devices, which can implement the same or different display technology. For instance, a plurality of the display units 151 may be arranged on one side, either spaced apart from each other, or these devices may be integrated, or these devices may be arranged on different surfaces.

The display unit 151 may also include a touch sensor which senses a touch input received at the display unit. When a touch is input to the display unit 151, the touch sensor may be configured to sense this touch and the controller 180, for example, may generate a control command or other signal corresponding to the touch. The content which is input in the touching manner may be a text or numerical value, or a menu item which can be indicated or designated in various modes.

The touch sensor may be configured in a form of a film having a touch pattern, disposed between the window 151a and a display on a rear surface of the window 151a, or a metal wire which is patterned directly on the rear surface of the window 151a. Alternatively, the touch sensor may be integrally formed with the display. For example, the touch sensor may be disposed on a substrate of the display or within the display.

The display unit 151 may also form a touch screen together with the touch sensor. Here, the touch screen may serve as the user input unit 123 (see FIG. 1A). Therefore, the touch screen may replace at least some of the functions of the first manipulation unit 123a.

The first audio output module 152a may be implemented in the form of a speaker to output voice audio, alarm sounds, multimedia audio reproduction, and the like. The window 151a of the display unit 151 will typically include an aperture to permit audio generated by the first audio output module 152a to pass. One alternative is to allow audio to be released along an assembly gap between the structural bodies (for example, a gap between the window 151a and the front case 101). In this instance, a hole independently formed to output audio sounds may not be seen or is otherwise hidden in terms of appearance, thereby further simplifying the appearance and manufacturing of the mobile terminal 100.

The optical output module 154 can be configured to output light for indicating an event generation. Examples of such events include a message reception, a call signal reception, a missed call, an alarm, a schedule notice, an email reception, information reception through an application, and the like. When a user has checked a generated event, the controller can control the optical output unit 154 to stop the light output.

The first camera 121a can process image frames such as still or moving images obtained by the image sensor in a capture mode or a video call mode. The processed image frames can then be displayed on the display unit 151 or stored in the memory 170.

The first and second manipulation units 123a and 123b are examples of the user input unit 123, which may be manipulated by a user to provide input to the mobile terminal 100. The first and second manipulation units 123a and 123b may also be commonly referred to as a manipulating portion, and may employ any tactile method that allows the user to perform manipulation such as touch, push, scroll, or the like. The first and second manipulation units 123a and 123b may also employ any non-tactile method that allows the user to perform manipulation such as proximity touch, hovering, or the like.

FIG. 1B illustrates the first manipulation unit 123a as a touch key, but possible alternatives include a mechanical key, a push key, a touch key, and combinations thereof. Input received at the first and second manipulation units 123a and 123b may be used in various ways. For example, the first manipulation unit 123a may be used by the user to provide an input to a menu, home key, cancel, search, or the like, and the second manipulation unit 123b may be used by the user to provide an input to control a volume level being output from the first or second audio output modules 152a or 152b, to switch to a touch recognition mode of the display unit 151, or the like.

As another example of the user input unit 123, a rear input unit may be located on the rear surface of the terminal body. The rear input unit can be manipulated by a user to provide input to the mobile terminal 100. The input may be used in a variety of different ways. For example, the rear input unit may be used by the user to provide an input for power on/off, start, end, scroll, control volume level being output from the first or second audio output modules 152a or 152b, switch to a touch recognition mode of the display unit 151, and the like. The rear input unit may be configured to permit touch input, a push input, or combinations thereof.

The rear input unit may be located to overlap the display unit 151 of the front side in a thickness direction of the terminal body. As one example, the rear input unit may be located on an upper end portion of the rear side of the terminal body such that a user can easily manipulate it using a forefinger when the user grabs the terminal body with one hand. Alternatively, the rear input unit can be positioned at most any location of the rear side of the terminal body.

Embodiments that include the rear input unit may implement some or all of the functionality of the first manipulation unit 123a in the rear input unit. As such, in situations where the first manipulation unit 123a is omitted from the front side, the display unit 151 can have a larger screen.

As a further alternative, the mobile terminal 100 may include a finger scan sensor which scans a user's fingerprint. The controller 180 can then use fingerprint information sensed by the finger scan sensor as part of an authentication procedure. The finger scan sensor may also be installed in the display unit 151 or implemented in the user input unit 123.

The microphone 122 is shown located at an end of the mobile terminal 100, but other locations are possible. If desired, multiple microphones may be implemented, with such an arrangement permitting the receiving of stereo sounds.

The interface unit 160 may serve as a path allowing the mobile terminal 100 to interface with external devices. For example, the interface unit 160 may include one or more of a connection terminal for connecting to another device (for example, an earphone, an external speaker, or the like), a port for near field communication (for example, an Infrared Data Association (IrDA) port, a Bluetooth port, a wireless LAN port, and the like), or a power supply terminal for supplying power to the mobile terminal 100. The interface unit 160 may be implemented in the form of a socket for accommodating an external card, such as Subscriber Identification Module (SIM), User Identity Module (UIM), or a memory card for information storage.

The second camera 121b is shown located at the rear side of the terminal body and includes an image capturing direction that is substantially opposite to the image capturing direction of the first camera unit 121a. If desired, second camera 121a may alternatively be located at other locations, or made to be moveable, in order to have a different image capturing direction from that which is shown.

The second camera 121b can include a plurality of lenses arranged along at least one line. The plurality of lenses may also be arranged in a matrix configuration. The cameras may be referred to as an "array camera." When the second camera 121b is implemented as an array camera, images may be captured in various manners using the plurality of lenses and images with better qualities.

As shown in FIG. 1C, a flash 124 is shown adjacent to the second camera 121b. When an image of a subject is captured with the camera 121b, the flash 124 may illuminate the subject. As shown in FIG. 1C, the second audio output module 152b can be located on the terminal body. The second audio output module 152b may implement stereophonic sound functions in conjunction with the first audio output module 152a, and may be also used for implementing a speaker phone mode for call communication.

At least one antenna for wireless communication may be located on the terminal body. The antenna may be installed in the terminal body or formed by the case. For example, an antenna which configures a part of the broadcast receiving module 111 may be retractable into the terminal body. Alternatively, an antenna may be formed using a film attached to an inner surface of the rear cover 103, or a case that includes a conductive material.

A power supply unit 190 for supplying power to the mobile terminal 100 may include a battery 191, which is mounted in the terminal body or detachably coupled to an outside of the terminal body. The battery 191 may receive power via a power source cable connected to the interface unit 160. Also, the battery 191 can be recharged in a wireless manner using a wireless charger. Wireless charging may be implemented by magnetic induction or electromagnetic resonance.

The rear cover 103 is shown coupled to the rear case 102 for shielding the battery 191, to prevent separation of the battery 191, and to protect the battery 191 from an external impact or from foreign material. When the battery 191 is detachable from the terminal body, the rear case 103 may be detachably coupled to the rear case 102.

A circuit board can be installed in the cases 101 and 102 and is the component on which various electronic parts, and more particularly, various processors configuring the controller 180 are mounted together with other circuits and devices configured to assist the electronic parts. The controller 180 can consist of a microprocessor. The microprocessor is the assembly of circuits configured to control the mobile terminal and may consist of a multitude of sub-circuit assemblies (i.e., modules) which are distinguished from each other structurally and functionally in accordance with controlled operations.

The respective components 110 to 190 shown in FIG. 1A may be electrically connected to the circuit board to be controlled by the controller 180 by being mounted on the circuit board directly or installed on/in the cases 101 and 102. Hence, the controller 180 mounted on the circuit board are electrically connected to the components all and can control the electrically connected components. For such a reason, the controller 180 can be called one of various names such as a control unit, a controlling device and the like and can control all the components of the mobile terminal 100.

These controllable components may include other components mentioned in the following description as well as the former components shown in FIGs. 1A to 1C. Therefore, the controller 180 controls operations of other components, thereby becoming an actual component capable of appropriately performing the controlling method according to the preset application mentioned in the following description. For such reasons as mentioned, all the detailed steps included in the controlling method can become the features of the controller 180.

An accessory for protecting an appearance or assisting or extending the functions of the mobile terminal 100 can also be provided on the mobile terminal 100. As one example of an accessory, a cover or pouch for covering or accommodating at least one surface of the mobile terminal 100 may be provided. The cover or pouch may cooperate with the display unit 151 to extend the function of the mobile terminal 100. Another example of the accessory is a touch pen for assisting or extending a touch input to a touch screen.

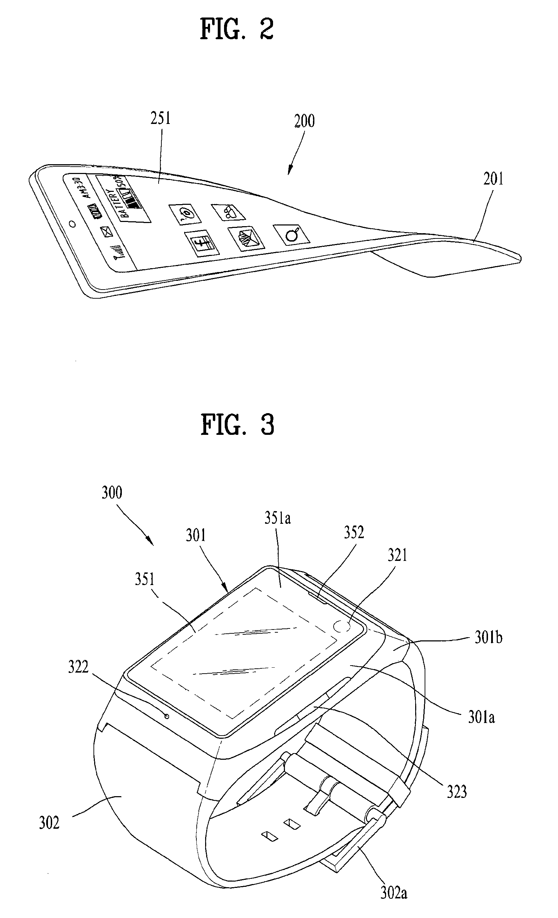

FIG. 2 is a conceptual view of a deformable mobile terminal according to an alternative embodiment of the present invention. In this figure, mobile terminal 200 is shown having display unit 251, which is a type of display that is deformable by an external force. This deformation, which includes display unit 251 and other components of mobile terminal 200, may include any of curving, bending, folding, twisting, rolling, and combinations thereof. The deformable display unit 251 may also be referred to as a "flexible display unit." In some implementations, the flexible display unit 251 may include a general flexible display, electronic paper (also known as e-paper), and combinations thereof. In general, mobile terminal 200 may be configured to include features that are the same or similar to that of mobile terminal 100 of FIGS. 1A-1C .

The flexible display of mobile terminal 200 is generally formed as a lightweight, non-fragile display, which still exhibits characteristics of a conventional flat panel display, but is instead fabricated on a flexible substrate which can be deformed as noted previously. The term e-paper may be used to refer to a display technology employing the characteristic of a general ink, and is different from the conventional flat panel display in view of using reflected light. E-paper is generally understood as changing displayed information using a twist ball or via electrophoresis using a capsule.

When the flexible display unit 251 is not deformed (for example, in a state with an infinite radius of curvature and referred to as a first state), a display region of the flexible display unit 251 includes a generally flat surface. When the flexible display unit 251 is deformed from the first state by an external force (for example, a state with a finite radius of curvature and referred to as a second state), the display region may become a curved surface or a bent surface. As illustrated, information displayed in the second state may be visual information output on the curved surface. The visual information may be realized so a light emission of each unit pixel (sub-pixel) arranged in a matrix configuration is controlled independently. The unit pixel denotes an elementary unit for representing one color.

According to one alternative embodiment, the first state of the flexible display unit 251 may be a curved state (for example, a state of being curved from up to down or from right to left), instead of being in flat state. In this embodiment, when an external force is applied to the flexible display unit 251, the flexible display unit 251 may transition to the second state such that the flexible display unit is deformed into the flat state(or a less curved state) or into a more curved state.

If desired, the flexible display unit 251 may implement a flexible touch screen using a touch sensor in combination with the display. When a touch is received at the flexible touch screen, the controller 180 can execute certain control corresponding to the touch input. In general, the flexible touch screen is configured to sense touch and other input while in both the first and second states.

One option is to configure the mobile terminal 200 to include a deformation sensor which senses the deforming of the flexible display unit 251. The deformation sensor may be included in the sensing unit 140.

The deformation sensor may be located in the flexible display unit 251 or the case 201 to sense information related to the deforming of the flexible display unit 251. Examples of such information related to the deforming of the flexible display unit 251 may be a deformed direction, a deformed degree, a deformed position, a deformed amount of time, an acceleration that the deformed flexible display unit 251 is restored, and the like. Other possibilities include most any type of information which can be sensed in response to the curving of the flexible display unit or sensed while the flexible display unit 251 is transitioning into, or existing in, the first and second states.

In some embodiments, controller 180 or other component can change information displayed on the flexible display unit 251, or generate a control signal for controlling a function of the mobile terminal 200, based on the information related to the deforming of the flexible display unit 251. Such information is typically sensed by the deformation sensor.

The mobile terminal 200 is shown having a case 201 for accommodating the flexible display unit 251. The case 201 can be deformable together with the flexible display unit 251, taking into account the characteristics of the flexible display unit 251.

A battery located in the mobile terminal 200 may also be deformable in cooperation with the flexible display unit 261, taking into account the characteristic of the flexible display unit 251. One technique to implement such a battery is to use a stack and folding method of stacking battery cells.

The deformation of the flexible display unit 251 not limited to perform by an external force. For example, the flexible display unit 251 can be deformed into the second state from the first state by a user command, application command, or the like.

In accordance with still further embodiments, a mobile terminal may be configured as a device which is wearable on a human body. Such devices go beyond the usual technique of a user grasping the mobile terminal using their hand. Examples of the wearable device include a smart watch, a smart glass, a head mounted display (HMD), and the like.

A typical wearable device can exchange data with (or cooperate with) another mobile terminal 100. In such a device, the wearable device generally has functionality that is less than the cooperating mobile terminal. For instance, the short-range communication module 114 of a mobile terminal 100 may sense or recognize a wearable device that is near-enough to communicate with the mobile terminal. In addition, when the sensed wearable device is a device which is authenticated to communicate with the mobile terminal 100, the controller 180 can transmit data processed in the mobile terminal 100 to the wearable device via the short-range communication module 114, for example. Hence, a user of the wearable device can use the data processed in the mobile terminal 100 on the wearable device. For example, when a call is received in the mobile terminal 100, the user can answer the call using the wearable device. Also, when a message is received in the mobile terminal 100, the user can check the received message using the wearable device.

FIG. 3 is a perspective view illustrating one example of a watch-type mobile terminal 300 in accordance with another exemplary embodiment. As illustrated in FIG. 3, the watch-type mobile terminal 300 includes a main body 301 with a display unit 351 and a band 302 connected to the main body 301 to be wearable on a wrist. In general, mobile terminal 300 may be configured to include features that are the same or similar to that of mobile terminal 100 of FIGS. 1A-1C .

The main body 301 may include a case having a certain appearance. As illustrated, the case may include a first case 301a and a second case 301b cooperatively defining an inner space for accommodating various electronic components. Other configurations are possible. For instance, a single case may alternatively be implemented, with such a case being configured to define the inner space, thereby implementing a mobile terminal 300 with a uni-body.

The watch-type mobile terminal 300 can perform wireless communication, and an antenna for the wireless communication can be installed in the main body 301. The antenna may extend its function using the case. For example, a case including a conductive material may be electrically connected to the antenna to extend a ground area or a radiation area.

The display unit 351 is shown located at the front side of the main body 301 so that displayed information is viewable to a user. In some embodiments, the display unit 351 includes a touch sensor so that the display unit can function as a touch screen. As illustrated, window 351a is positioned on the first case 301a to form a front surface of the terminal body together with the first case 301a.

The illustrated embodiment includes audio output module 352, a camera 321, a microphone 322, and a user input unit 323 positioned on the main body 301. When the display unit 351 is implemented as a touch screen, additional function keys may be minimized or eliminated. For example, when the touch screen is implemented, the user input unit 323 may be omitted.

The band 302 is commonly worn on the user's wrist and may be made of a flexible material for facilitating wearing of the device. As one example, the band 302 may be made of fur, rubber, silicon, synthetic resin, or the like. The band 302 may also be configured to be detachable from the main body 301. Accordingly, the band 302 may be replaceable with various types of bands according to a user's preference.

In one configuration, the band 302 may be used for extending the performance of the antenna. For example, the band may include therein a ground extending portion electrically connected to the antenna to extend a ground area. The band 302 may include fastener 302a. The fastener 302a may be implemented into a buckle type, a snap-fit hook structure, a Velcro® type, or the like, and include a flexible section or material. The drawing illustrates an example that the fastener 302a is implemented using a buckle.

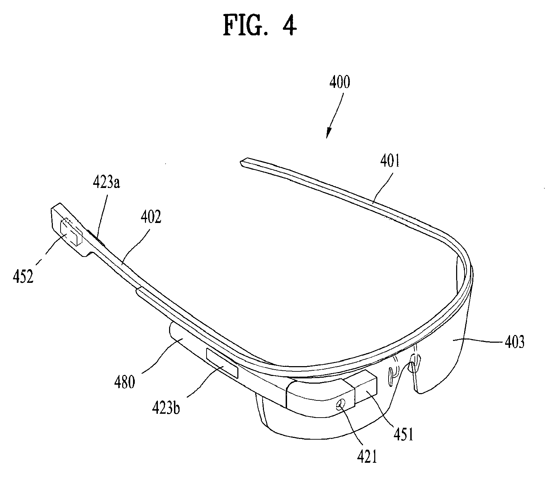

FIG. 4 is a perspective view illustrating one example of a glass-type mobile terminal 400 according to another exemplary embodiment. The glass-type mobile terminal 400 can be wearable on a head of a human body and provided with a frame (case, housing, etc.) therefor. The frame may be made of a flexible material to be easily worn. The frame of mobile terminal 400 is shown having a first frame 401 and a second frame 402, which can be made of the same or different materials. In general, mobile terminal 400 may be configured to include features that are the same or similar to that of mobile terminal 100 of FIGS. 1A-1C.

The frame may be supported on the head and defines a space for mounting various components. As illustrated, electronic components, such as a control module 480, an audio output module 452, and the like, may be mounted to the frame part. Also, a lens 403 for covering either or both of the left and right eyes may be detachably coupled to the frame part.

The control module 480 controls various electronic components disposed in the mobile terminal 400. The control module 480 may be understood as a component corresponding to the aforementioned controller 180. FIG. 4 illustrates that the control module 480 is installed in the frame part on one side of the head, but other locations are possible.

The display unit 451 may be implemented as a head mounted display (HMD). The HMD refers to display techniques by which a display is mounted to a head to show an image directly in front of a user's eyes. In order to provide an image directly in front of the user's eyes when the user wears the glass-type mobile terminal 400, the display unit 451 may be located to correspond to either or both of the left and right eyes. FIG. 4 illustrates that the display unit 451 is located on a portion corresponding to the right eye to output an image viewable by the user's right eye.

The display unit 451 may project an image into the user's eye using a prism. Also, the prism may be formed from optically transparent material such that the user can view both the projected image and a general visual field (a range that the user views through the eyes) in front of the user.

In such a manner, the image output through the display unit 451 may be viewed while overlapping with the general visual field. The mobile terminal 400 may provide an augmented reality (AR) by overlaying a virtual image on a realistic image or background using the display.

The camera 421 may be located adjacent to either or both of the left and right eyes to capture an image. Since the camera 421 is located adjacent to the eye, the camera 421 can acquire a scene that the user is currently viewing. The camera 421 may be positioned at most any location of the mobile terminal. In some embodiments, multiple cameras 421 may be utilized. Such multiple cameras 421 may be used to acquire a stereoscopic image.

The glass-type mobile terminal 400 may include user input units 423a and 423b, which can each be manipulated by the user to provide an input. The user input units 423a and 423b may employ techniques which permit input via a tactile input. Typical tactile inputs include a touch, push, or the like. The user input units 423a and 423b are shown operable in a pushing manner and a touching manner as they are located on the frame part and the control module 480, respectively.

If desired, mobile terminal 400 may include a microphone which processes input sound into electric audio data, and an audio output module 452 for outputting audio. The audio output module 452 may be configured to produce audio in a general audio output manner or an osteoconductive manner. When the audio output module 452 is implemented in the osteoconductive manner, the audio output module 452 may be closely adhered to the head when the user wears the mobile terminal 400 and vibrate the user's skull to transfer sounds.

A communication system which is operable with the variously described mobile terminals will now be described in more detail. Such a communication system may be configured to utilize any of a variety of different air interfaces and/or physical layers. Examples of such air interfaces utilized by the communication system include Frequency Division Multiple Access (FDMA), Time Division Multiple Access (TDMA), Code Division Multiple Access (CDMA), Universal Mobile Telecommunications System (UMTS) (including, Long Term Evolution (LTE), LTE-A (Long Term Evolution-Advanced)), Global System for Mobile Communications (GSM), and the like.

By way of a non-limiting example only, further description will relate to a CDMA communication system, but such teachings apply equally to other system types including a CDMA wireless communication system as well as OFDM(Orthogonal Frequency Division Multiplexing) wireless communication system. A CDMA wireless communication system generally includes one or more mobile terminals (MT or User Equipment, UE) 100, one or more base stations (BSs, NodeB, or evolved NodeB), one or more base station controllers (BSCs), and a mobile switching center (MSC). The MSC is configured to interface with a conventional Public Switched Telephone Network (PSTN) and the BSCs. The BSCs are coupled to the base stations via backhaul lines. The backhaul lines may be configured in accordance with any of several known interfaces including, for example, E1/T1, ATM, IP, PPP, Frame Relay, HDSL, ADSL, or xDSL. Hence, the plurality of BSCs can be included in the CDMA wireless communication system.

Each base station may include one or more sectors, each sector having an omni-directional antenna or an antenna pointed in a particular direction radially away from the base station. Alternatively, each sector may include two or more different antennas. Each base station may be configured to support a plurality of frequency assignments, with each frequency assignment having a particular spectrum (e.g., 1.25 MHz, 5 MHz, etc.).

The intersection of sector and frequency assignment may be referred to as a CDMA channel. The base stations may also be referred to as Base Station Transceiver Subsystems (BTSs). In some cases, the term "base station" may be used to refer collectively to a BSC, and one or more base stations. The base stations may also be denoted as "cell sites." Alternatively, individual sectors of a given base station may be referred to as cell sites.

A broadcasting transmitter (BT) transmits a broadcast signal to the mobile terminals 100 operating within the system. The broadcast receiving module 111 of FIG. 1A is typically configured inside the mobile terminal 100 to receive broadcast signals transmitted by the BT.

Global Positioning System (GPS) satellites for locating the position of the mobile terminal 100, for example, may cooperate with the CDMA wireless communication system. Useful position information may be obtained with greater or fewer satellites than two satellites. It is to be appreciated that other types of position detection technology, (i.e., location technology that may be used in addition to or instead of GPS location technology) may alternatively be implemented. If desired, at least one of the GPS satellites may alternatively or additionally be configured to provide satellite DMB transmissions.

The location information module 115 is generally configured to detect, calculate, or otherwise identify a position of the mobile terminal. As an example, the location information module 115 may include a Global Position System (GPS) module, a Wi-Fi module, or both. If desired, the location information module 115 may alternatively or additionally function with any of the other modules of the wireless communication unit 110 to obtain data related to the position of the mobile terminal.

A typical GPS module 115 can measure an accurate time and distance from three or more satellites, and accurately calculate a current location of the mobile terminal according to trigonometry based on the measured time and distances. A method of acquiring distance and time information from three satellites and performing error correction with a single satellite may be used. In particular, the GPS module may acquire an accurate time together with three-dimensional speed information as well as the location of the latitude, longitude and altitude values from the location information received from the satellites.

Furthermore, the GPS module can acquire speed information in real time to calculate a current position. Sometimes, accuracy of a measured position may be compromised when the mobile terminal is located in a blind spot of satellite signals, such as being located in an indoor space. In order to minimize the effect of such blind spots, an alternative or supplemental location technique, such as Wi-Fi Positioning System (WPS), may be utilized.

The Wi-Fi positioning system (WPS) refers to a location determination technology based on a wireless local area network (WLAN) using Wi-Fi as a technology for tracking the location of the mobile terminal 100. This technology typically includes the use of a Wi-Fi module in the mobile terminal 100 and a wireless access point for communicating with the Wi-Fi module. The Wi-Fi positioning system may include a Wi-Fi location determination server, a mobile terminal, a wireless access point (AP) connected to the mobile terminal, and a database stored with wireless AP information.

The mobile terminal connected to the wireless AP may transmit a location information request message to the Wi-Fi location determination server. The Wi-Fi location determination server extracts the information of the wireless AP connected to the mobile terminal 100, based on the location information request message (or signal) of the mobile terminal 100. The information of the wireless AP may be transmitted to the Wi-Fi location determination server through the mobile terminal 100, or may be transmitted to the Wi-Fi location determination server from the wireless AP.

The information of the wireless AP extracted based on the location information request message of the mobile terminal 100 may include one or more of media access control (MAC) address, service set identification (SSID), received signal strength indicator (RSSI), reference signal received Power(RSRP), reference signal received quality(RSRQ), channel information, privacy, network type, signal strength, noise strength, and the like.

The Wi-Fi location determination server may receive the information of the wireless AP connected to the mobile terminal 100 as described above, and may extract wireless AP information corresponding to the wireless AP connected to the mobile terminal from the pre-established database. The information of any wireless APs stored in the database may be information such as MAC address, SSID, RSSI, channel information, privacy, network type, latitude and longitude coordinate, building at which the wireless AP is located, floor number, detailed indoor location information (GPS coordinate available), AP owner's address, phone number, and the like. In order to remove wireless APs provided using a mobile AP or an illegal MAC address during a location determining process, the Wi-Fi location determination server may extract only a predetermined number of wireless AP information in order of high RSSI.

Then, the Wi-Fi location determination server may extract (analyze) location information of the mobile terminal 100 using at least one wireless AP information extracted from the database. A method for extracting (analyzing) location information of the mobile terminal 100 may include a Cell-ID method, a fingerprint method, a trigonometry method, a landmark method, and the like.

The Cell-ID method is used to determine a position of a wireless AP having the largest signal strength, among peripheral wireless AP information collected by a mobile terminal, as a position of the mobile terminal. The Cell-ID method is an implementation that is minimally complex, does not require additional costs, and location information can be rapidly acquired. However, in the Cell-ID method, the precision of positioning may fall below a desired threshold when the installation density of wireless APs is low.

The fingerprint method is used to collect signal strength information by selecting a reference position from a service area, and to track a position of a mobile terminal using the signal strength information transmitted from the mobile terminal based on the collected information. In order to use the fingerprint method, it is common for the characteristics of radio signals to be pre-stored in the form of a database.

The trigonometry method is used to calculate a position of a mobile terminal based on a distance between coordinates of at least three wireless APs and the mobile terminal. In order to measure the distance between the mobile terminal and the wireless APs, signal strength may be converted into distance information, Time of Arrival (ToA), Time Difference of Arrival (TDoA), Angle of Arrival (AoA), or the like may be taken for transmitted wireless signals.

The landmark method is used to measure a position of a mobile terminal using a known landmark transmitter. In addition to these position location methods, various algorithms may be used to extract (analyze) location information of a mobile terminal. Such extracted location information may be transmitted to the mobile terminal 100 through the Wi-Fi location determination server, thereby acquiring location information of the mobile terminal 100.

The mobile terminal 100 can acquire location information by being connected to at least one wireless AP. The number of wireless APs required to acquire location information of the mobile terminal 100 may be variously changed according to a wireless communication environment within which the mobile terminal 100 is positioned.

As previously described with regard to FIG. 1A, the mobile terminal may be configured to include short-range communication techniques such as Bluetooth™, Radio Frequency Identification (RFID), Infrared Data Association (IrDA), Ultra Wideband (UWB), ZigBee, Near Field Communication (NFC), Wireless USB (Wireless Universal Serial Bus), and the like.

A typical NFC module provided at the mobile terminal supports short-range wireless communication, which is a non-contactable type of communication between mobile terminals and generally occurs within about 10 cm. The NFC module may operate in one of a card mode, a reader mode, or a P2P mode. The mobile terminal 100 may further include a security module for storing card information, in order to operate the NFC module in a card mode. The security module may be a physical medium such as Universal Integrated Circuit Card (UICC) (e.g., a Subscriber Identification Module (SIM) or Universal SIM (USIM)), a secure micro SD and a sticker, or a logical medium (e.g., embedded Secure Element (SE)) embedded in the mobile terminal. Single Wire Protocol (SWP)-based data exchange may be performed between the NFC module and the security module.

When the NFC module operates in a card mode, the mobile terminal may transmit card information on a general IC card to the outside. More specifically, if a mobile terminal having card information on a payment card (e. g, a credit card or a bus card) approaches a card reader, a short-range mobile payment may be executed. As another example, if a mobile terminal which stores card information on an entrance card approaches an entrance card reader, an entrance approval procedure may start. A card such as a credit card, a traffic card, or an entrance card may be included in the security module in the form of applet, and the security module may store card information on the card mounted therein. Card information for a payment card may include any of a card number, a remaining amount and usage history, and the like. Card information of an entrance card may include any of a user's name, a user's number (e.g., undergraduate number or staff number), an entrance history, and the like.

When the NFC module operates in a reader mode, the mobile terminal can read data from an external tag. The data received from the external tag by the mobile terminal may be coded into the NFC Data Exchange Format defined by the NFC Forum. The NFC Forum generally defines four record types. More specifically, the NFC Forum defines four Record Type Definitions (RTDs) such as smart poster, text, Uniform Resource Identifier (URI), and general control.

If the data received from the external tag is a smart poster type, the controller may execute a browser (e.g., Internet browser). If the data received from the external tag is a text type, the controller may execute a text viewer. If the data received from the external tag is a URI type, the controller may execute a browser or originate a call. If the data received from the external tag is a general control type, the controller may execute a proper operation according to control content.

In some cases in which the NFC module operates in a P2P(Peer-to-Peer) mode, the mobile terminal can execute P2P communication with another mobile terminal. In this instance, Logical Link Control Protocol (LLCP) may be applied to the P2P communication. For P2P communication, connection may be generated between the mobile terminal and another mobile terminal. This connection may be categorized as a connectionless mode which ends after one packet is switched, and a connection-oriented mode in which packets are switched consecutively. For a typical P2P communication, data such as an electronic type name card, address information, a digital photo and a URL, a setup parameter for Bluetooth connection, Wi-Fi connection, etc. may be switched. The P2P mode can be effectively utilized in switching data of a small capacity, because an available distance for NFC communication is relatively short.

Further preferred embodiments will be described in more detail with reference to additional drawing figures. It is understood by those skilled in the art that the present features can be embodied in several forms without departing from the characteristics thereof. Moreover, although embodiments of the present invention are described on the assumption that a mobile terminal includes the mobile terminal 100 shown in FIGs. 1A to 1C, the mobile terminal mentioned in the description of the embodiments of the present invention may include one of the mobile terminal 200 shown in FIG. 2, the mobile terminal 300 shown in FIG. 3, the mobile terminal 400 shown in FIG. 4 and the like.

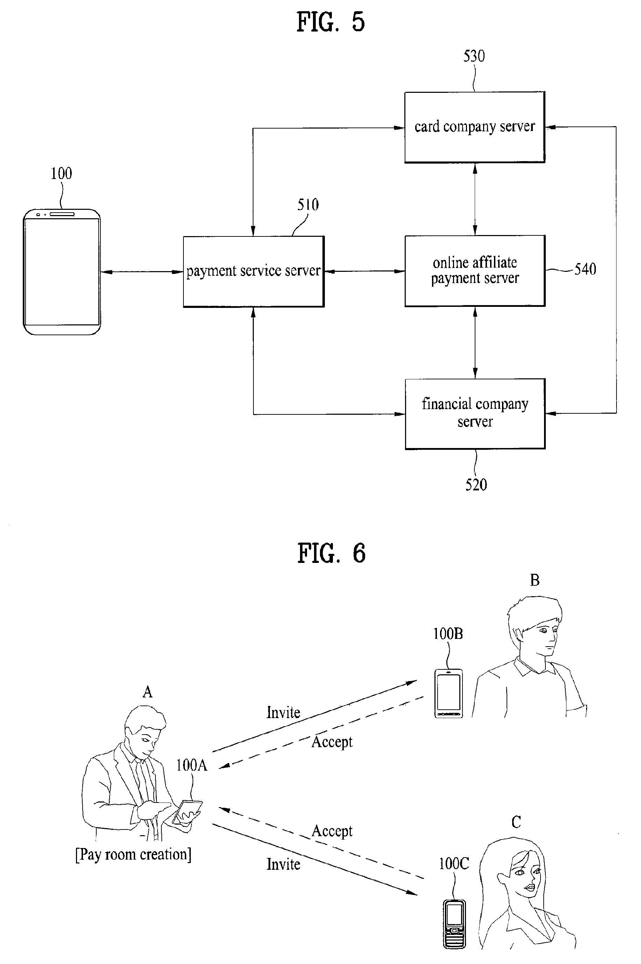

Examples of a method of administering and using a common fund using a mobile terminal according to one embodiment of the present invention are described in detail with reference to FIGs. 5 to 25 as follows. In particular, FIG. 5 is a diagram illustrating one example of a method of using a mobile terminal as a payment mechanism according to one embodiment of the present invention.

Referring to FIG. 5, a specific application for using a mobile terminal 100 as a payment mechanism is installed on the mobile terminal 100 according to one embodiment of the present invention. Using the mobile terminal 100 as the payment mechanism may mean that a user of the mobile terminal 100 registers a user's account at the specific application and then makes a payment of a prescribed amount within a balance of the registered account or transfers a money to a third party or that a user of the mobile terminal 100 registers a user's card (e.g., a credit card, a debit card, a check card, etc.) at the specific application and then makes a payment of a prescribed amount using the registered card. Such a payment using the mobile terminal 100 may be performed off-line or on-line.

The specific application may include an application embedded in the mobile terminal 100, an application installed on the mobile terminal 100 on upgrading an operating system or firmware of the mobile terminal 100, an application installed by being downloaded from an external server by a user of the mobile terminal 100, or the like. For instance, the specific application may include a payment application specialized for a mobile payment or a messenger application when the corresponding messenger application (or a social service application) supports a mobile payment service (or a common fund administration service).

The specific application may be run in association with a payment service server 510. In particular, the specific application may be managed by a manager of the payment service server 510. In accordance with a property of the specific application, the payment service server 510 may include a server operated by a manufacturer of the mobile terminal 100, a server operated by a communication service provider, a server operated by a prescribed company operating a mobile payment service, a server operated by a manager of a prescribed application supportive of a mobile payment service, or the like.

A user of the mobile terminal 100 may register final information at the specific application. In this instance, the financial information may be used in a sense of generally meaning an information of a specific account, an information of a specific card and the like. The mobile terminal 100 can exchange data with the payment service server 510 through the wireless communication unit 110. In this instance, the wireless communication unit 110 may include at least one of the mobile communication module 112, the wireless internet module 113, the short range communication unit 114 and the like. If the specific application is launched in the mobile terminal 100, the payment service server 510 can provide the mobile terminal 100 with an interface capable of inputting the financial information.

The controller 180 of the mobile terminal 100 outputs a running screen of the specific application to the display unit 151 and can receive a financial information input through the running screen by the user. For instance, the financial information may include at least one of a bank information of a bank having a specific account opened thereat, an account holder information of a specific account, an account number information of a specific account, a security information for transactions using a specific account, a card company information of a card having issued a specific card, a type information of a specific card, a card number information of a specific card, a valid period information of a specific card, an account information of an account associated with a specific card, a security information for transactions using a specific card, a user information of a specific account/card, and the like. In this instance, the security information may include at least one of a password of a specific account/card, a PIN (personal identification number), an OTP (one time password) information, a user's fingerprint information and the like.

The controller 180 of the mobile terminal 100 can send the financial information input by the user to the payment service server 510 through the wireless communication unit 110. The payment service server 510 saves the financial information received from the mobile terminal 100. Further, the payment service server 510 can save the financial information per mobile terminal 100 (or user of the payment service server 510). The payment service server 510 may be aware of the information of the mobile terminal 100 in advance or may receive the information of the mobile terminal 100 together with the financial information. In this instance, the information of the mobile terminal 100 may include a device information, a phone number, a user ID, and the like.

The payment service server 510 can check the validity of the received financial information through a card company server 530 and a financial company server 520. For instance, if the received financial information includes an information on a specific card, the payment service server 510 can check whether the specific card is a valid card through the card company server 530 or whether the information on the specific card is a valid information through the card company server 530. If the received financial information includes an information on a specific account, the payment service server 510 can check whether the specific account is a valid account existing actually through the financial company server 520 or whether the information on the specific account is a valid information through the financial company server 520.

According to an embodiment, the specific account may include a virtual account opened for a preset purpose. In this instance, the virtual account may have a mother account set to an account actually registered at the financial company server 520. If a user intends to make a payment online using a specific account/card registered at the payment service server 510, the payment service server 510 may play a role in making the payment by communicating with an online affiliate server 540.

FIG. 5 shows that the payment service server 510, the financial company server 520, the online affiliate server 540 exist respectively, by which the present invention is non-limited. For example, a single server shown in FIG. 5 may consist of at least two servers, at least two servers shown in FIG. 5 may be integrated into a single server, or components configuring each server shown in FIG. 5 may be embodied into a separate server. For instance, the payment service server 510 shown in FIG. 5 may be respectively embodied into an information storage server configured to receive and store financial information from the mobile terminal 100, a validity check server configured to check validity of financial information through the financial company server 520 or the card company server 530, and a payment server configured to make a payment online/offline using financial information. Moreover, according to an embodiment, the controller 180 of the mobile terminal 100 may play a role as the payment service server 510.

FIG. 6 is a diagram illustrating one example of a method of administering and using a common fund using a mobile terminal according to one embodiment of the present invention. Referring to FIG. 6, according to the present embodiment, assume that three mobile terminals 100 exist. For clarity of the following description, the three mobile terminals 100 may be differently named a first mobile terminal 100A, a second mobile terminal 100B and a third mobile terminal 100C, respectively. A user of the first mobile terminal 100A, a user of the second mobile terminal 100B and a user of the third mobile terminal 100C may be named a first user A, a second user B and a third user C, respectively.

A specific application is installed on each of the three mobile terminals 100A, 100B and 100C to use the mobile terminal 100 as a payment mechanism. In this instance, the specific application may include a specific application previously described with reference to FIG. 5. And, each of the users A, B and C of the three mobile terminals 100A, 100B and 100C may register financial information of the corresponding user at the specific application through the mobile terminal 100 of the corresponding user. In particular, the financial information of each of the users A, B and C of the three mobile terminals 100A, 100B and 100C may be saved in the payment service server 510.

The first user A can create a pay room for administering (or, collecting) a common fund for a specific meeting using the specific application (e.g., a different application interconnected to the specific application, according to an embodiment) installed on the first mobile terminal 100A. Further, the first user A may invite at least one member to the pay room. According to the present embodiment, assume that the first user A invites the second user B and the third user C to the pay room.

The pay room means a virtual space for enabling members belonging to a specific meeting to collect a membership fee or to administer a common fund. Cases of using terminologies other than the pay room may belong to the scope of the present invention.

The payment service server 510 may provide the mobile terminal 100 with an interface for pay room creation and member invitation. The controller 180 of the first mobile terminal 100A can output a screen corresponding to the interface for the pay room creation and the member invitation, which is provided by the payment service server 510, to the display unit 151. The first user A creates the pay room and can then invite a member belonging to the specific meeting to the created pay room, through the screen.

The controller 180 of the first mobile terminal 100A can control the wireless communication unit 110 to send a notification message, which indicates the creation of the pay room for the specific meeting and the invitation to the pay room, to the second mobile terminal B and the third mobile terminal 100C. According to an embodiment, data transmissions and receptions among the first to third mobile terminals 100A to 100C may be performed indirectly via the payment service server 510. This case may belong to the scope of the present invention without being mentioned specially in the following description.

Each of the second user B and the third user C confirms the notification message and may accept the corresponding invitation. Of course, according to an embodiment, each of the second user B and the third user C may decline the invitation. The controller 180 of the first mobile terminal 100A may control the wireless communication unit 110 to receive a message of the acceptance of the invitation from each of the second mobile terminal 100B and the third mobile terminal 100C. When each of the second user B and the third user C accepts the invitation, a pay room having members set to the first to third users A to C can be created.

For clarity of the description, each of the first to third users A to C may be called a member of the pay room. In particular, the first user A having created the pay room may be separately called a master member and the rest of the members other than the master member may be called non-master members (e.g., the second user B and the third user C).

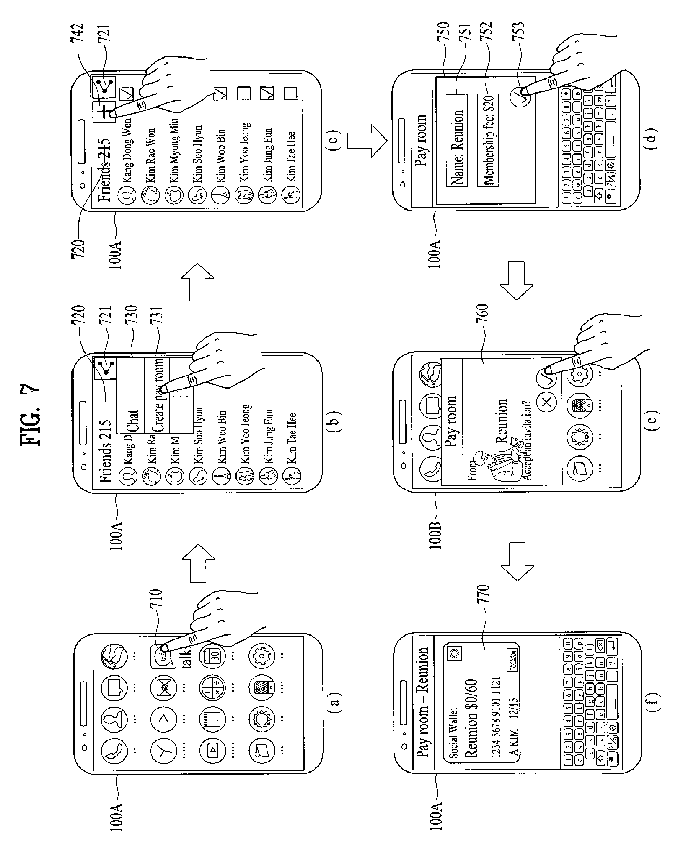

FIG. 7 is a diagram illustrating one example of a method of creating a pay room for administering a common fund in a mobile terminal according to one embodiment of the present invention. Referring to FIG. 7 (a), the first user A may launch a first application on an app list screen. In this instance, the first application may include a messenger application supportive of a common fund administering service (or, a mobile payment service) or an application inter-connectible to an application for providing a common fund administering service (or, a mobile payment service).

The controller 180 of the first mobile terminal 100A may run the first application in response to a command for selecting an icon 710 corresponding to the first application included in the app list screen.

Referring to FIG. 7 (b), the controller 180 of the first mobile terminal 100A outputs a running screen 720 of the first application to the display unit 151. In this instance, the running screen 720 of the first application may include a friend list of friends using the first application. And, the running screen 720 of the first application may include an icon 721 for selecting a menu option available in the first application. In response to a command for selecting the icon 721, the controller 180 of the first mobile terminal 100A may display a GUI 730 including menu options available in the first application on the display unit 151. In this instance, the GUI 730 may include a menu option 731 for creating a pay room for administering a common fund. A user can select a member to invite to the pay room by selecting the menu option 731 in the GUI 730.

Referring to FIG. 7 (c), in response to a command for selecting the menu option 731 in the GUI 730, the controller 180 of the first mobile terminal 100A can display a check box 741, which is provided to select a member to invite to the pay room from friends using the first application, on the running screen 720. For instance, the check box 741 may be displayed by corresponding to each of the friends using the first application.

A user can select a member to invite to the pay room from the friends using the first application by touching the check box 741 corresponding to the member to invite to the pay room. For instance, in response to the command for selecting the menu option 731 in the GUI 730, the controller 180 of the first mobile terminal 100A can display an icon 742, which corresponds to a payment creating command, on the running screen 720.

According to an embodiment, a list of friends corresponding to the mobile terminals 100 near the first mobile terminal 100A among the friends using the specific application can be disposed more preferentially than a list of other friends. For instance, in response to the command for selecting the menu option 731, the controller 180 of the first mobile terminal 100A activates the short range communication module 114 within the wireless communication unit 110, searches (or discovers) external devices capable of communications using the short range communication module 114, extracts the mobile terminals 100 corresponding to friends using the specific application from the discovered external devices, and can then place a list of the friends, who correspond to the extracted mobile terminals 100 among the friends using the specific application, on an upper part within the running screen 720. Moreover, according to an embodiment, the controller 180 of the first mobile terminal 100A may preferentially extract the mobile terminal 100 having a history of a connection of a short range communication with the first mobile terminal 100A from the discovered external devices.

Referring to FIG. 7 (d), in response to a command for selecting the icon 742 corresponding to the pay room creation, the controller 180 of the first mobile terminal 100A can output a GUI 750, which is provided to input information of a pay room to be created, to the display unit 151. For instance, the GUI 750 may include a first region 751 for inputting a name of the pay room and a second region 752 for inputting a membership fee for collecting a common fund, by which the present embodiment is non-limited. The first user A can input an information of the pay room to the first region 751 and the second region 752 using a virtual keyboard. In response to a command for selecting a confirm menu 753 in the GUI 750, the controller 180 of the first mobile terminal 100A can create the pay room. Moreover, in response to a command for selecting a confirm menu 753 in the GUI 750, the controller 180 of the first mobile terminal 100A can control the wireless communication unit 110 to send a notification message, which indicates the pay room creation and the invitation to the pay room, to the mobile terminal 100B corresponding to a member invited to the pay room. In this instance, the invited member is not a regular member of the pay room yet and may be called a candidate for the participation in the pay room. Hence, a member invited to a pay room should be regarded as a candidate unless specially mentioned in the following descriptions.

Referring to FIG. 7 (e), the controller 180 of the second mobile terminal 100B controls the wireless communication unit 110 to receive the notification message sent from the mobile terminal 100A and can output a GUI 760 corresponding to the notification message to the display unit 151. In this instance, the GUI 760 may include an information of the first user A having sent the notification message, an information of the first application, an information of the created pay room, and the like.

If detecting a command for accepting the invitation to the pay room through the GUI 760, the controller 180 of the second mobile terminal 100B may control the wireless communication unit 110 to send the first mobile terminal 100A a message of acceptance of the invitation to the pay room.

Referring to FIG. 7 (f), one example of a screen corresponding to the created pay room is illustrated. In response to the command for selecting the confirm menu 753 in the GUI 750, the controller 180 of the first mobile terminal 100A can output a screen corresponding to the created pay room to the display unit 151. According to an embodiment, the payment service server 510 creates a pay room and a virtual card corresponding to a common fund and can then send an information of the created virtual card to the first mobile terminal 100A. Based on the financial information registered by the first user A, the payment service server 510 can connect the created virtual card to an account of the first user A. According to an embodiment, the payment service server 510 may send information of at least one portion of the information of the created virtual card to the first mobile terminal 100A. In this instance, the virtual card is a soft card existing online or in the memory 170 of the mobile terminal 100 instead of existing offline and may mean a card created to correspond to the created pay room.

The information of the virtual card may include at least one of an information of the first mobile terminal 100A, a user information of the first mobile terminal 100A, an account information connected to the virtual card, a card number information of the virtual card, an amount information corresponding to the virtual card, a valid period information of the virtual card, an information of a plurality of users associated with the virtual card, and the like. In this instance, the amount information corresponding to the virtual card may include the information corresponding to an amount collected as a common fund through the pay room. And, the information of a plurality of the users associated with the virtual card may include an information on each user invited as a member to the pay room.

The controller 180 of the first mobile terminal 100A can save or may temporarily save the information of the virtual card sent from the payment service server 510 to the memory 170. When the first application is run, the pay room is accessed, or the information of the virtual card is changed, the first mobile terminal 100A can receive and update the information of the virtual card from the payment service server 510.

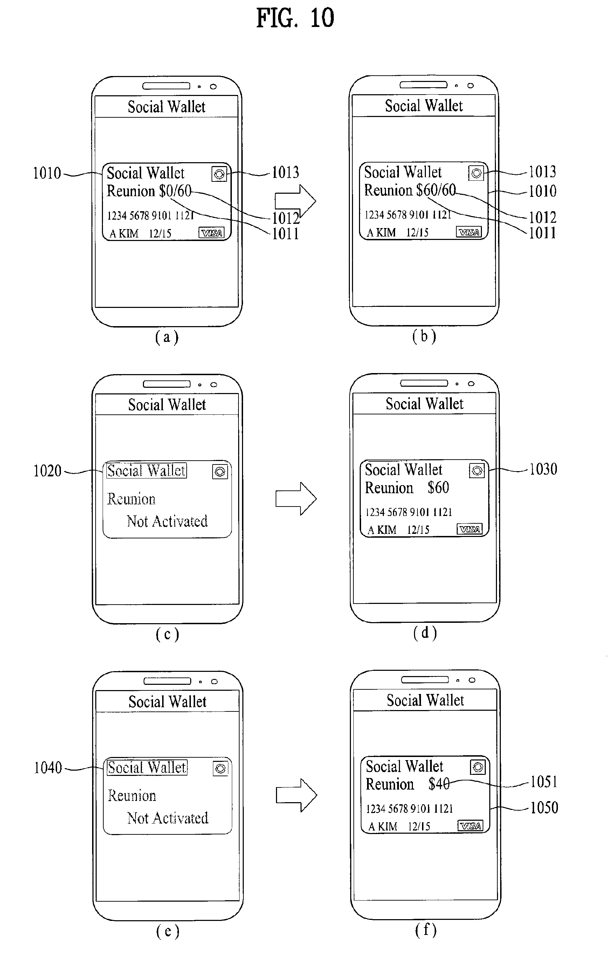

The controller 180 of the first mobile terminal 100A can output a card GUI 770 corresponding to the created virtual card to the screen corresponding to the pay room. The card GUI 770 may include at least one of a name information of the pay room, an information on a fund collected currently, an amount information (e.g., an information on total membership fee to be collected) corresponding to the virtual card, a card number information of the virtual card, a valid period information of the virtual card, and the like. The virtual card created to correspond to the pay room shall be described in detail with reference to FIGs. 10 to 12, FIG. 14, and FIGs. 17 to 24 later.

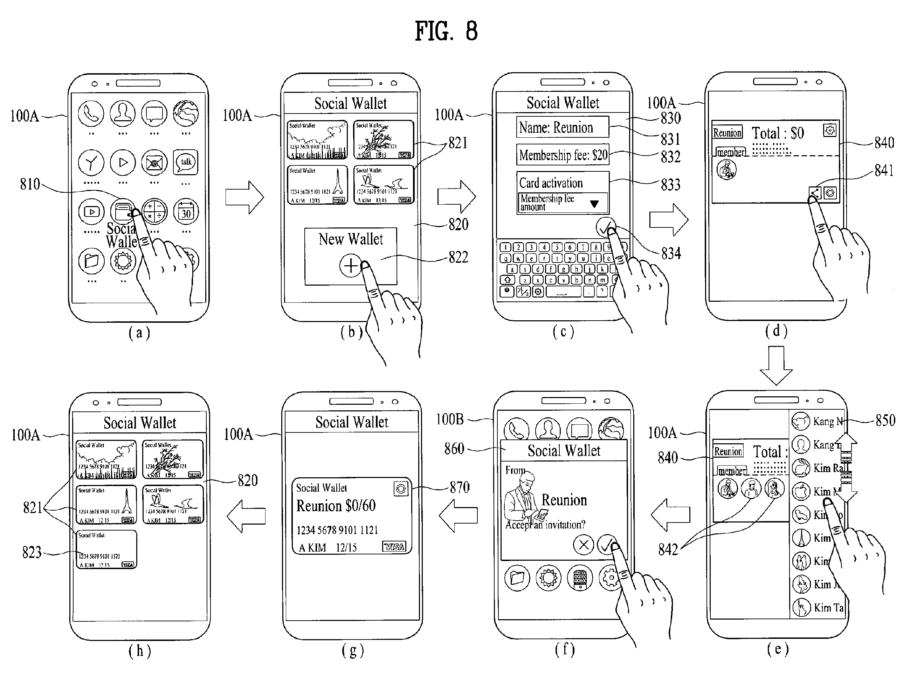

FIG. 8 is a diagram illustrating another example of a method of creating a pay room for administering a common fund in a mobile terminal according to one embodiment of the present invention. Referring to FIG. 8 (a), the first user A can launch a second application on an app list screen. In this instance, the second application may include an application for providing a common fund administering service (or, a mobile payment service).

In response to a command for selecting an icon 810 corresponding to the second application included in the app list screen, the controller 180 of the first mobile terminal 100A can run the second application.

Referring to FIG. 8 (b), the controller 180 of the first mobile terminal 100A outputs a running screen 820 of the second application to the display unit 151. In this instance, the running screen 820 of the second application may include a card GUI 821 corresponding to a pay room in which the first user A is included as a member. Yet, the card GUI 821 is displayed for example only. And, an indicator of a different type corresponding to a pay room created for administering a common fund may be displayed on the running screen 820.

Moreover, the running screen 820 may further include a card GUI 822 corresponding to a menu for creating a new pay room. The card GUI 822 is displayed for example only. And, a different indicator corresponding to a menu for creating a new pay room may be displayed on the running screen 820. For instance, the card GUI 822 may include a GUI of an empty card type. According to an embodiment, the card GUI 822 may be displayed on a screen of the display unit 151 all the time when the running screen 820 of the second application is output to the display unit 151. In particular, the card GUI 822 may be always displayed on the screen of the display unit 151 irrespective of the number of the card GUIs 821 corresponding to the pay room having the first user A included as a member therein, which are included in the running screen 820 of the second application.

Referring to FIG. 8 (c), in response to a command for selecting the card GUI 822 in the running screen 820, the controller 180 of the first mobile terminal 100A can output a GUI 830, which is provided to input an information of a pay room to create, to the display unit 151. For instance, the GUI 830 may include a first region 831 for inputting a name of a pay room, a second region 832 for inputting a membership fee for collecting a common fund, and a third region 833 for selecting an activation timing point of a card GUI 870 to be created to correspond to a virtual card, by which the present embodiment is non-limited. Using a virtual keyboard, the first user A can input information of the pay room to the first region 831 and the second region 832.

Besides, the activation of the card GUI 870 shall be described in detail with reference to FIG. 10 later. For instance, as the activation timing point of the card GUI 870, the third region 833 may include an item for selecting at least one of a menu option for directly activating the card GUI 870 displayed on the display unit 151 at a creation timing point of the card GUI 870, a menu option for activating the card GUI 870 in case of collecting membership fees over a preset amount at an account interconnected to a virtual card, and a menu option for activating the card GUI 870 in case of collecting all the membership fees input to the second region 832 at an account interconnected to a virtual card. In response to a command for selecting a confirm menu 834 in the GUI 830, the controller 180 of the first mobile terminal 100A can create a pay room.

Referring to FIG. 8 (d), the controller 180 of the first mobile terminal 100A can output a GUI 840 corresponding to the created pay room to the display unit 151. For instance, the GUI 840 may include a GUI of a card type. In this instance, the GUI 840 may include a name information of the pay room, an information of a member belonging to the pay room, an information of a common fund, and the like. The GUI 840 may include an icon 841 corresponding to a menu option for inviting a member to the created pay room. Through the menu option corresponding to the icon 841, the first user A can select a member to invite to the created pay room.

Referring to FIG. 8 (e), in response to a command for selecting the icon 841, the controller 180 of the first mobile terminal 100A can output a GUI 850 including a friend list of the first user A to the display unit 151. In this instance, the GUI 850 may include a list of friends using the second application or a list of friends saved in an application (e.g., a contact application, a messenger application, etc.) inter-connectible to the second application. In the latter case, the GUI 850 may include a running screen of the application (e.g., a contact application, a messenger application, etc.) inter-connectible to the second application. For instance, the GUI 850 may be output to a single screen of the display unit 151 together with the GUI 840 or may be displayed by overlaying the GUI 840.

Through the GUI 850, the first user A can select a member to invite to the pay room. For instance, the first user A selects a member to invite to the pay room from the friends included in the GUI 850 and can then select a member by selecting an icon corresponding to an add menu. In another instance, the first user A selects a member to invite to the pay room from the friends included in the GUI 850 and can then select a member by dragging the selected member to a region corresponding to the GUI 840.

If the member to be invited to the pay room is selected through the GUI 850, the controller 180 of the first mobile terminal 100A can display an information 842 corresponding to the selected member on the GUI 840. In case of detecting a confirm command after selecting the member to invite to the pay room, the controller 180 of the first mobile terminal 100A can control the wireless communication unit 110 to send a notification message, which indicates the pay room creation and invitation, to the mobile terminal 100B corresponding to the member invited to the pay room.

Referring to FIG. 8 (f), the controller 180 of the second mobile terminal 100B controls the wireless communication unit 110 to receive the notification message sent from the mobile terminal 100A and can output a GUI 860 corresponding to the notification message to the display unit 151. In this instance, the GUI 860 may include an information of the first user A having sent the notification message, an information of the second application, an information of the created pay room, and the like.

If detecting a command for accepting the invitation to the pay room through the GUI 860, the controller 180 of the second mobile terminal 100B may control the wireless communication unit 110 to send the first mobile terminal 100A a message of acceptance of the invitation to the pay room.

Referring to FIG. 8 (g), one example of a screen corresponding to the created pay room is illustrated. In case of detecting a confirm command after selecting a member to invite to the pay room, the controller 180 of the first mobile terminal 100A can output a screen corresponding to the created pay room to the display unit 151. According to an embodiment, the payment service server 510 creates a pay room and a virtual card corresponding to a common fund and can then send an information of the created virtual card to the first mobile terminal 100A. Based on the financial information registered by the first user A, the payment service server 510 can connect the created virtual card to an account of the first user A. According to an embodiment, the payment service server 510 may send information of at least one portion of the information of the created virtual card to the first mobile terminal 100A.

The information of the virtual card may include at least one of an information of the first mobile terminal 100A, a user information of the first mobile terminal 100A, an account information connected to the virtual card, a card number information of the virtual card, an amount information corresponding to the virtual card, a valid period information of the virtual card, an information of a plurality of users associated with the virtual card, and the like. In this instance, the amount information corresponding to the virtual card may include the information corresponding to an amount collected as a common fund through the pay room. And, the information of a plurality of the users associated with the virtual card may include an information on each user invited as a member to the pay room.

The controller 180 of the first mobile terminal 100A can save or may temporarily save the information of the virtual card sent from the payment service server 510 to the memory 170. When the first application is run, the pay room is accessed, or the information of the virtual card is changed, the first mobile terminal 100A can receive and update the information of the virtual card from the payment service server 510.

The controller 180 of the first mobile terminal 100A can output a card GUI 870 corresponding to the created virtual card to the screen corresponding to the pay room. The card GUI 870 may include at least one of a name information of the pay room, an information on a fund collected currently, an amount information (e.g., an information on total membership fee to be collected) corresponding to the virtual card, a card number information of the virtual card, a valid period information of the virtual card, and the like.

Referring to FIG. 8 (h), in response to a command for escaping from the screen corresponding to the created pay room, the controller 180 of the first mobile terminal 100A can output a running screen 820 of the second application, as shown in FIG. 8 (b), to the display unit 151. It can be confirmed that a card GUI 821 corresponding to a pay room having the first user A included as a member therein is included in the running screen 820. And, it can be confirmed that a card GUI 823 corresponding to the created pay room is included in the card GUI 821.

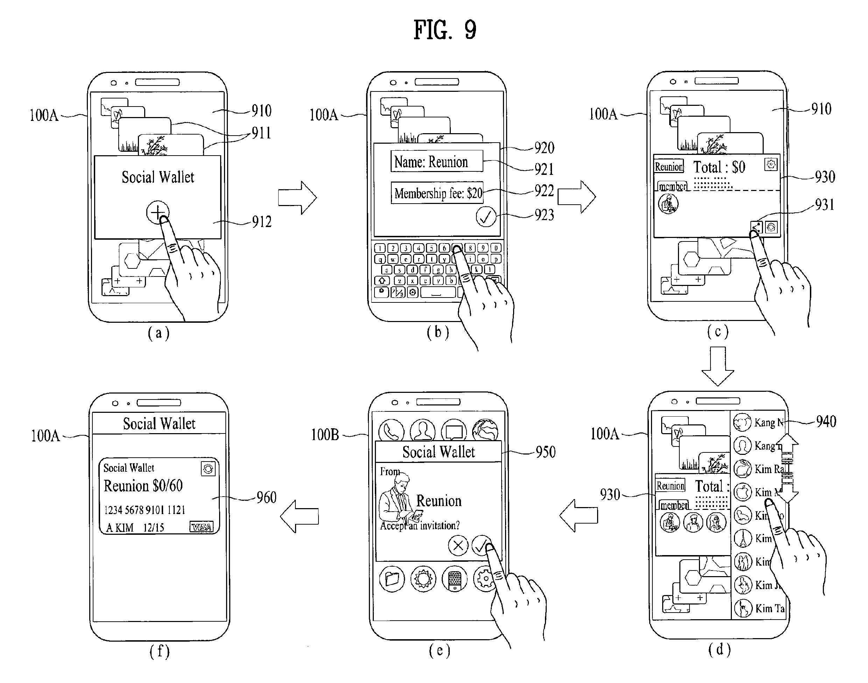

FIG. 9 is a diagram illustrating further example of a method of creating a pay room for administering a common fund in a mobile terminal according to one embodiment of the present invention. Referring to FIG. 9 (a), the first user A can launch a third application on an app list screen. In this instance, the third application may include an application for providing a mobile payment service or an application inter-connectible to an application for providing a common fund administering service.

The controller 180 of the first mobile terminal 100A can output a running screen 910 of the third application to the display unit 151. In this instance, the running screen 910 of the third application may include a card GUI 911 created to correspond to each financial information (e.g., an information of a specific card, etc.) registered at the third application by the first user A. Yet, the card GUI 911 is displayed for example only. And, an indicator of a different type corresponding to a payment mechanism corresponding to a registered financial information may be displayed on the running screen 910.

Moreover, the running screen 910 may further include a card GUI 912 for creating a virtual card corresponding to a pay room for administering a common fund. The card GUI 912 is displayed for example only. And, a different indicator corresponding to a menu for creating a virtual card corresponding to a pay room for administering a common fund may be displayed on the running screen 910. For instance, the card GUI 912 may include a GUI of an empty card type. According to an embodiment, the card GUI 912 may be displayed within the running screen 910 when the card 911 located in a bottom among the card GUIs is displayed on a screen of the display unit 151. For instance, the card GUI 912 may be displayed when the card 911 located in the bottom is displayed on the screen of the display unit 151 if the first user A scrolls a plurality of the card GUIs 911 included in the running screen 910.

Referring to FIG. 9 (b), in response to a command for selecting the card GUI 912 in the running screen 910, the controller 180 of the first mobile terminal 100A can output a GUI 920, which is provided to input an information of a pay room (or, a virtual card) to create, to the display unit 151. For instance, the GUI 920 may include a first region 921 for inputting a name of a pay room and a second region 922 for collecting a common fund, by which the present embodiment is non-limited. Using a virtual keyboard, the first user A can input information of the pay room to the first region 921 and the second region 922. In response to a command for selecting a confirm menu 923 in the GUI 920, the controller 180 of the first mobile terminal 100A can create a pay room.

Referring to FIG. 9 (c), the controller 180 of the first mobile terminal 100A can output a GUI 930 of a virtual card corresponding to the created pay room to the display unit 151. For instance, the GUI 930 may include a name information of the pay room, an information of a member belonging to the pay room, an information of a common fund, and the like. For instance, the GUI 930 maybe displayed within the running screen 910 of the third application together with other card GUIs 911.

The GUI 930 may include an icon 931 corresponding to a menu option for inviting a member to the created pay room. Through the menu option corresponding to the icon 931, the first user A can select a member to invite to the created pay room.

Referring to FIG. 9 (d), in response to a command for selecting the icon 931, the controller 180 of the first mobile terminal 100A can output a GUI 940 including a friend list of the first user A to the display unit 151. Since the description with reference to FIG. 9 (d) is similar to that described with reference to FIG. 8 (e), its details shall be omitted from the following description.

In case of detecting a confirm command after selecting the member to invite to the pay room, the controller 180 of the first mobile terminal 100A can control the wireless communication unit 110 to send a notification message, which indicates the pay room creation and invitation, to the mobile terminal 100B corresponding to the member invited to the pay room.

Referring to FIG. 9 (e), the controller 180 of the second mobile terminal 100B controls the wireless communication unit 110 to receive the notification message sent from the mobile terminal 100A and can output a GUI 950 corresponding to the notification message to the display unit 151. In this instance, the GUI 950 may include an information of the first user A having sent the notification message, an information of the third application, an information of the created pay room, and the like.

If detecting a command for accepting the invitation to the pay room through the GUI 950, the controller 180 of the second mobile terminal 100B may control the wireless communication unit 110 to send the first mobile terminal 100A a message of acceptance of the invitation to the pay room.

Referring to FIG. 9 (f), one example of a screen including a virtual card corresponding to the created pay room is illustrated. In case of detecting a confirm command after selecting a member to invite to the pay room, the controller 180 of the first mobile terminal 100A can output a screen including a virtual card corresponding to the created pay room to the display unit 151. According to an embodiment, the payment service server 510 creates a pay room and a virtual card corresponding to a common fund and can then send an information of the created virtual card to the first mobile terminal 100A. Based on the financial information registered by the first user A, the payment service server 510 can connect the created virtual card to an account of the first user A. According to an embodiment, the payment service server 510 may send information of at least one portion of the information of the created virtual card to the first mobile terminal 100A.

The information of the virtual card may include at least one of an information of the first mobile terminal 100A, a user information of the first mobile terminal 100A, an account information connected to the virtual card, a card number information of the virtual card, an amount information corresponding to the virtual card, a valid period information of the virtual card, an information of a plurality of users associated with the virtual card, and the like. In this instance, the amount information corresponding to the virtual card may include the information corresponding to an amount collected as a common fund through the pay room. And, the information of a plurality of the users associated with the virtual card may include an information on each user invited as a member to the pay room.

The controller 180 of the first mobile terminal 100A can save or may temporarily save the information of the virtual card sent from the payment service server 510 to the memory 170. When the first application is run, the pay room is accessed, or the information of the virtual card is changed, the first mobile terminal 100A can receive and update the information of the virtual card from the payment service server 510.

The controller 180 of the first mobile terminal 100A can output a card GUI 960 corresponding to the created virtual card to the screen corresponding to the pay room. The card GUI 960 may include at least one of a name information of the pay room, an information on a fund collected currently, an amount information (e.g., an information on total membership fee to be collected) corresponding to the virtual card, a card number information of the virtual card, a valid period information of the virtual card, and the like.

According to an embodiment, when the virtual card is created through one of the descriptions with reference to FIGs. 7 to 9, the first user A can select a type of an information displayed on a card GUI corresponding to the created virtual card. For instance, the first user A may select that an information of an account corresponding to a virtual card (e.g., an information of a virtual card) is displayed on a card GUI corresponding to a created virtual card, or may select that a phone number of the mobile terminal 100 of the first user A is displayed on the card GUI corresponding to the created virtual card. Moreover, after the virtual card has been created, the first user A may change the information displayed on the card GUI corresponding to the virtual card. Moreover, according to an embodiment, the first user A may differently set an information displayed on a card GUI appearing in the mobile terminal 100 of a master user and an information displayed on a card GUI appearing in the mobile terminal 100 of a non-master user. For instance, the first user A may select that an information of an account corresponding to a virtual card (e.g., an information of a virtual card) is displayed on a card GUI appearing in the mobile terminal 100 of the master user, or may select that a phone number of the mobile terminal 100 of the master user or the non-master user is displayed on a card GUI appearing in the mobile terminal 100 of the non-master user.

FIG. 10 is a diagram illustrating examples of a virtual card output to a display unit of a mobile terminal according to one embodiment of the present invention. Referring to FIG. 10, the controller 180 of the first mobile terminal 100A can output a GUI of a virtual card created to correspond to a common fund (i.e., created to correspond to a pay room) to the display unit 151. The payment service server 510 creates a virtual card corresponding to the created pay rom to administer the common fund and can then send at least one portion of an information of the created virtual card to the first mobile terminal 100A.

Referring to FIG. 10 (a), the controller 180 of the first mobile terminal 100A outputs a GUI 1010 of a virtual card created to a common fund to the display unit 151. The GUI 1010 of the virtual card may include at least one of a name information of the pay room, an information 1011 on a fund collected currently, an amount information 1012 (e.g., an information on total membership fee to be collected) corresponding to the virtual card, a card number information of the virtual card, and a valid period information of the virtual card. The GUI 1010 of the virtual card may be created in response to a creation of the pay room irrespective of a fund collected currently from members and may be directly output in an activated state to the display unit 151 irrespective of a fund collected currently.

Referring to FIG. 10 (b), after the membership fee collection from members has been performed, the GUI 1010 of the virtual card output to the display unit 151 is illustrated. After the membership fee collection from the members has been performed, an information 1011 on a fund collected currently can be updated and displayed on the GUI 1010 of the virtual card. If a balance at an account connected to the virtual card is changed by making a payment of a prescribed amount using the virtual card, the update of the information 1011 can be performed.

If the balance connected to the virtual card is changed within an amount corresponding to the virtual card due to a membership fee collection from members, a use of the virtual card, or the like, the payment service server 510 can send the changed information to the first mobile terminal 100A. And, the controller 180 of the first mobile terminal 100A can output the changed information reflected GUI 1010 of the virtual card to the display unit 151. By selecting a refresh icon 1013 included in the GUI 1010 of the virtual card, a user can update the GUI 1010 of the virtual card to match a current status.

Meanwhile, referring to FIG. 10 (c), the controller 180 of the first mobile terminal 100A outputs a GUI 1020 of a virtual card created to correspond to a common fund to the display unit 151. The GUI 1020 of the virtual card output right after the creation may be in a deactivated state. The GUI 1020 of the virtual card may include a name information of a pay room. Besides, a card number information of the virtual card, a valid period information of the virtual card and the like may not be displayed on the GUI 1020 of the virtual card in the deactivated state.

Referring to FIG. 10 (d), if the membership fee collection from members is completed, the controller 180 of the first mobile terminal 100A may output a GUI 1030 of the virtual card in the activated state to the display unit 151. In particular, until a preset common fund is fully credited to an account connected to the virtual card, the controller 180 of the first mobile terminal 100A outputs the GUI 1030 of the virtual card in the deactivated state. As the preset common fund is completely credited to the account connected to the virtual card, the controller 180 of the first mobile terminal 100A can change the GUI 1030 of the virtual card into the GUI 1030 of the virtual card in the activated state. The GUI 1030 of the virtual card may include at least one of a name information of the pay room, an information on a fund collected currently, an amount information (e.g., an information on total membership fee to be collected) corresponding to the virtual card, a card number information of the virtual card, and a valid period information of the virtual card.

Meanwhile, referring to FIG. 10 (e), the controller 180 of the first mobile terminal 100A outputs a GUI 1040 of a virtual card created to correspond to a common fund to the display unit 151. The GUI 1020 of the virtual card output right after the creation may be in a deactivated state. The GUI 1040 of the virtual card may include a name information of a pay room. Besides, a card number information of the virtual card, a valid period information of the virtual card and the like may not be displayed on the GUI 1020 of the virtual card in a deactivated state.

Referring to FIG. 10 (f), if an amount over a preset amount is credited to an account connected to the virtual card, the controller 180 of the first mobile terminal 100A can output a GUI 1050 of the virtual card in an activated state to the display unit 151. In this instance, the preset amount may be smaller than a preset common fund. In particular, if an amount over the preset amount is credited to the account connected to the virtual card, although the preset common fund has not been fully collected yet, the controller 180 of the first mobile terminal 100A can change the GUI 1040 of the virtual card in the deactivated state into the GUI 1050 of the virtual card in the activated state. The GUI 1050 of the virtual card may include at least one of a name information of the pay room, an information 1051 on a fund collected currently, an amount information (e.g., an information on total membership fee to be collected) corresponding to the virtual card, a card number information of the virtual card, and a valid period information of the virtual card.

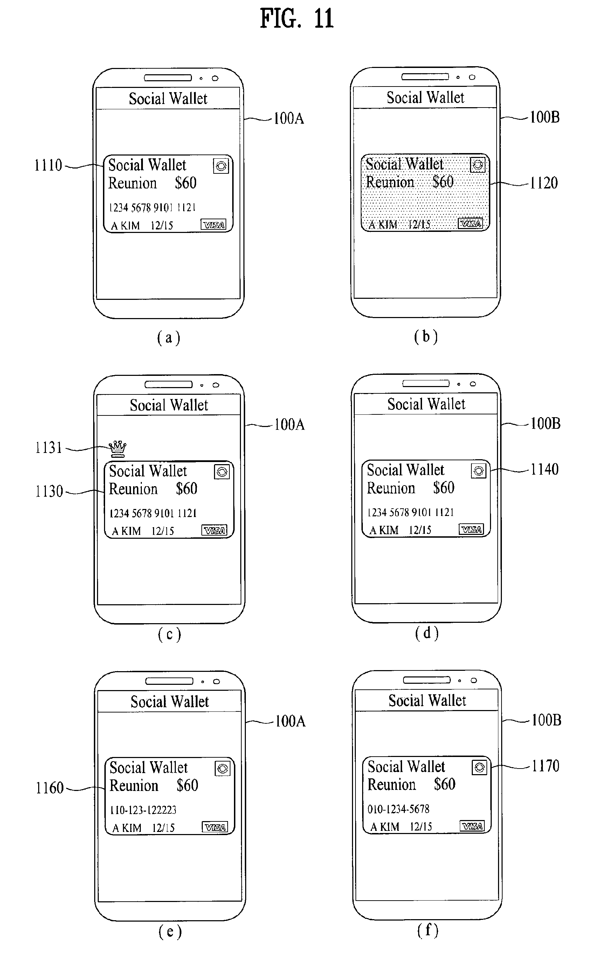

FIG. 11 is a diagram illustrating examples of a virtual card output to a mobile terminal of a master member or a mobile terminal of a non-master member according to one embodiment of the present invention. Referring to FIG. 11, the controller 180 of the first mobile terminal 100A can output a GUI of a virtual card created to correspond to a common fund (i.e., created to correspond to a pay room) to the display unit 151.

The payment service server 510 creates a virtual card corresponding to the pay room created to administer the common fund and can then send at least one portion of an information of the created virtual card to the first mobile terminal 100A corresponding to the first user A as a master member. And, the payment service server 510 can send at least one portion of the created virtual card to the second mobile terminal 100B corresponding to the second user B as a member of the created pay room.

The virtual card information sent to the first mobile terminal 100A by the payment service server 510 may differ from the virtual card information sent to the second mobile terminal 100B by the payment service server 510 in at least one portion. For instance, the virtual card information sent to the second mobile terminal 100B by the payment service server 510 may not contain an account information of an account connected to the virtual card, a card number information of the virtual card, a valid period information of the virtual card and the like.

Referring to FIG. 11 (a), based on an information of a virtual card sent from the payment service server 510, the controller 180 of the first mobile terminal 100A corresponding to the first user A as the master member can output a GUI 1110 of the virtual card to the display unit 151. In this instance, the GUI 1110 of the virtual card may include at least one of a name information of the pay room, an information on a fund collected currently, an amount information (e.g., an information on total membership fee to be collected) corresponding to the virtual card, a card number information of the virtual card, a valid period information of the virtual card, and the like.

Referring to FIG. 11 (b), based on an information of a virtual card sent from the payment service server 510, the controller 180 of the second mobile terminal 100B corresponding to the second user B as the non-master member can output a GUI 1120 of the virtual card to the display unit 151. In this instance, the GUI 1120 of the virtual card may include at least one of a name information of the pay room, an information on a fund collected currently, and an amount information (e.g., an information on total membership fee to be collected) corresponding to the virtual card. According to an embodiment, the GUI 1120 of the virtual card may not include a card number information of the virtual card and a valid period information of the virtual card. Moreover, according to an embodiment, the GUI 120 of the virtual card may differ from the GUI 1110 of the virtual card in at least one of shape, color, transparency, and pattern.

Meanwhile, Referring to FIG. 11 (c), based on an information of a virtual card sent from the payment service server 510, the controller 180 of the first mobile terminal 100A corresponding to the first user A as the master member can output a GUI 1130 of the virtual card to the display unit 151. The controller 180 of the first mobile terminal 100A may control an indicator 1131, which indicates that the first user A of the first mobile terminal 100A is the master member of the pay room, to be displayed on or near the GUI 1130 of the virtual card. According to an embodiment, the indicator 1131 may be one portion of the GUI 1130 of the virtual card.

Further, referring to FIG. 11 (d), a separate indicator may not displayed on (or, near) a GUI 1140 of the virtual card displayed on the display unit 151 of the second mobile terminal 100B corresponding to the second user B as the non-master member. According to an embodiment, on or near the GUI 1140 of the virtual card, another indicator indicating that the second user B of the second mobile terminal 100B is the non-master member of the pay room may be displayed.

Meanwhile, referring to FIG. 11 (e), based on an information of a virtual card sent from the payment service server 510, the controller 180 of the first mobile terminal 100A corresponding to the first user A as the master member can output a GUI 1160 of the virtual card to the display unit 151. In this instance, the GUI 1160 of the virtual card may include an information of an account (or a virtual account) inter-connected to the virtual card. As the rest of the description with reference to FIG. 11(e) is similar to those with reference to FIG. 11 (a) and FIG. 11 (c), its details shall be omitted from the following description.

Further, referring to FIG. 11 (f), based on an information of a virtual card sent from the payment service server 510, the controller 180 of the second mobile terminal 100B corresponding to the second user B as the non-master member can output a GUI 1170 of the virtual card to the display unit 151. In this instance, the GUI 1170 of the virtual card may include at least one of a name information of the pay room, an information on a fund collected currently, and an amount information (e.g., an information on total membership fee to be collected) corresponding to the virtual card. And, the GUI 1170 of the virtual card may further include a card number information of the virtual card, a valid period information of the virtual card, and a phone number of the mobile terminal 100 instead of an information of an account inter-connected to the virtual card. In this instance, the phone number of the mobile terminal 100 may include a phone number of the first mobile terminal 100A of the master user or a phone number of the second mobile terminal 100B of the non-master user.

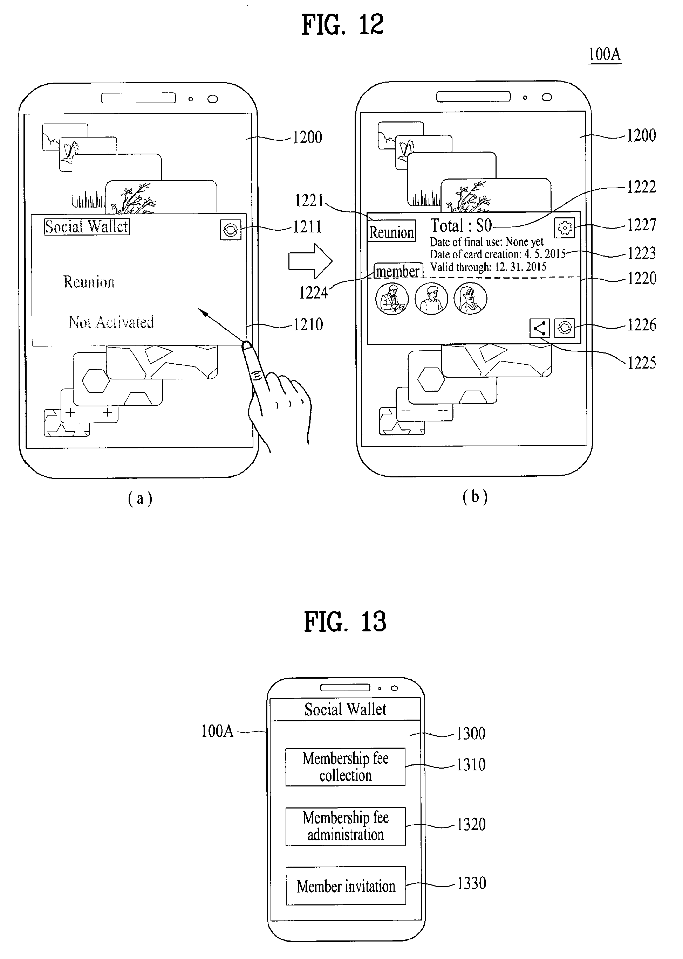

In the latter case, as mentioned in the following description, the second user B of the second mobile terminal 100B may be a member to which a use authority of the virtual card is given or granted. Meanwhile, according to one embodiment of the present invention, a user may administer or manage the created pay room or configure an environment of the pay room. This is described in detail with reference to FIG. 12 as follows.

FIG. 12 is a diagram illustrating one example of a method of administering a pay room in a mobile terminal according to one embodiment of the present invention. Referring to FIG. 12 (a), the controller 180 of the first mobile terminal 100A can output a GUI 1210 of a virtual card created to correspond to a common fund to the display unit 151. According to an embodiment, the controller 180 of the first mobile terminal 100A can output the GUI 1210 of the virtual card onto a running screen 1200 of a specific application for a pay room creation. According to the present embodiment, a payment application is taken as an example of the specific application for the following description.

The GUI 1210 of the virtual card may be displayed in a deactivated state before a preset amount is credited to an account connected to the virtual card or before a preset common fund is fully credited to the account connected to the virtual card. The GUI 1210 of the virtual card may include an icon 1211 for updating a current status of the virtual card.

The first user A may administration (environment configuration included) on a pay room (or a virtual card) through the GUI 1210 of the virtual card. For instance, the GUI 1210 of the virtual card may include an icon corresponding to a menu option for administering or managing the pay room or the virtual card.

In another instance, in response to a preset command, referring to FIG. 12 (b), the controller 180 of the first mobile terminal 100A can output a GUI card 1220 of the virtual card for the administration of the pay room. Further, the GUI 1220 of the virtual card may be output to a position, to which the GUI 1210 of the virtual card used to be output, instead of the GUI 1210 of the virtual card. For instance, the preset command may include a touch input corresponding to a motion of turning over the GUI 1210 of the virtual card. In particular, the preset command may include a touch input applied by touching a random edge of the GUI 1210 of the virtual card and then flicking toward an inside of the GUI 1210 of the virtual card.

The GUI 1220 of the virtual card may include at least one of a name information 1221 of a pay room, an information 1222 on a fund collected currently, a history information 1223 of the pay room, a member information 1224 of a member belonging to the pay room, an icon 1225 corresponding to a function for inviting a new member to the pay room, an icon 1226 corresponding to a function for updating the pay room (or the virtual card) into a current status, and an icon 1227 corresponding to a function for an environment configuration of the pay room (or the virtual card).

The first user A can invite a new member to the pay room by selecting the icon 1225. The first user A can update the pay room (or the virtual card) into a current status by selecting the icon 1226. And, the first user A can configure an environment of the pay room (or the virtual card) by selecting the icon 1227.

In response to a preset command (e.g., a touch input corresponding to a motion of turning over the GUI 1220 of the virtual card), the controller 180 of the first mobile terminal 100A can re-display the GUI 1210 of the virtual card on the display unit 151 instead of the GUI 1220 of the virtual card.

Although the description with reference to FIG. 12 is made in viewpoint of the first mobile terminal 100A, it may be applicable to the case of the second mobile terminal 100B or the third mobile terminal 100C corresponding to a non-master member identically or similarly. Yet, information included in a GUI of a virtual card output to the display unit 151 of the second mobile terminal 100B or the third mobile terminal 100C corresponding to the non-master member, a type of the GUI of the virtual card, a shape of the GUI of the virtual card, a color of the GUI of the virtual card, a pattern of the GUI of the virtual card, and the like may differ from those of the GUI of the virtual card output to the display unit 151 of the first mobile terminal 100A. Functions accessible through the GUI of the virtual card output to the display unit 151 of the second mobile terminal 100B or the third mobile terminal 100C may be different from those accessible through the GUI of the virtual card output to the display unit 151 of the first mobile terminal 100A in part at least.

FIG. 13 is a diagram illustrating another example of a method of administering a pay room in a mobile terminal according to one embodiment of the present invention. Referring to FIG. 13, in a running screen of a specific application for a pay room creation, the controller 180 of the first mobile terminal 100A can output a running screen 1300 corresponding to the created pay room to the display unit 151 for administration of a common fund.

The running screen 1300 of the specific application corresponding to the created pay room may include at least one of a first menu option 1310 for collecting a membership fee for the common fund, a second menu option 1320 for administering the collected membership fees, and a third menu option 1330 for inviting a new member to the pay room.

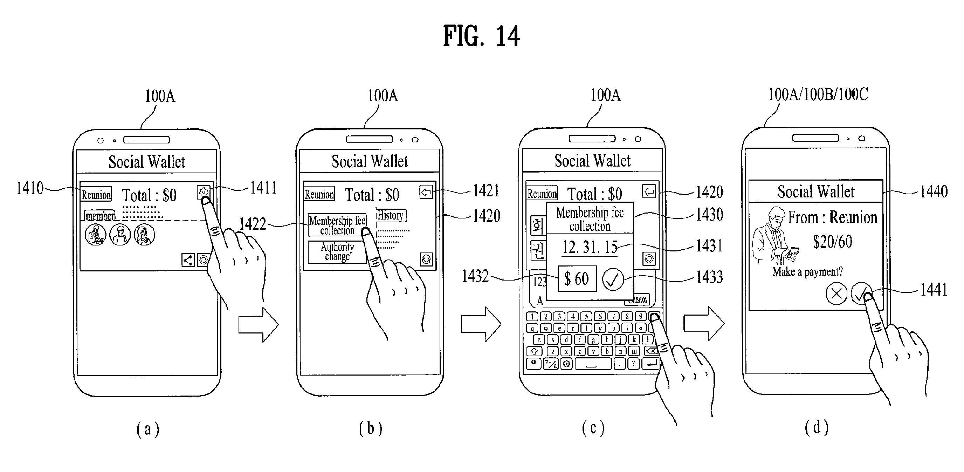

In the following description, with reference to FIGs. 14 to 17, embodiments for a method of collecting and paying membership fees for a common fund in the created pay room are described in detail. FIG. 14 is a diagram illustrating one example of a method of collecting membership fees for a common fund in a mobile terminal according to one embodiment of the present invention. Although FIG. 14 shows one example of a case that a membership fee collection is initiated by the first user A corresponding to a master member, the second user 100B or the third user 100C corresponding to a non-master member may initiate the membership fee collection according to an embodiment.

Referring to FIG. 14 (a), the controller 180 of the first mobile terminal 100A outputs a GUI 1410 for administration of a pay room (or a virtual card) to the display unit 151. Since the GUI 1410 is similar to the former GUI 1220 of the virtual card described with reference to FIG. 12 (b), its details shall be omitted from the following description. The GUI 1410 may include an icon 1411 corresponding to a function for environment configuration of the pay room (or the virtual card).

In response to a command for launching the function for the environment configuration of the pay room (or the virtual card) (e.g., a command for selecting the icon 1411), referring to FIG. 14 (b), the controller 180 of the first mobile terminal 100A can output a GUI 1420 to the display unit 151. According to an embodiment, the GUI 1420 has the same shape of the former GUI 1410 but may differ from the former GUI 1410 only in information or data included therein.

The GUI 1420 may include an icon 1521 corresponding to a function for returning to a previous screen. In response to a command for selecting the icon 1521, the controller 180 of the first mobile terminal 100A may re-display the GUI 1410 on the display unit 151. Moreover, the GUI 1420 may include a menu option 1422 for collecting membership fees for the common fund.

Referring to FIG. 14 (c), in response to a command for selecting the menu option 1422, the controller 180 of the first mobile terminal 100A can output a GUI 1430 for inputting information of a membership fee to collect to the display unit 151. For instance, the GUI 1430 may overlay the former GUI 1420. In addition, the GUI 1430 may include a first region 1431 for setting a period for membership fee collection and a second region 1432 for setting a membership fee to collect.

In response to a command for selecting a confirm menu 1433 in the GUI 1430, the controller 180 of the first mobile terminal 100A can send a signal contriving information of the membership fee to the second mobile terminal 100B corresponding to the second user B belonging to the pay room and the third mobile terminal 100C corresponding to the third user C belonging to the pay room. The information of the membership fee contained in the signal may include at least one of an information of a member leading the membership fee collection, an amount information of a membership fee supposed to be paid by each member, a total membership fee information on total membership fees to be collected, and an information of an account connected to the virtual card.

Referring to FIG. 14 (d), based on the information on the membership fees input through the GUI 1430, the controller 180 of the first mobile terminal 100A can output a message 1440, which contains an information on a membership fee supposed to be paid by the first user A, to the display unit 151. For instance, the controller 180 of the first mobile terminal 100A calculates a membership fee supposed to be paid by each member by dividing the total membership fees by the number of members belonging to the pay room and can then display the message 1440 containing the information on the calculated membership fee to the display unit 151.

Meanwhile, based on the information of the membership fee sent from the first mobile terminal 100A, the controller 180 of the second mobile terminal 100B can output the message 1440 containing the information of the membership fee supposed to be paid by the second user B to the display unit 151. And, based on the information of the membership fee sent from the first mobile terminal 100A, the controller 180 of the third mobile terminal 100C can output the message 1440 containing the information of the membership fee supposed to be paid by the third user C to the display unit 151. Moreover, in the message 1440 output to the display unit 151 of each of the second mobile terminal 100B and the third mobile terminal 100C, an information of the first user A leading the membership fee collection, an amount information ($20) of the membership fee supposed to be paid by the corresponding member, and a total membership fee information ($60) of total membership fees to be collected.

In response to a commend for selecting a confirm menu 1441 included in the message 1440, each of the controller 180 of the first mobile terminal 100A, the controller 180 of the second mobile terminal 100B and the controller 180 of the third mobile terminal 100C can make a membership fee payment using an account information registered by the corresponding user. According to an embodiment, each of the controller 180 of the first mobile terminal 100A, the controller 180 of the second mobile terminal 100B and the controller 180 of the third mobile terminal 100C sends a signal for requesting a membership fee payment to the payment service server 510 through the wireless communication unit 110 and may be then able to make a membership fee payment through an interface provided by the payment service server 510.

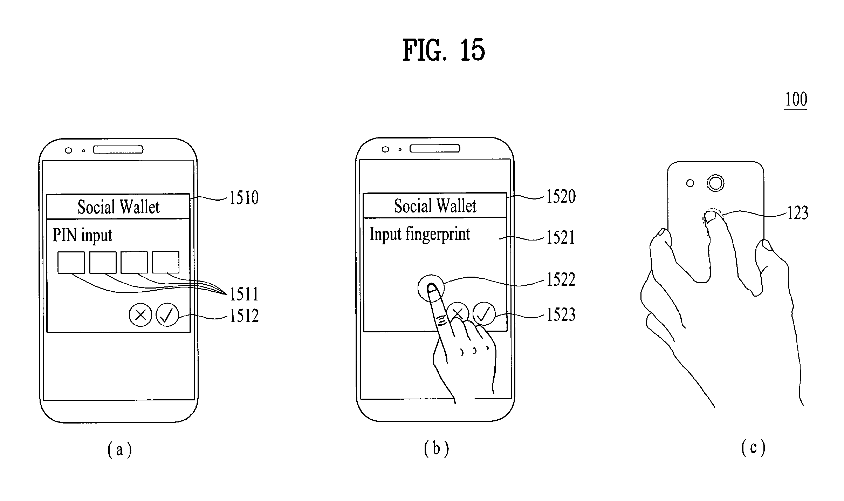

FIG. 15 is a diagram illustrating one example of a method of making a membership fee payment in a mobile terminal according to one embodiment of the present invention. Since the embodiment shown in FIG. 15 is applicable to all the first to third mobile terminals 100A to 100C, the following description shall be made without being limited to a specific mobile terminal.

Referring to FIG. 15, if the confirm menu 1441 is selected from the message 1440 shown in FIG. 14 (d), the controller 180 of the first mobile terminal 100A can output a message for checking a security information for a membership fee payment to the display unit 151. A user of the mobile terminal 100 can register a specific account or a specific card at a specific application. For instance, a user of the mobile terminal 100 can register a specific account or a specific card at a specific application through an interface provided by the payment service server 510. And, the user of the mobile terminal 100 can make a prescribed payment or remittance by taking the mobile terminal 100 as a payment mechanism using the specific account registered at the specific application or may make a prescribed payment by taking the mobile terminal 100 as a payment mechanism using the specific card registered at the specific application. An interface required for using the mobile terminal 100 as the payment mechanism may be provided to the mobile terminal 100 by the payment service server 510.

For instance, referring to FIG. 15 (a), the controller 180 of the first mobile terminal 100A can output a message 1510, which is provided to check a security information for a membership fee payment, to the display unit 151. In this instance, the message 1510 may include an announcement message indicating to input a PIN previously registered by the user of the mobile terminal 100 as a security information required for transactions using the specific account and a PIN input region 1511 for receiving the PIN. In case of using the mobile terminal 100 as a payment mechanism, what kind of security information will be used may be determined as a default or may be set or changed by the user. According to the present embodiment, when the user of the mobile terminal 100 makes a prescribed payment or remittance using a financial information registered at the specific application, assume that PIN is preset to be used as a security information. Hence, the user of the mobile terminal 100 can input the PIN to the message 1510 using a virtual keyboard.

After the PIN has been input, if a confirm menu 1512 in the message 1510 is selected, the controller 180 of the first mobile terminal 100A checks whether the input PIN matches a pre-registered PIN and can control the wireless communication unit 110 to send a corresponding result to the payment service server 510. Alternatively, after the PIN has been input, if a confirm menu 1512 in the message 1510 is selected, the controller 180 of the first mobile terminal 100A sends the input PIN to the payment service server 510 through the wireless communication unit 110 and can check whether the input PIN matches a pre-registered PIN. Subsequently, if the input PIN matches the pre-registered PIN, the payment service server 510 checks the information of the specific account of the user of the mobile terminal 100, which is saved in the payment service server 510, and can then make a request for a balance information of the specific account to the financial company server 520. If the balance of the specific account is greater than a membership fee to be paid, the payment service server 510 can send a pay request information of the membership fee and the information of the account connected to the virtual card to the financial company server 520. Subsequently, the financial company server 520 makes a remittance of an amount corresponding to the membership fee to be paid to the account connected to the virtual card from the account of the user of the mobile terminal 100 and can then send a remittance result to the payment service server 510. Finally, the payment service server 510 may send the remittance result to the mobile terminal 100.

According to an embodiment, in case of the first user A as the master member, since a remittance account is equal to a reception account, the payment service server 510 does not make a payment of a membership fee actually but can link an amount corresponding to the membership fee at the account of the first user A, which is connected to the virtual card, to the virtual card.

In another instance, referring to FIG. 15 (b), the controller 180 of the first mobile terminal 100A can output a message 1520, which is provided to check a security information for a membership fee payment, to the display unit 151. In this instance, the message 1520 may include an announcement message 1521 indicating to input a fingerprint information previously registered by the user of the mobile terminal 100 as a security information required for transactions using a specific account and a fingerprint information input region 1522 for receiving the fingerprint information. According to an embodiment, the display unit 151 of the mobile terminal 100 may have at least one partial region consist of a fingerprint recognition sensor. Hence, the user of the mobile terminal 100 can input a fingerprint information by touching the fingerprint input region 1522 with a finger corresponding to a preset fingerprint during a prescribed time.

After the fingerprint information has been input, if a confirm menu 1523 in the message 1520 is selected, the controller 180 of the first mobile terminal 100A checks whether the input fingerprint information matches a previously registered fingerprint information and can control the wireless communication unit 110 to send a corresponding result to the payment service server 510. Alternatively, after the fingerprint information has been input, if a confirm menu 1523 in the message 1520 is selected, the controller 180 of the first mobile terminal 100A sends the input fingerprint information to the payment service server 510 through the wireless communication unit 110 and can check whether the input fingerprint information matches a previously registered fingerprint information.

Since other contents are similar to those described with reference to FIG. 15 (a), their details shall be omitted from the following description. In another instance, referring to FIG. 15 (c), the message 1520 shown in FIG. 15 (b) may only include an announcement message 1521 indicating to input a fingerprint information previously registered by the user of the mobile terminal 100 as a security information required for transactions using a specific account but may not include a fingerprint information input region for receiving the fingerprint information. Instead, a fingerprint information may be input through a user input unit 123 of the mobile terminal 100. According to an embodiment, the user input unit 123 may include a fingerprint recognition sensor.

If the fingerprint information is input through the user input unit 123, the controller 180 of the first mobile terminal 100A checks whether the input fingerprint information matches a previously registered fingerprint information and can control the wireless communication unit 110 to send a corresponding result to the payment service server 510. Alternatively, if the fingerprint information is input through the user input unit 123, the controller 180 of the first mobile terminal 100A sends the input fingerprint information to the payment service server 510 through the wireless communication unit 110 and can check whether the input fingerprint information matches a previously registered fingerprint information.

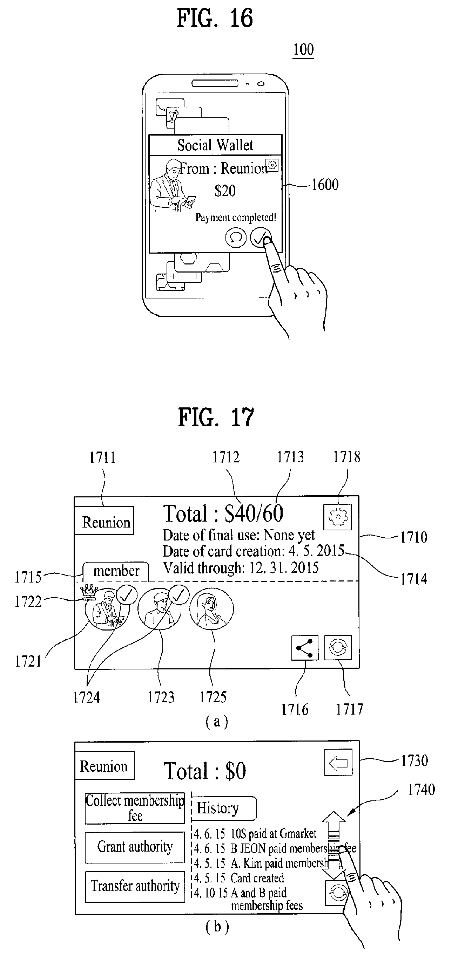

Since other contents are similar to those described with reference to FIG. 15 (a), their details shall be omitted from the following description. FIG. 16 is a diagram illustrating one example of a message output through a display unit in case of completing a membership fee payment of each member in a mobile terminal according to one embodiment of the present invention. According to the present embodiment, the following description is made on the assumption that a membership fee payment of the first user A has been made.

Referring to FIG. 16, if a membership fee payment of the first user A is completed according to the former descriptions with reference to FIG. 14 and FIG. 15, the first mobile terminal 100A can output a message 1600, which indicates the completed membership fee payment of the first user A, to the display unit 151. If the payment of the membership fee is made using the financial information registered at the payment service server 510 by the first user A, the payment service server 510 may send the first mobile terminal 100A an information indicating that the membership fee payment has been made. Based on the information sent from the payment service server 510, the controller 180 of the first mobile terminal 100A can output the message 1600, which indicates the completion of the membership fee payment of the first user A, to the display unit 151.

Meanwhile, if the membership fee of the first user A is completed, the payment service server 510 can send the information indicating the completion of the membership fee payment of the first user A to the second mobile terminal 100B and the third mobile terminal 100C corresponding to other members (e.g., the second user B and the third user C) belonging to the pay room. Based on the information sent from the payment service server 510, each of the controller 180 of the first mobile terminal 100A, the controller 180 of the second mobile terminal 100B and the controller 180 of the third mobile terminal 100C can output the message 1600 indicating the completion of the membership fee payment of the first user A to the display unit 151. In this instance, the message 1600 may contain a name information of the pay room, an information of a member having paid the corresponding membership fee, an information of the paid membership fee, and the like.

FIG. 17 is a diagram illustrating one example of a method of checking a membership fee payment status of members belonging to a pay room in a mobile terminal according to one embodiment of the present invention. Since the embodiment shown in FIG. 17 is applicable irrespective of a master member or a non-master member, the following description shall be made without being limited to a specific mobile terminal.

Referring to FIG. 17 (a), the controller 180 of the first mobile terminal 100A can output a GUI 1710 for administration of a pay room (or a virtual card) to the display unit 151. In this instance, the GUI 1710 may include at least one of a name information 1711 of a pay room, an information 1712 on a fund collected currently, a total membership fee information 1713 of membership fees to be collected, a history information 1714 of the pay room, a member information 1715 of members belonging to the pay room, an icon 1716 corresponding to a function for inviting a new member to the pay room, an icon 1717 corresponding to a function for updating the pay room (or the virtual card) into a current status, and an icon 1718 corresponding to a function for an environment configuration of the pay room (or the virtual card).

The member information 1715 of members belonging to the pay room may include a first information 1721 corresponding to the first user A, a second information 1723 corresponding to the second user B, and a third information 1725 corresponding to the third user C. When the first user A is a master member of the pay room, an indicator 1722, which is provided to indicate that the first user A is the master member, may be displayed on or near the first information 1721.

According to the present embodiment, assume that the first user A and the second user B paid the membership fees and that the third user C has not paid the membership fee yet. The controller 180 of the first mobile terminal 100A can display an indicator 1724, which is provided to indicate that the membership fee has been paid, on each of the first information 1721 corresponding to the first user A having paid the membership fee and the second information 1723 corresponding to the second user B having paid the membership fee or near each of the first information 1721 corresponding to the first user A having paid the membership fee and the second information 1723 corresponding to the second user B having paid the membership fee. Based on data sent from the payment service server 510, the controller 180 of the first mobile terminal 100A can be aware of current membership fee paid statuses of members.

According to an embodiment, a separate indicator may not be displayed on (or near) the third information 1725 corresponding to the third user C failing to pay the membership fee, or an indicator to indicate an unpaid membership fee may be displayed on (or near) the third information 1725 corresponding to the third user C failing to pay the membership fee.

A user may configure an environment of the pay room (or the virtual card) or may check a detailed history information on the virtual card, by selecting the icon 1718 in the GUI 1710. In response to a command for selecting the icon 1718 in the GUI 1710, referring to FIG. 17 (b), the controller 180 of the first mobile terminal 100A can output a GUI 1730 to the display unit 151. According to an embodiment, the GUI 1730 may have the same shape of the former GUI 1710 but may differ in information or data contained therein.

The GUI 1730 may include a history information 1740 containing a use history of the virtual card, a paid membership fee history, and the like. In the history information 1740, paid membership fee histories of the first user A and the second user B may be updated.

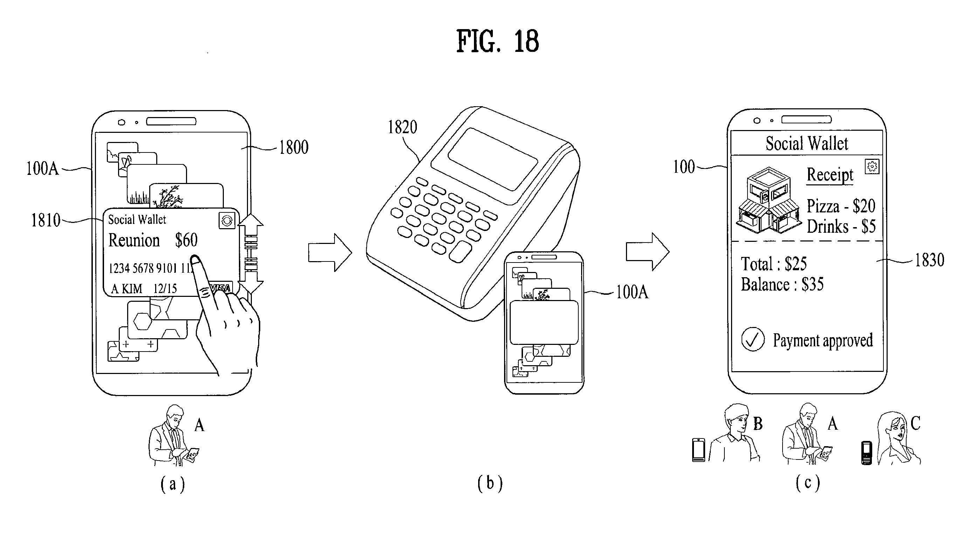

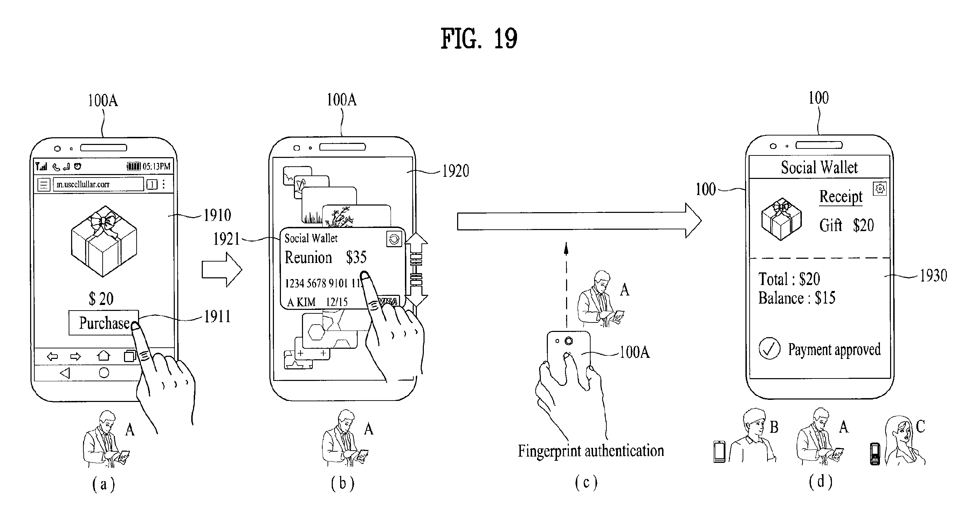

In the following description, examples of a method of making a payment of a prescribed amount using a virtual card for a common purpose of members belonging to a pay room are described in detail with reference to FIG. 18 and FIG. 19. FIG. 18 is a diagram illustrating one example of a method of making a payment off-line using a virtual card in a mobile terminal according to one embodiment of the present invention. Basically, since the first user A corresponding to the master member has a use authority of a virtual card, the following description is made on the assumption that the first mobile terminal 100A corresponding to the first user A is used as a payment mechanism.

Referring to FIG. 18 (a), in case of intending to make a payment at an offline shop using a virtual card created to correspond to a pay room, the first user A can launch a specific application on the first mobile terminal 100A. In this instance, the specific application may include a mobile payment application. A running screen 1800 of the specific application may include GUIs respectively corresponding to cards or virtual cards registered at the mobile payment application. The first user A can select a GUI 1810 of the virtual card corresponding to the pay room to use for a payment. According to an embodiment, if there is a default card (or the virtual card) selected by the first user A, the step shown in FIG. 18 (a) may be skipped. Further, although the display unit 151 of the mobile terminal 100A is deactivated, the default card may be in an activated state in the background and the short range communication module 114 in the wireless communication unit 110 to use the default card may be in an activated state.

Referring to FIG. 18 (b), a shop keeper of an offline shop may input a prescribed amount to a payment terminal 1820. And, the first user A can place the first mobile terminal 100A in a preset distance from the payment terminal 1820. Further, the short range communication module 114 in the wireless communication unit 110 required for the communications between the payment terminal 1820 and the first mobile terminal 100A may be in an activated state.

If the payment terminal 1820 is detected through the short range communication module 114, the controller 180 of the first mobile terminal 100A can control the short range communication module 114 to send at least one portion of information of the virtual card to the payment terminal 1820. In this instance, the information of the virtual card sent to the payment terminal 1820 may include an account information of an account connected to the virtual card, a card number information of the virtual card, a valid period information of the virtual card and the like. According to an embodiment, the information of the virtual card is set to the first mobile terminal 100A from the payment service server 510 and may be then sent to the payment terminal 1820 from the first mobile terminal 100A again.

The payment terminal 1820 can send the payment service server 510 the virtual card information sent from the first mobile terminal 100A and a payment request information of the input prescribed amount. Further, the shop keeper of the payment terminal 1820 can be assumed as making an affiliate contract with the payment service server 510. According to an embodiment, if a payment is made through a server separate from the payment service server 510, the payment terminal 1820 may send the information of the virtual card and the payment request information of the input prescribed amount to the separate server.

The payment service server 510 checks a balance corresponding to the virtual card from a balance at the account associated with the virtual card through the financial company server 520. If the balance corresponding to the virtual card is equal to or greater than the input prescribed amount, the payment service server 510 can approve the payment of the prescribed amount within the balance corresponding to the virtual card. And, the payment service server 510 can send a payment approval result to the payment terminal 1820. Moreover, the payment service server 510 can send a signal containing the payment approval result to the first mobile terminal 100A. According to an embodiment, the payment service server 510 can send the signal containing the payment approval result to the second mobile terminal 100B and the third mobile terminal 100C corresponding to the second user B and the third user C of the pay room members, respectively.

According to an embodiment, when the virtual card is created in association with a service provided by the card company server 530, the payment terminal 1820 may send the virtual card information sent from the first mobile terminal 100A and the payment request information of the input prescribed amount to the card company server 530. Subsequently, the card company server 530 checks validity of the information of the virtual card. If the information of the virtual card is valid, the card company server 530 can check a balance corresponding to the virtual card from the balance at the account associated with the virtual card through the financial company server 520. If the balance corresponding to the virtual card is equal or greater than the input prescribed amount, the card company server 530 can approve the payment of the prescribed amount within the balance corresponding to the virtual card. And, the card company server 530 can send a payment approval result to the payment terminal 1820. Moreover, the card company server 530 can send a signal containing the payment approval result to the first mobile terminal 100A and the payment service server 510. According to an embodiment, the payment service server 510 can send the signal containing the payment approval result to the second mobile terminal 100B and the third mobile terminal 100C corresponding to the second user B and the third user C of the pay room members, respectively.

According to an embodiment, when the first user A makes a payment using the virtual card, an input of a previously registered security information may be required. According to an embodiment, when the first user A makes a payment using the virtual card, when a payment amount exceeds a preset amount, a payment may be made using the virtual card only if the second user B and the third user C corresponding to other members of the pay room have agreed to the payment. In this instance, the payment service server 510 sends an information on an amount to be paid to the second mobile terminal 100B and the third mobile terminal 100C. If a signal of approving the payment is received from each of the second mobile terminal 100B and the third mobile terminal 100C, the payment service server 510 may approve the payment.

Referring to FIG. 18 (c), the controller 180 of the mobile terminal 100 (e.g., the first to third mobile terminals) can output a message 1830 containing the payment approval result to the display unit 151.

FIG. 19 is a diagram illustrating one example of a method of making a payment on-line using a virtual card in a mobile terminal according to one embodiment of the present invention. Basically, since the first user A corresponding to the master member has a use authority of a virtual card, the following description is made on the assumption that the first mobile terminal 100A corresponding to the first user A is used as a payment mechanism.

Referring to FIG. 19 (a), the first user A can select a payment menu 1911 for a product purchase from a screen 1910 corresponding to an interface provided by an online shopping server. The online shopping server is provided for example only. And, an online payment can be made through an online content providing server, a messenger server, an online game server, or the like. The online shopping server may be inter-connected to an online affiliate payment server 540 or may include an online affiliate payment server 540. According to an embodiment, the payment service server 510 may play a role as the online affiliate server 540.

In response to a selection of the payment menu 1911, referring to FIG. 19 (b), the controller 180 of the first mobile terminal 100A launches a specific application and can output a corresponding running screen 1920 to the display unit 151. The running screen 1920 may include GUIs respectively corresponding to cards or virtual cards registered at the mobile payment application. The first user A can select a GUI 1921 of the virtual card corresponding to the pay room to use for a payment.

Subsequently, if the payment using the virtual card is selected, the controller 180 of the first mobile terminal 100A can send a payment request information of a prescribed amount, which is sent from an online affiliate payment server 540, to the payment service server 510.

Subsequently, the payment service server 510 checks a balance corresponding to the virtual card from a balance at the account associated with the virtual card through the financial company server 520. If the balance corresponding to the virtual card is equal to or greater than the input prescribed amount, the payment service server 510 can approve the payment of the prescribed amount within the balance corresponding to the virtual card. And, the payment service server 510 can send a payment approval result to the online affiliate payment server 540. Moreover, the payment service server 510 can send a signal containing the payment approval result to the first mobile terminal 100A. According to an embodiment, the payment service server 510 can send the signal containing the payment approval result to the second mobile terminal 100B and the third mobile terminal 100C corresponding to the second user B and the third user C of the pay room members, respectively.

According to an embodiment, when the virtual card is created in association with a service provided by the card company server 530, the online affiliate payment server 540 may send the virtual card information sent from the first mobile terminal 100A and the payment request information of the prescribed amount to the card company server 530. Subsequently, the card company server 530 checks validity of the information of the virtual card. If the information of the virtual card is valid, the card company server 530 can check a balance corresponding to the virtual card from the balance at the account associated with the virtual card through the financial company server 520. If the balance corresponding to the virtual card is equal or greater than the input prescribed amount, the card company server 530 can approve the payment of the prescribed amount within the balance corresponding to the virtual card. And, the card company server 530 can send a payment approval result to the online affiliate payment server 540. Moreover, the card company server 530 can send a signal containing the payment approval result to the first mobile terminal 100A and the payment service server 510. According to an embodiment, the payment service server 510 can send the signal containing the payment approval result to the second mobile terminal 100B and the third mobile terminal 100C corresponding to the second user B and the third user C of the pay room members, respectively.

According to an embodiment, referring to FIG. 19 (c), when the first user A makes a payment using the virtual card, an input of a previously registered security information may be required. According to an embodiment, when the first user A makes a payment using the virtual card, when a payment amount exceeds a preset amount, a payment may be made using the virtual card only if the second user B and the third user C corresponding to other members of the pay room have agreed to the payment. In this instance, the payment service server 510 sends an information on an amount to be paid to the second mobile terminal 100B and the third mobile terminal 100C. If a signal of approving the payment is received from each of the second mobile terminal 100B and the third mobile terminal 100C, the payment service server 510 may approve the payment.

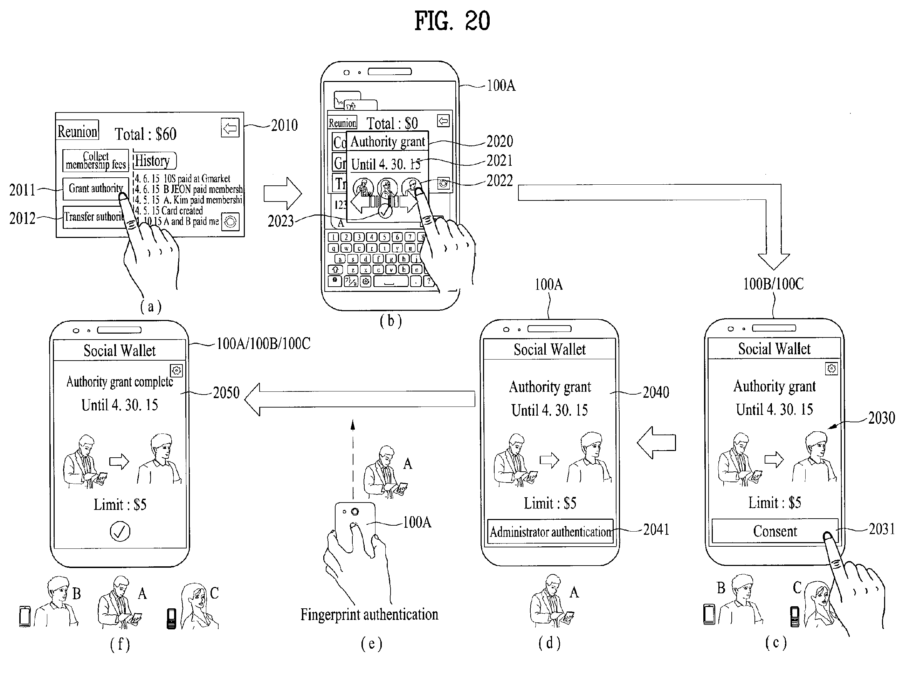

Referring to FIG. 19 (d), the controller 180 of the mobile terminal 100 (e.g., the first to third mobile terminals) can output a message 1930 containing the payment approval result to the display unit 151. Meanwhile, according to one embodiment of the present invention, a master member of a pay room can grant a use authority of a virtual card to a non-master member temporarily or permanently. This is described in detail with reference to FIGs. 20 to 22 as follows.

FIG. 20 is a diagram illustrating one example of a method for a master member to grant a use authority of a virtual card to a non-master member in a mobile terminal according to one embodiment of the present invention. Referring to FIG. 20 (a), the controller 180 of the first mobile terminal 100A corresponding to the first user A as a master member can output a GUI 2010 for environment configuration of a virtual card to the display unit 151.

The GUI 2010 may include a menu option 2011 for granting a use authority of the virtual card to a non-master member temporarily or permanently and a menu option 2012 for transferring a use authority of the virtual card to a non-master member. The former menu option 2011 is provided for a master member to grant a use authority of the virtual card to a non-master member while keeping the use authority of the virtual card. And, the latter menu option 2012 is provided to hand over a position of the master member to a member used to be a non-master member. Hence, in the latter case, a member used to a master member loses a position of the master member.

Referring to FIG. 20 (b), in response to a command for selecting the menu option 2011 in the GUI 2010, the controller 180 of the first mobile terminal 100A can output a GUI 2020 for granting a use authority of the virtual card to a non-master member to the display unit 151. The GUI 2020 may include a first region 2021 for setting a term (or expiration date) of the use authority of the virtual card and a second region 2022 for selecting a member to grant the use authority of the virtual card from members belonging to the pay room. The GUI 2020 may include a third region for granting a use authority of the virtual card within a prescribed amount together with the first region 2021 or instead of the first region 2021.

A user can input the term (or expiration date) to the first region 2021 using a virtual keyboard and can select a member to grant a use authority of the virtual card from the members belonging to the pay room from the second region 2022. Since numerous members belong to the pay room, if information of the members fail to be displayed on the second region 2022 at a time, the first user A can scroll the information of the members in the second region 2022 by touching the second region 2022 right and left or top to bottom.

According to the present embodiment, assume that the first user A grants a use authority of the virtual card to the second user B until April 30, 2015. In response to a command for selecting a confirm menu 2023 in the GUI 2020, the controller 180 of the first mobile terminal 100A can control the wireless communication unit 110 to send a signal for obtaining a consent to a grant of the use authority of the virtual card to the second mobile terminal 100B corresponding to the second user B. According to an embodiment, the controller 180 of the first mobile terminal 100A can control the wireless communication unit 110 to send a signal, which is sent to obtain a consent to a grant of the use authority of the virtual card to the second user B, to the third mobile terminal 100C corresponding to the third user C (i.e., another member) as well. According to an embodiment, the signal may be sent from the first mobile terminal 100A to the second mobile terminal 100B and the third mobile terminal 100C through the payment service server 510.

Referring to FIG. 20 (c), based on the signal for obtaining the consent, the controller 180 of each of the second mobile terminal 100B and the third mobile terminal 100C can output a GUI 2030, which is provided to obtain the consent to a grant of a use authority to the second user B, to the display unit 151. In this instance, the GUI 2030 may include at least one of an information of the second user B to receive the authority, a term information of the authority grant, and an amount information of the authority grant.

In response to a command for selecting the menu 2031 for consenting to the grant of the use authority from the GUI 2030, the controller 180 of each of the second mobile terminal 100B and the third mobile terminal 100C can control the wireless communication unit 110 to send a signal, which indicates the consent to the authority grant to the second user B, to the first mobile terminal 100. In this instance, the signal may be sent to the first mobile terminal 100A from each of the second mobile terminal 100B and the third mobile terminal 100C through the payment service server 510.

As the signal indicating the consent to the authority grant to the second user B is received, the controller 180 of the first mobile terminal 100A can grant a use authority of the virtual card to the second user B in accordance with a preset condition. According to an embodiment, if each of the second user B and the third user C consents to the authority grant to the second user B, the payment service server 510 grants the use authority of the virtual card to the second user B in accordance with the preset condition and can save an information changed in accordance with the grant of the use authority of the virtual card to the second user B.

According to an embodiment, if each of the second user B and the third user C consents to the authority grant to the second user B, a procedure for the authority grant to the second user B may be completed in accordance with an additional authentication of the first user A corresponding to the master member.

For instance, referring to FIG. 20 (d), the controller 180 of the first mobile terminal 100A can output a GUI 2040 for an authentication of the first user A to the display unit 151. In response to a command for selecting a menu 2041 for the authentication in the GUI 2040, the controller 180 of the first mobile terminal 100A can receive a preset security information input by the first user A. For instance, the security information may include a preset fingerprint information shown in FIG. 20(e).

If the authentication of the first user A is completed, the controller 180 of the first mobile terminal 100A can output a message 2050, which indicates that the procedure for the authority grant to the second user B is completed, to the display unit 151. Moreover, if the authentication of the first user A is completed, the controller 180 of the first mobile terminal 100A can control the wireless communication unit 110 to send an information, which indicates that the procedure for the authority grant to the second user B has been completed, to the second mobile terminal 100B and the third mobile terminal 100C. based on the information sent from the first mobile terminal 100A, the controller 180 of each of the second mobile terminal 100B and the third mobile terminal 100C can output a message 2050, which indicates that the procedure for the authority grant to the second user B has been completed, to the display unit 151.

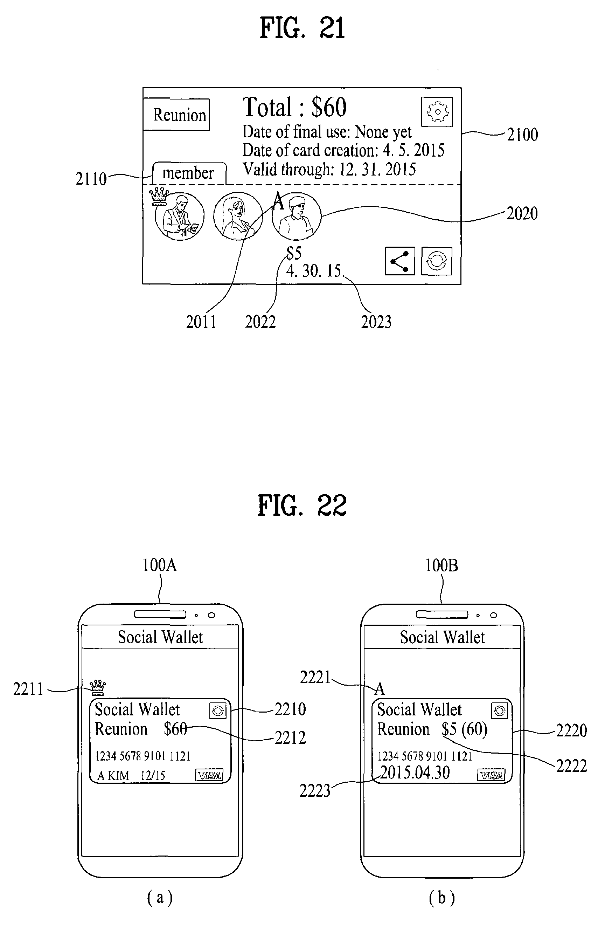

FIG. 21 is a diagram illustrating one example of a method of administering a pay room (or a virtual card) after granting a use authority of a virtual card to a non-master member in a mobile terminal according to one embodiment of the present invention. As the embodiment shown in FIG. 21 is applicable irrespective of a master member or a non-master member, it shall be described without being limited to a specific mobile terminal.

Referring to FIG. 21, the controller 180 of the first mobile terminal 100A can output a GUI 2100, which is provided for the administration of a pay room (or a virtual card), to the display unit 151. In this instance, the GUI 2100 may include information 2110 of members belonging to the pay room.

If a use authority of the virtual card is granted to the second user B according to the former description with reference to FIG. 20, the controller 180 of the first mobile terminal 100A can display an information, which is provided to indicate that the use authority of the virtual card has been granted to the second user B, on the GUI 2100.

For instance, the information, which is provided to indicate that the use authority of the virtual card has been granted to the second user B, may be displayed on or near an information 2020 corresponding to the second user B and may include at least one of an indicator 2011 information indicating that the use authority of the virtual card has been granted to the second user B, a use authority granted amount information 2022, and a use authority granted term information 2023.

FIG. 22 is a diagram illustrating a difference between a GUI of a virtual card output through a mobile terminal of a master member and a GUI of a virtual card output though a mobile terminal of a non-master member in case of granting a use authority of the virtual card to the non-master member in a mobile terminal according to one embodiment of the present invention.

Referring to FIG. 22 (a), a GUI 2210 corresponding to a virtual card is displayed on the display unit 151 of the first mobile terminal 100A corresponding to the first user A of a master member. According to an embodiment, on or near the GUI 2210, an indicator 2211 indicating that the first user A is the master member may be displayed. The GUI 2210 may include an amount information 2212 corresponding to the virtual card. Besides, according to an embodiment, if a use authority of the virtual card within an amount corresponding to the virtual card is granted to the second user B, the first user A may have the use authority of the virtual card for an amount resulting from subtracting the prescribed amount from the amount corresponding to the virtual card only and an information on the prescribed amount, of which use authority is granted to the second user B, may be displayed on the GUI 2210

Meanwhile, referring to FIG. 22 (b), a GUI 2220 corresponding to a virtual card is displayed on the display unit 151 of the second mobile terminal 100B corresponding to the second user B who is a non-master member having a use authority of the virtual card granted thereto. According to an embodiment, on or near the GUI 2220, an indicator 2221 indicating that the second user B is the non-master member having the use authority of the virtual card granted thereto may be displayed. In this instance, the GUI 2220 may include an amount information 2222 of an amount, of which use authority is granted, and a term information 2223 on a use authority granted term.

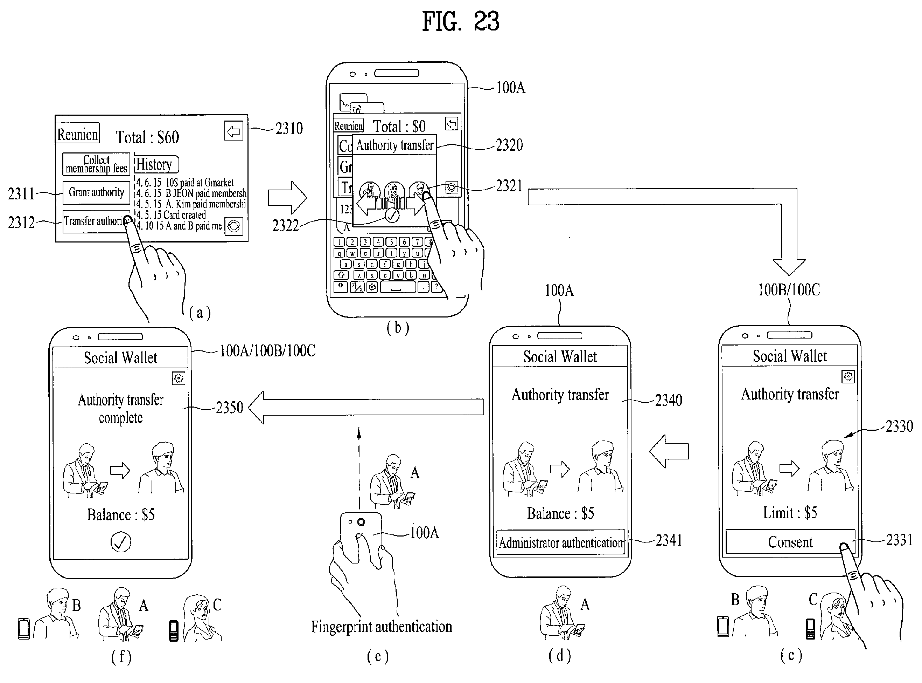

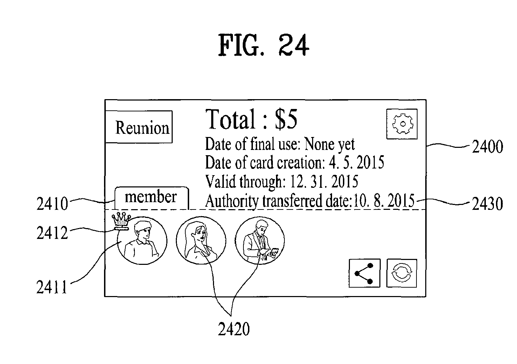

According to one embodiment of the present invention, a master member of a pay room may transfer a position of the master member to a non-master member. This is described in detail with reference to FIG. 23 and FIG. 24 as follows.

FIG. 23 is a diagram illustrating one example of a method for a master member to transfer a use authority of a virtual card to a non-master member in a mobile terminal according to one embodiment of the present invention. Referring to FIG. 23 (a), the controller 180 of the first mobile terminal 100A corresponding to the first user A as a master member can output a GUI 2310 for environment configuration of a virtual card to the display unit 151.

The GUI 2310 may include a menu option 2311 for granting a use authority of the virtual card to a non-master member temporarily or permanently and a menu option 2312 for transferring a use authority of the virtual card to a non-master member. The former menu option 2311 is provided for a master member to grant a use authority of the virtual card to a non-master member while keeping the use authority of the virtual card. And, the latter menu option 2312 is provided to hand over a position of the master member to a member used to be a non-master member. Hence, in the latter case, a member used to a master member loses a position of the master member.

Referring to FIG. 23 (b), in response to a command for selecting the menu option 2312 in the GUI 2310, the controller 180 of the first mobile terminal 100A can output a GUI 2320 for transferring a use authority of the virtual card to a non-master member to the display unit 151. The GUI 2320 may include a first region 2321 for setting a member, to whom the use authority of the virtual card will be transferred (i.e., to whom a position of the master member will be transferred), from members belonging to the pay room.

According to the present embodiment, assume that the first user A transfers the authority of the virtual card to the second user B. In response to a command for selecting a confirm menu 2321 in the GUI 2320, the controller 180 of the first mobile terminal 100A can control the wireless communication unit 110 to send a signal for obtaining a consent to a transfer of the use authority of the virtual card to the second mobile terminal 100B corresponding to the second user B. According to an embodiment, the controller 180 of the first mobile terminal 100A can control the wireless communication unit 110 to send a signal, which is sent to obtain a consent to a transfer of the use authority of the virtual card to the second user B, to the third mobile terminal 100C corresponding to the third user C (i.e., another member) as well. According to an embodiment, the signal may be sent from the first mobile terminal 100A to the second mobile terminal 100B and the third mobile terminal 100C through the payment service server 510.

Referring to FIG. 23 (c), based on the signal for obtaining the consent, the controller 180 of each of the second mobile terminal 100B and the third mobile terminal 100C can output a GUI 2330, which is provided to obtain the consent to a transfer of a use authority to the second user B, to the display unit 151. In this instance, the GUI 2330 may include at least one of an information of the second user B to receive the authority and an amount information (balance information) corresponding to the virtual card.

In response to a command for selecting the menu 2331 for consenting to the transfer of the use authority from the GUI 2330, the controller 180 of each of the second mobile terminal 100B and the third mobile terminal 100C can control the wireless communication unit 110 to send a signal, which indicates the consent to the authority transfer to the second user B, to the first mobile terminal 100. In this instance, the signal may be sent to the first mobile terminal 100A from each of the second mobile terminal 100B and the third mobile terminal 100C through the payment service server 510.

As the signal indicating the consent to the authority transfer to the second user B is received, the controller 180 of the first mobile terminal 100A can transfer a use authority of the virtual card (i.e., the position of the master member) to the second user B. Subsequently, the controller 180 of the first mobile terminal 100A can send a signal for requesting a release of a connection between the virtual card and an account of the first user A to the payment service server 510. According to an embodiment, if each of the second user B and the third user C consents to the authority transfer to the second user B, the payment service server 510 withdraws the use authority of the virtual card from the first user A, grants the use authority of the virtual card to the second user B, and can save an information changed in accordance with the transfer of the use authority of the virtual card to the second user B. in particular, the payment service server 510 releases the connection between the virtual card and the account of the first user A and can connect the virtual card to a previously registered account of the second user B.

According to an embodiment, if each of the second user B and the third user C consents to the authority transfer to the second user B, a procedure for the authority transfer to the second user B may be completed in accordance with an additional authentication of the first user A corresponding to the master member.

For instance, referring to FIG. 23 (d), the controller 180 of the first mobile terminal 100A can output a GUI 2340 for an authentication of the first user A to the display unit 151. In response to a command for selecting a menu 2341 for the authentication in the GUI 2340, the controller 180 of the first mobile terminal 100A can receive a preset security information input by the first user A. For instance, the security information may include a preset fingerprint information shown in FIG. 23(e).

If the authentication of the first user A is completed, the controller 180 of the first mobile terminal 100A can output a message 2350, which indicates that the procedure for the authority transfer to the second user B is completed, to the display unit 151. Moreover, if the authentication of the first user A is completed, the controller 180 of the first mobile terminal 100A can control the wireless communication unit 110 to send an information, which indicates that the procedure for the authority transfer to the second user B has been completed, to the second mobile terminal 100B and the third mobile terminal 100C. Based on the information sent from the first mobile terminal 100A, the controller 180 of each of the second mobile terminal 100B and the third mobile terminal 100C can output a message 2350, which indicates that the procedure for the authority transfer to the second user B has been completed, to the display unit 151.

FIG. 24 is a diagram illustrating one example of a method of administering a pay room (or a virtual card) after transferring a use authority of a virtual card to a member used to be a non-master member in a mobile terminal according to one embodiment of the present invention. As the embodiment shown in FIG. 24 is applicable irrespective of a master member or a non-master member, it shall be described without being limited to a specific mobile terminal.

Referring to FIG. 24, the controller 180 of the first mobile terminal 100A can output a GUI 2400, which is provided for the administration of a pay room (or a virtual card), to the display unit 151. In this instance, the GUI 2400 may include information 2410 of members belonging to the pay room.

If a use authority of the virtual card is transferred to the second user B according to the former description with reference to FIG. 23, the controller 180 of the mobile terminal 100 can display an information, which is provided to indicate that the use authority of the virtual card has been transferred to the second user B, on the GUI 2400.

For instance, the information 2411 corresponding to the second user B may be located ahead of the information 2420 corresponding to other users A and C. Moreover, the information indicating that the use authority of the virtual card has been transferred to the second user B may be displayed on or near the information 2411 corresponding to the second user B and may include an indicator 2412 indicating that the use authority of the virtual card has been transferred to the second user B. Moreover, the GUI 2400 may further include a history information of the virtual card. And, information (e.g., authority transferred date, authority nominee, etc.) indicating that the use authority of the virtual card has been transferred to the second user B can be included in the history information 2430.

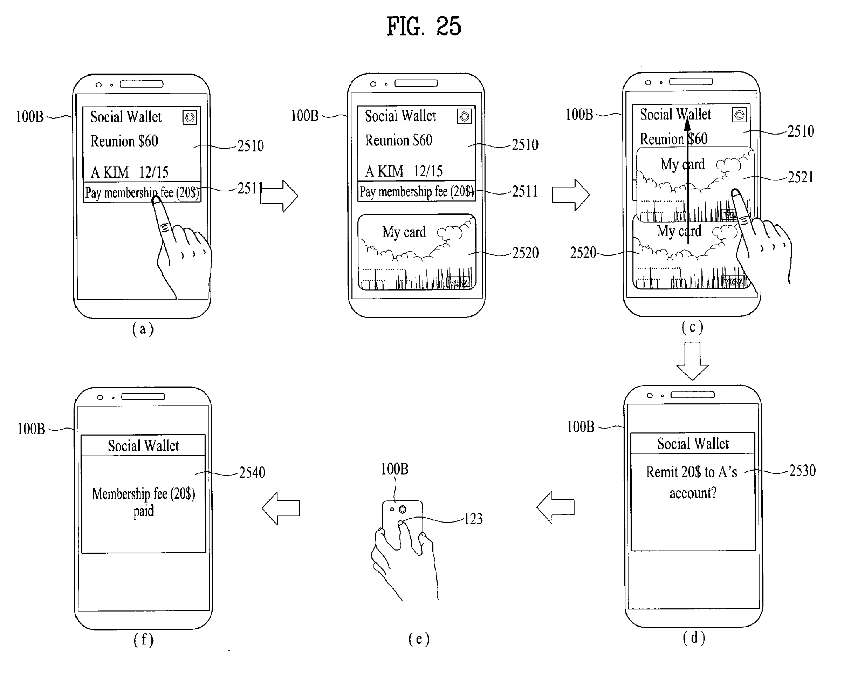

FIG. 25 is a diagram illustrating another example of a method of making a payment of a membership fee in a mobile terminal of a non-master member according to one embodiment of the present invention. Referring to FIG. 25(a), the controller 180 of the second mobile terminal 100B accepts a participation of the second user B as a member of a pay room. If a virtual card is created by the first user A corresponding to a master member, the controller 180 of the second mobile terminal 100B can display a card GUI 2510 corresponding to the created virtual card to the display unit 151. Since the card GUI 2510 displayed on the mobile terminal 100 corresponding to a non-master member is similar to that described with reference to FIG. 11, its details shall be omitted from the following description.

According to an embodiment, the card GUI 2510 may further include a membership pay menu 2510 for paying a membership fee corresponding to the second user B. Besides, the second user B can check a membership fee collection history and a membership fee use history through the card GUI 2510.

Referring to FIG. 25 (b), in response to a command for selecting the membership fee pay menu 2510, the controller 180 of the second mobile terminal 100B can output a card GUI 2520 corresponding to a card of the second user B previously registered at the payment service server 510 to the display unit 151. In this instance, the card of the second user B may include one of a debit card, a check card, a cash card, a credit card and the like. Using the card corresponding to the card GUI 2520, the second user B can make a payment of a membership fee assigned to the second user B (i.e., pay the membership fee).

Referring to FIG. 25 (c), using the card corresponding to the card GUI 2520, the controller 180 of the second mobile terminal 100B can detect a preset command for making a payment of a membership fee assigned to the second user B. For instance, the preset command may include a command for touching the card GUI 2520 and dragging a region corresponding to the card GUI 2510. In response to the preset command, the controller 180 of the second mobile terminal 100B can apply a visual effect as if an image 2521 corresponding to the card GUI 2520 moves onto the card GUI 2510 from the card GUI 2520.

Referring to FIG. 25 (d), the controller 180 of the second mobile terminal 100B can output a message 2530, which is provided to check whether to pay the membership fee corresponding to the second user B, to the display unit 151 in response to the preset command. Referring to FIG. 25 (e), the second user B can input a security information, which is required for paying a membership fee using a card corresponding to the card GUI 2520, to the second mobile terminal 100B. For instance, if the security information is a preset fingerprint information, the controller 180 of the second mobile terminal 100B activates a fingerprint recognition sensor provided to the user input unit 123 and can then check whether a fingerprint information input through the user input unit 123 matches a previously registered fingerprint information.

If the fingerprint information input through the user input unit 123 matches the previously registered fingerprint information, the controller 180 of the second mobile terminal 100B can control the wireless communication unit 110 to send a corresponding result to the payment service server 510. Subsequently, the payment service server 510 can send an information, which is required for remitting an amount corresponding to the membership fee to an account of the first user A interconnected to the card GUI 2510 from an account connected to the card corresponding to the card GUI 2520, to the financial company server 520. Subsequently, the financial company server 520 can send a remittance result of the amount corresponding to the membership fee to the payment service server 510. And, the payment service server 510 can send the remittance result to the second mobile terminal 100B.

Referring to FIG. 25 (f), based on the remittance result, the controller 180 of the second mobile terminal 100B can display a notification message 2540, which indicates that the membership fee of the second user B has been paid, on the display unit 151.

According to an embodiment, the controller 180 of the second mobile terminal 100B may display a menu option, which is provided to select whether to pay the membership fee automatically using the card corresponding to the card GUI 2250 by preset membership fee collection periods, on the display unit 151. According to an embodiment, by preset membership fee collection periods, the controller 180 of the second mobile terminal 100B may display an announcement message, which is provided to guide a user to pay a membership fee, on the display unit 151.

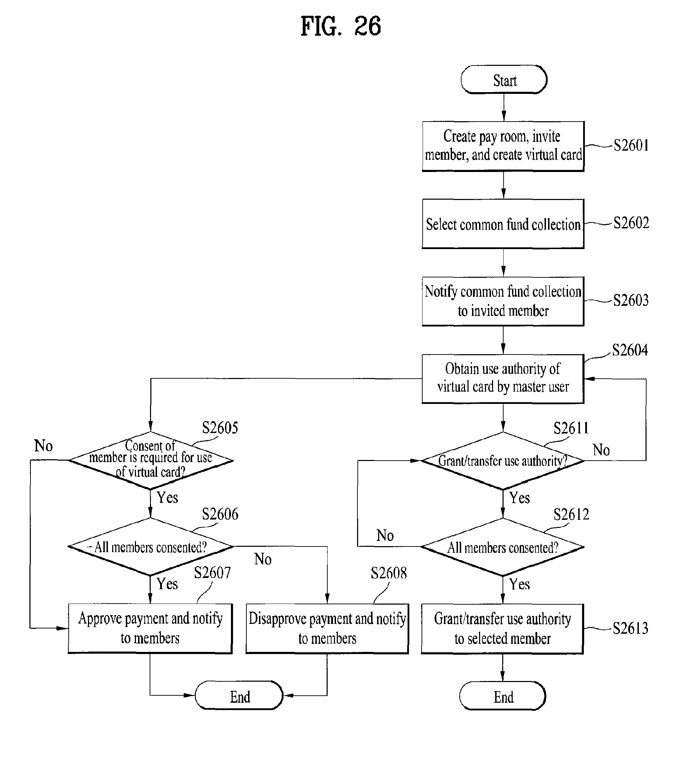

FIG. 26 is a flowchart illustrating one example of a method of controlling a mobile terminal according to one embodiment of the present invention. Referring to FIG. 26, using a specific application, the controller 180 of the first mobile terminal 100A creates a pay room and can then invite a member to the pay room (S2601). Subsequently, the controller 180 of the first mobile terminal 100A can create a virtual card corresponding to the pay room. An interface for the creation and administration of the pay room and an interface for the creation and administration of the virtual card can be provided by the payment service server 510 that operates the specific application.

The first user A of the first mobile terminal 100A can select a menu for collecting a common fund (membership fees) through a GUI corresponding to the pay room (or the virtual card) (S2602). In response to a command for collecting the common fund, the controller 180 of the first mobile terminal 100A can send a signal, which requests to pay a membership fee of a prescribed amount, to the mobile terminal corresponding to each member belonging to the pay room (S2603).

Meanwhile, the first user A of the first mobile terminal 100A is a master member of the pay room and can obtain a use authority of the created virtual card (S2604). In particular, the first user A of the first mobile terminal 100A can make a payment of a prescribed amount online or offline using the virtual card.

According to an embodiment, when the first user A of the first mobile terminal 100A needs consents of other members in using the virtual card (S2605, Yes), the first mobile terminal 100A can send a signal for requesting a consent to the use of the virtual card to the mobile terminals 100 corresponding to other members.

If signals of consents to the use of the virtual card are received from the mobile terminals 100 corresponding to other members (S2606, Yes), the payment service server 510 approves the payment of the prescribed amount through the virtual card and can then send a payment approval result to the mobile terminals 100 corresponding to all members (S2607).

Further, if a signal of not consenting to the use of the virtual card is received at least one of the mobile terminals 100 corresponding to other members (S2606, No), the payment service server 510 disapproves the payment of the prescribed amount through the virtual card and can send a payment disapproval result to the mobile terminals 100 corresponding to all members (S2608).

Meanwhile, when the first user A of the first mobile terminal 100A uses the virtual card, if consents of other members are not required (S2605, No), the payment service server 510 approves the payment of the prescribed amount through the virtual card and can send a payment approval result to the mobile terminals 100 corresponding to all members (S2607).

Meanwhile, a use authority of the virtual card may be granted to other members corresponding to non-master members temporarily or permanently or may be transferred to other members corresponding to non-master members. If the first user A selects the grant or transfer of the use authority of the virtual card to another member (S2611, Yes), the controller 180 of the first mobile terminal 100A can send a signal for seeking a consent to the mobile terminals 100 corresponding to all other members except the mast member.

If a signal of consenting to the grant or transfer of the use authority of the virtual card is received from each of the mobile terminals 100 corresponding to all other members except the master member (S2612, Yes), the controller 180 of the first mobile terminal 100A can send at least one portion of the information of the virtual card to the mobile terminal 100 of the member who will receive the use authority (S2613). Such information of the virtual card may be set to the mobile terminal 100 of the use authority receiving member from the first mobile terminal 100A through the payment service server 510. And, the payment service server 510 may grant or transfer the use authority of the virtual card to the use authority receiving member.

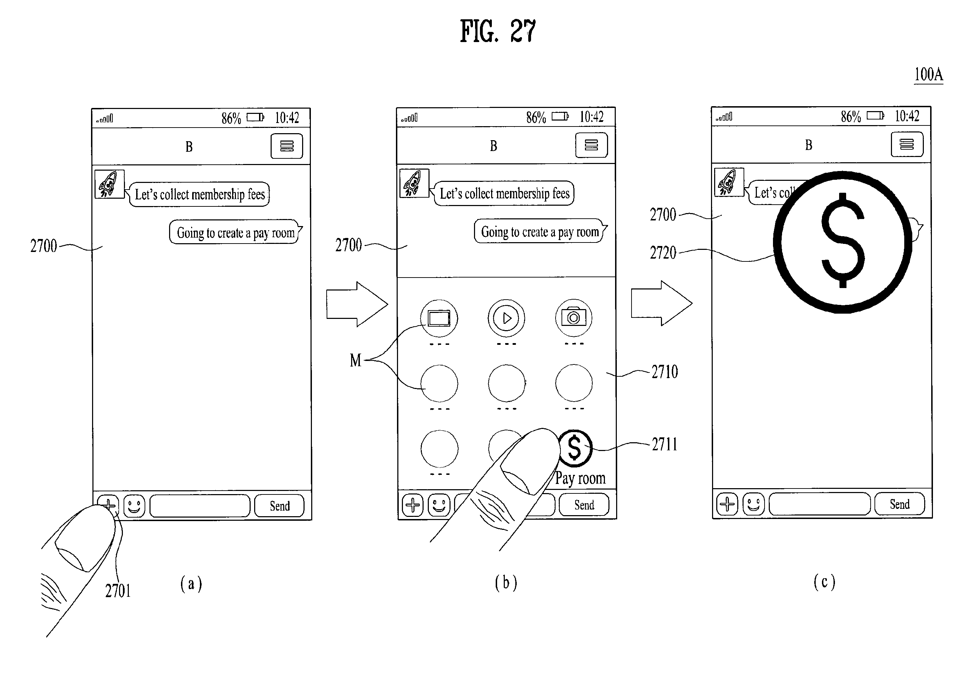

FIG. 27 is a diagram illustrating one example of a method of creating a pay room for collecting/administering a common fund in a mobile terminal according to one embodiment of the present invention. Referring to FIG. 27 (a), the controller 180 of the first mobile terminal 100A outputs a running screen 2700 of a specific application to the display unit 151. In this instance, the specific application may include a messenger application supportive of a common fund administration service (or a mobile payment service) and the running screen 2700 may include a screen corresponding to a chat room created using the messenger application for a chat with the second user B.

If the specific application is run, a screen output to the display unit 151 and available functions may be based on an interface provided by the payment service server configured to administer the specific application. The first user A can select a menu option 2701 for selecting a function of the specific applicable available for the chat room.

Referring to FIG. 27 (b), in response to a command for selecting the menu option 2701, the controller 180 of the first mobile terminal 100A can output a GUI 2710 including menu options M corresponding to the functions of the specific application available for the chat room to the running screen 2700. In this instance, the GUI 2710 may include a menu option 2711 corresponding to a pay room creation function for collecting a common fund.

Referring to FIG. 27 (c), in response to a command for selecting the menu option 2711, the controller 180 of the first mobile terminal 100A can output a GUI 2720 corresponding to the pay room created to collect the common fund to the running screen 2700 including the chat room. For instance, the GUI 2720 may be output by overlaying the running screen 2700. And, a position or size of the GUI 2720 may be changed within the running screen 2700.

According to an embodiment, members belonging to (or associated with) the pay room may include the first user A and the second user B currently participating in the chat room. In this instance, the first user A may be a master member of the pay room and the second user B may be a non-master member of the pay room. Moreover, according to an embodiment, when the pay room is created, only if the second user A consents to become a member of the pay room, the second user A can belong as a member to the pay room.

In response to a command for selecting the menu option 2711, the payment service server 510 creates the pay room for collecting the common fund and can send an information of the created pay room to the first mobile terminal 100A. And, the payment service server 510 can connect the created pay room to a financial information of the first user A who is the master member. For instance, the payment service server 510 can interconnect the pay room to a previously saved information of a specific account of the first user A.

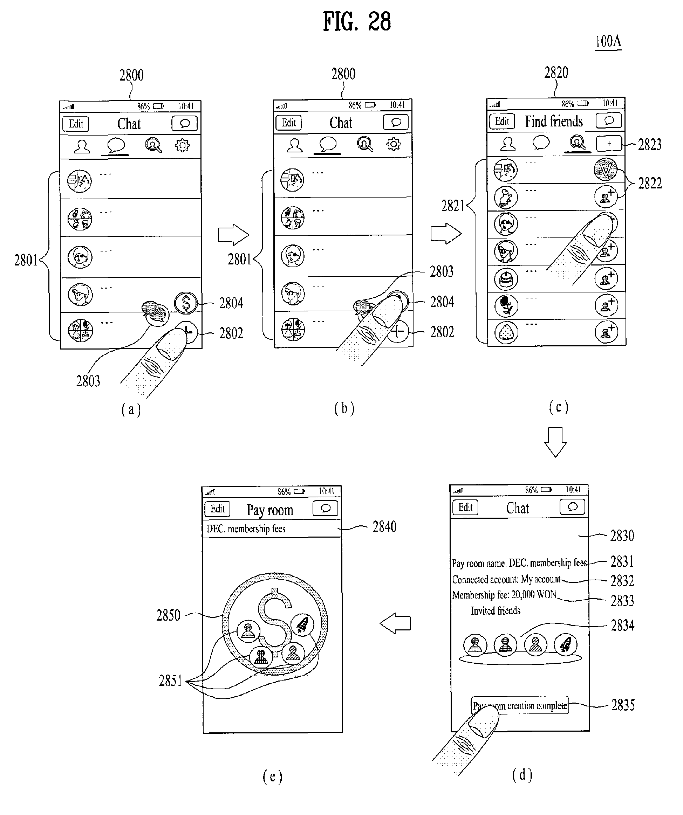

FIG. 28 is a diagram illustrating another example of a method of creating a pay room for administering a common fund in a mobile terminal according to one embodiment of the present invention. Referring to FIG. 28 (a), the controller 180 of the first mobile terminal 100A outputs a running screen 2800 of a specific application to the display unit 151. In this instance, the specific application may include a messenger application supportive of a common fund administration service (or a mobile payment service) and the running screen 2800 may include a list 2801 of at least one chat room and at least one pay room created using the messenger application.

The first user A can select a menu option 2802 for selecting an available function of the specific application from the running screen 2800 including the list 2801 of the chat/pay room(s). In response to a command for selecting the menu option 2802, the controller 180 of the first mobile terminal 100A can output a first icon 2803 corresponding to a function for creating a new chat room and a second icon 2804 corresponding to a function for creating a new pay room to the running screen 2800.

Yet, the menu option 2802, the first icon 2803 and the second icon 2804 shown in FIG. 28 (a) are exemplarily provided only. And, menu options/icons of other types corresponding to the function for creating a new pay room may be output to the display unit 151.

Referring to FIG. 28 (b), the first user A can select the second icon 2804 corresponding to the function for creating a new pay room. Referring to FIG. 28(c), in response to a command for selecting the second icon 2804, the controller 180 of the first user A can output a running screen 2820 including a list 2821 of friends, who use the specific application, to the display unit 151. In this instance, the running screen 2820 may include check boxes 2822 for selecting members to invite to the pay room from the friends who use the specific application. The first user A touches the check box 2822 corresponding to a member, who will be invited to a pay room to be newly created, among the friends who use the specific application and then selects an icon 2823 corresponding to a pay room creation command, thereby selecting a member to invite to the pay room.

Referring to FIG. 28 (d), in response to a command for selecting the icon 2823, the controller 180 of the first mobile terminal 100A can display a running screen 2830, which includes a menu region for inputting an information of a pay room to be created, to the display unit 151. For instance, the running screen 2830 may include at least one of a first menu region 2831 for inputting a name of a pay room, a second menu region 2832 for inputting an account to be connected to the pay room, a third menu region 2833 for inputting a membership fee to collect from each member, and a fourth menu region 2834 for displaying information of invited members.

The first user A may input a name of a pay room to the first menu region 2831 using a virtual keyboard, may select an account to connect a pay room to be created from accounts previously registered at the payment service server 510 through the second menu region 2832, and may input a membership fee to collect through the third menu region 2833.

In response to a command for selecting a menu 2835 corresponding to the command for creating a pay room using the information input to the running screen 2830, the controller 180 of the first mobile terminal 100A may create the pay room. Alternatively, in response to a command for selecting a menu 2835 corresponding to the command for creating a pay room using the information input to the running screen 2830, the controller 180 of the first mobile terminal 100A may control the wireless communication unit 110 to send a signal for requesting a pay room creation to the payment service server 510. Subsequently, the payment service server 510 can create the pay room based on the signal.

Referring to FIG. 28 (e), the controller 180 of the first mobile terminal 100A can output a running screen 2840 including a GUI 2850 corresponding to the created pay room to the display unit 151. According to the present embodiment, the pay room may be created independently from the chat room. And, the GUI 2850 may include information 2851 of members belonging to (or associated with) the chat room.

According to an embodiment, when the pay room is created, only if each invited member consents to become a member of the pay room, the corresponding invited member can belong as a member to the pay room.

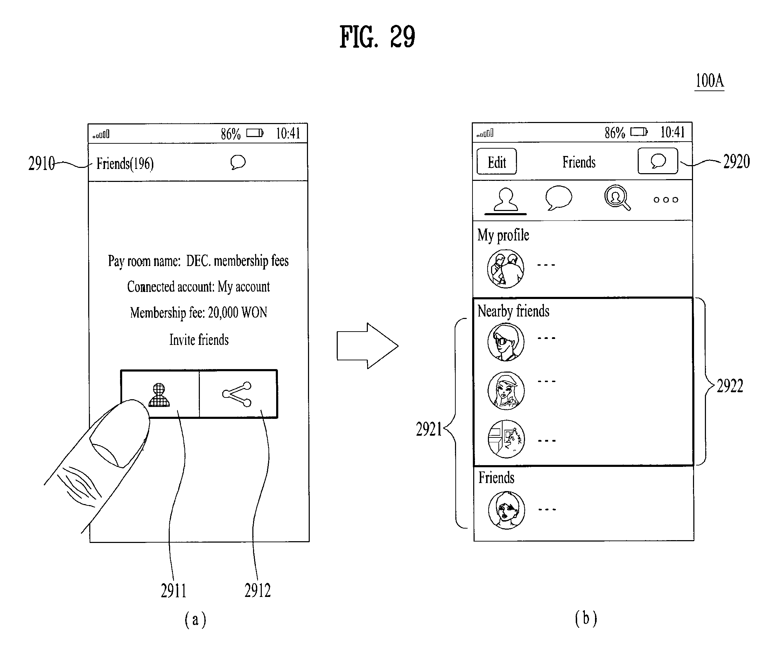

FIG. 29 is a diagram illustrating another example of a method of creating a pay room for administering a common fund in a mobile terminal according to one embodiment of the present invention. Referring to FIG. 29 (a), in response to a command for selecting a function for creating a new chat room, the controller 180 of the first mobile terminal 100A can output a first running screen 2910 to the display unit 151.

For instance, the first running screen 2910 may include a first menu option 2911 for selecting a member to invite to a pay room from a list of friends using a specific application and a second menu option 2912 for inviting a member to a pay room using a different method other than the list of friends using the specific application. According to the present embodiment, assume that the first user A selects the first menu option 2911.

Referring to FIG. 29 (b), in response to a command for selecting the first menu option 2911, the controller 180 of the first mobile terminal 100A can output a second running screen 2920 to the display unit 151. The second running screen 2920 may include a list 2921 of the friends who use the specific application. In this instance, the controller 180 of the first mobile terminal 100A can control a list 2922 of friends, who correspond to the mobile terminals 100 near the first mobile terminal 100A among the friends using the specific application, to be preferentially disposed within the list 2921.

For instance, in response to a command for selecting the first menu option 2911, the controller 180 of the first mobile terminal 100A activates the short range communication module 114 within the wireless communication unit 110, searches (or discovers) external devices available for communications using the short range communication module 114, extracts the mobile terminals 100 corresponding to the friends using the specific application from the found (or discovered) external devices, and can then place the list 2922 of the friends corresponding to the extracted mobile terminals 100 among the friends using the specific application above a list of other friends within the list 2921. Moreover, according to an embodiment, the controller 180 of the first mobile terminal 100A can preferentially extract the mobile terminal having a history of connection of a short range4 communication with the first mobile terminal 100A from the discovered external devices.

Using the list 2921 included in the running screen 2920, the first user A can select a member to invite to the pay room. According to the present embodiment, since members from whom the common fund will be collected are mostly located near the master member, it is advantageous in that a user can select a member more easily and conveniently.

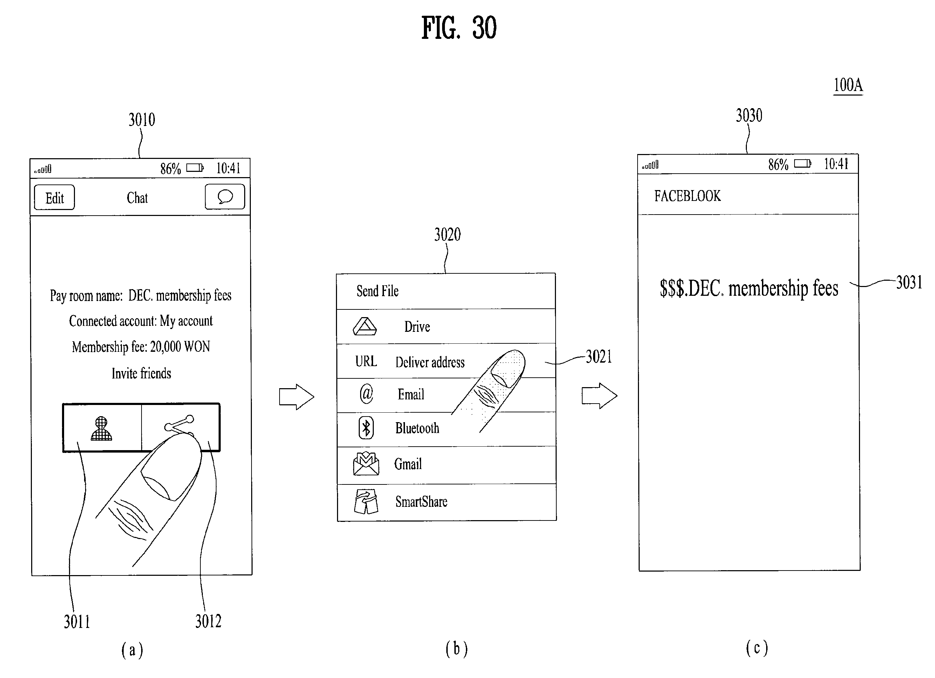

FIG. 30 is a diagram illustrating another example of a method of creating a pay room for administering a common fund in a mobile terminal according to one embodiment of the present invention. Referring to FIG. 30 (a), in response to a command for selecting a function for creating a new chat room, the controller 180 of the first mobile terminal 100A can output a first running screen 3010 to the display unit 151.

For instance, the first running screen 3010 may include a first menu option 3011 for selecting a member to invite to a pay room from a list of friends using a specific application and a second menu option 3012 for sharing an information of a pay room to be created with an external server or an external device. According to the present embodiment, assume that the first user A selects the second menu option 3012.

Referring to FIG. 30 (b), in response to a command for selecting the second menu option 3012, the controller 180 of the first mobile terminal 100A can output a GUI 3020 for selecting the external server or device, with which the information of the pay room to be created will be shared, to the display unit 151. Further, the GUI 3020 may be output by overlaying the first running screen 3010. The GUI 3020 may include a menu option 3021, which is provided to share an address information corresponding to the pay room to be created with the external server. For instance, the address information corresponding to the pay room may include a URL (uniform resource locator) address accessible to the pay room.

Referring to FIG. 30 (c), in response to a command for selecting the menu option 3021, the controller 180 of the first mobile terminal 100A outputs a running screen 3030 using an interface provided by a preset external server to the display unit 151 and can then share an address information 3031 corresponding to the pay room with the running screen 3030. The payment service server 510 creates a pay room and can create an address information corresponding to the created pay room. According to an embodiment, before outputting the running screen 3030 to the display unit 151, the controller 180 of the first mobile terminal 100A may output a GUI, which is provided to select a specific external server/device to share the address information 3031 corresponding to the pay room with, to the display unit 151.

A party intending to participate in the pay room can participate as a member of the pay room by accessing the pay room using the shared address information 3031 corresponding to the pay room.

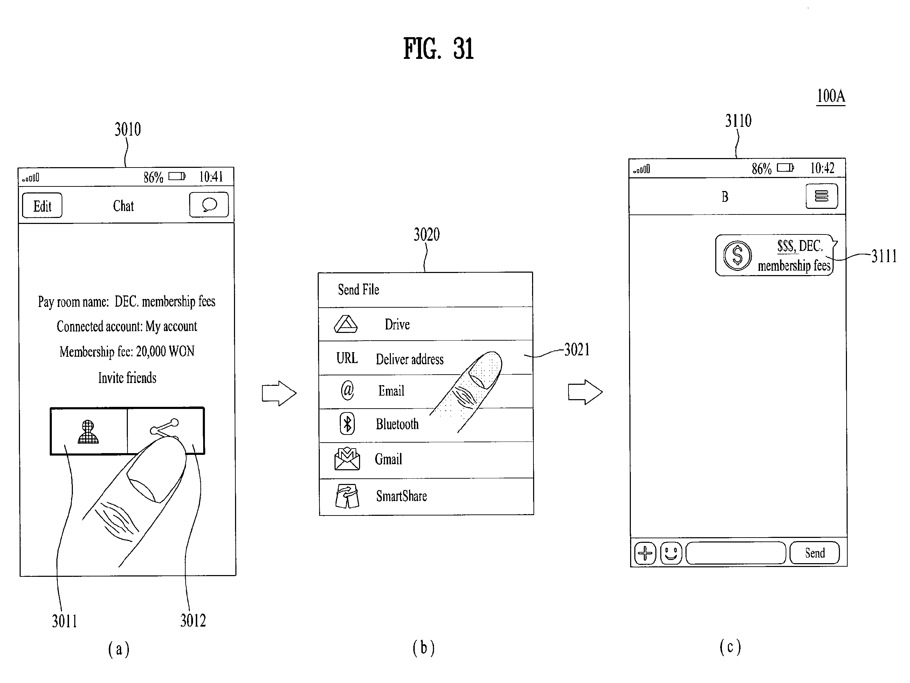

FIG. 31 is a diagram illustrating another example of a method of creating a pay room for administering a common fund in a mobile terminal according to one embodiment of the present invention. Since the description with reference to FIG. 31 (a) and FIG. 31 (b) is similar to that with reference to FIG. 30 (a) and FIG. 30 (b), its details shall be omitted from the following description.

Referring to FIG. 31 (c), in response to a command for selecting the menu option 3021, the controller 180 of the first mobile terminal 100A can control the wireless communication unit 110 to send an address information corresponding to the pay room to the mobile terminal 100 corresponding to a preset friend among friends who use a specific application. Further, the address information corresponding to the pay room may be sent to the mobile terminal 100 of the preset friend through the payment service server 510. A friend corresponding to the mobile terminal 100 to receive the address information corresponding to the pay room may be selected by a method similar to that described with reference to FIG. 8 (c) or FIG. 9 (b). The payment service server 510 can create a chat room in the relation between the friend to receive the address information corresponding to the pay room and the first user A.

The controller 180 of the first mobile terminal 100A outputs a screen 3110 of the created chat window to the display unit 151 and can display a chat window 3111 containing the address information corresponding to the pay room within the screen 3110. A friend intending to participate in the pay room can participate as a member of the pay room by accessing the pay room using the d address information corresponding to the pay room.

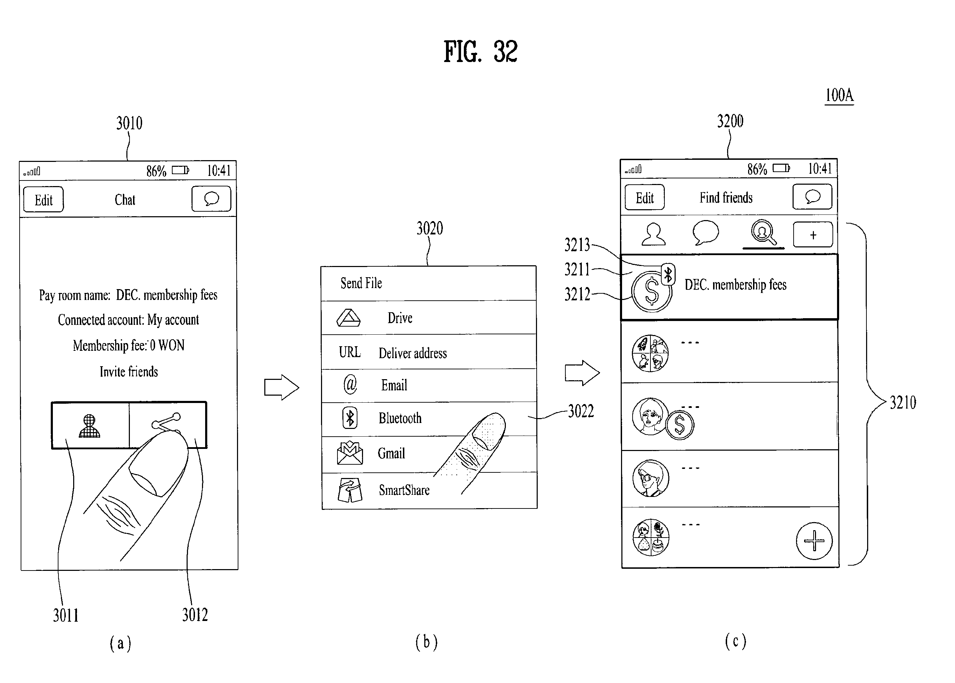

FIG. 32 is a diagram illustrating another example of a method of creating a pay room for administering a common fund in a mobile terminal according to one embodiment of the present invention. Since the description with reference to FIG. 32 (a) is similar to that with reference to FIG. 10 (a), its details shall be omitted from the following description.

Referring to FIG. 32 (b), in response to a command for selecting the second menu option 3012, the controller 180 of the first mobile terminal 100A can output a GUI 3020 for selecting an external server or device, with which an information of a pay room to be created will be shared, to the display unit 151. Further, the GUI 3020 may be output by overlaying the first running screen 3010. The GUI 3020 may include a menu option 3022 corresponding to a function for enabling the external device to search for the pay room to be created using a short range communication. For instance, the external device can search for a chat room opened by the first user A using Bluetooth communications.

In response to a command for selecting the menu option 3022, the payment service server 510 creates a pay room and can send an information corresponding to the created pay room to the first mobile terminal 100A. Referring to FIG. 32 (c), the controller 180 of the first mobile terminal 100A activates the short range communication module 114 and can then control the short range communication module 114 to send a signal containing data required for the external device to search for the pay room through a short range communication.

And, the controller 180 of the first mobile terminal 100A can output a running screen 3200 of a specific application to the display unit 151. The running screen 3200 may include a list 3210 of chat/pay rooms created using the specific application. The controller 180 of the first mobile terminal 100A can display an item 3211 corresponding to the created pay room on the list 3210. For instance, the item 3211 may include at least one of an indicator 3212 indicating that the item 3211 relates to the pay room and an indicator 3213 indicating that the external device can search for the pay room through the short range communication.

A party existing in a range capable of a short range communication with the first mobile terminal 100A activates the short range communication module 114 of the mobile terminal 100 of its own and then searches for the pay room by the short range communication, thereby participating as a member of the pay room.

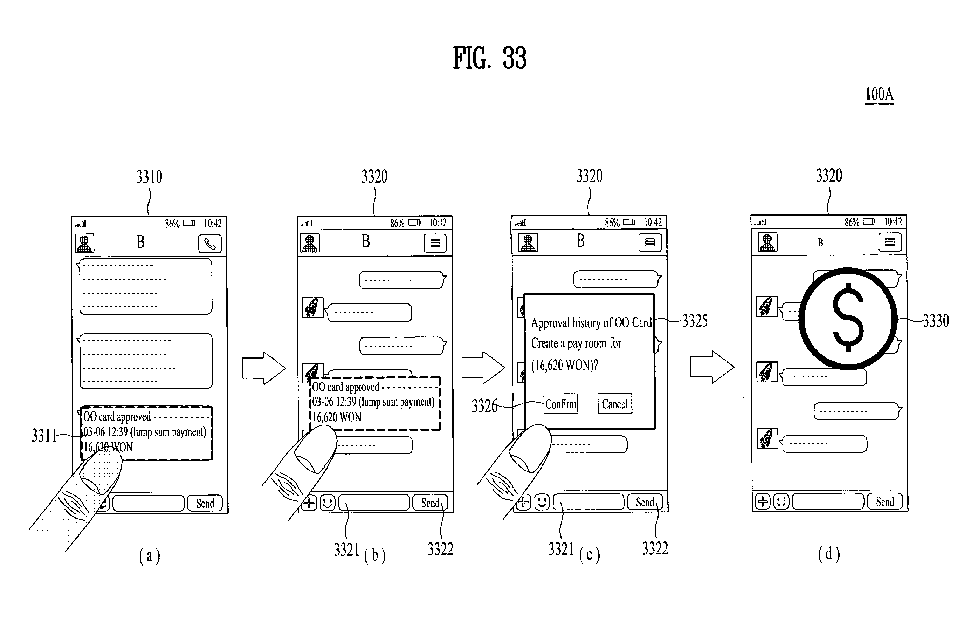

FIG. 33 is a diagram illustrating further example of a method of creating a pay room for administering a common fund in a mobile terminal according to one embodiment of the present invention. Referring to FIG. 33 (a), the controller 180 of the first mobile terminal 100A outputs a running screen 3310 of a first application to the display unit 151. In this instance, the first application is an application capable of displaying a history of payment approvals performed online or offline and may include one of a text message application capable of displaying a payment approval history of a specific card or a deposit/withdrawal history of a specific account, a financial application capable of displaying a payment approval history of a specific card or a deposit/withdrawal history of a specific account, a gallery application capable of storing an image containing a payment approval history of a specific card or a deposit/withdrawal history of a specific account, and the like.

According to the present embodiment, the first application may include the text message application and the running screen 3310 may contain a history of text messages exchanged with an external device or an external server through the first application. For instance, the running screen 3310 is assumed as including a text message 3311 containing a history of approval of a payment of a prescribed amount using a specific card.

The first user A can copy a content of the text message 3311. For instance, if a command of touching the text message 3311 over a preset time is detected, the controller 180 of the first mobile terminal 100A displays a GUI corresponding to a function of copying the content of the text message 3311 on the display unit 151. If the function of copying the content of the text message 3311 is selected through the GUI, the controller 180 of the first mobile terminal 100A can temporarily save the content of the text message 3311 to the memory 170. According to an embodiment, the GUI may include a menu for copying the content of the text message 3311, a menu for delivering the content of the text message 3311 to an external device, a menu for creating a pay room for collecting an amount corresponding to the content of the text message 3311, and the like.

Referring to FIG. 33 (b), in response to a selection made by the first user A, the controller 180 of the first mobile terminal 100A outputs a running screen 3320 of a second application to the display unit 151. In this instance, the second application may include a messenger application supportive of a common fund administration service (or a mobile payment service). And, the running screen 3320 may correspond to a chat room with the second user B among friends who use the second application.

The first user A can paste the copied content of the text message 3311 into a preset region 3321 within the running screen 3320. For instance, if a command of touching the preset region 3321 over a preset time is detected, the controller 180 of the first mobile terminal 100A displays a GUI corresponding to the function for pasting the copied content of the text message 3311 on the display unit 151. If the function for pasting the copied content of the text message 3311 is selected through the GUI, the controller 180 of the first mobile terminal 100A can display the copied content of the text message 3311 on the preset region 3321.

Referring to FIG. 33 (c), if the copied content of the text message 3311 is pasted into the running screen 3320, the controller 180 of the first mobile terminal 100A may display a message 3325, which is provided to check whether a pay room for collecting a prescribed amount corresponding to the content of the text message 3311, on the display unit 151.

Referring to FIG. 33 (d), in response to a preset command, the controller 180 of the first mobile terminal 100A can output a GUI 3330, which corresponds to the pay room created to collect the prescribed amount corresponding to the content of the text message 3311, to the running screen 3320. For instance, the preset command may correspond to a command for selecting a send menu 3322 in the running screen 3320 shown in FIG. 33 (b). In another instance, the preset command may correspond to a command for selecting a confirm menu 3326 in the message 3325. And, the GUI 3330 may be output by overlaying the chat room.

In response to the preset command, the payment service server 510 receives at least one portion of the content of the text message 3311 from the first mobile terminal 100A, creates the pay room for collecting the prescribed amount corresponding to the content of the text message 3311, and can then send an information of the created pay room to the first mobile terminal 100A.

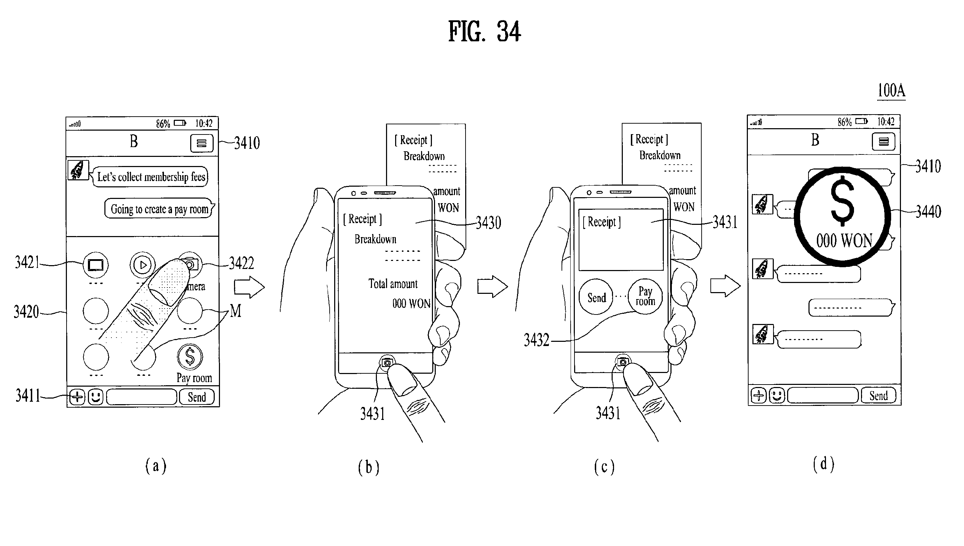

FIG. 34 is a diagram illustrating another further example of a method of creating a pay room for collecting/administering a common fund in a mobile terminal according to one embodiment of the present invention. Referring to FIG. 34 (a), the controller 180 of the first mobile terminal 100A outputs a running screen 3410 of a specific application to the display unit 151. In this instance, the specific application may include a messenger application supportive of a common fund administration service (or a mobile payment service) and the running screen 3410 may include a screen corresponding to a chat room created to have a chat with the second user B using the messenger application.

The first user A can select a menu option 3411 for selecting a function of the specific application usable in the chat room. In response to a command for selecting the menu option 3411, the controller 180 of the first mobile terminal 100A can output a GUI 3420, which includes menu options M corresponding to functions of the specific application usable for the chat room, to the running screen 3410. In this instance, the GUI 3420 may include a first option 3421 for launching a gallery application and a second menu option 3422 for launching a camera application. According to the present embodiment, assume that the first user A selects the second menu option 3422 from the GUI 3420.

Referring to FIG. 34 (b), in response to a command for selecting the second menu option 3422, the controller 180 of the first mobile terminal 100A activates the camera 121 and can then output a preview image 3430 obtained by the camera 121 to the display unit 151.

In response to a command for selecting a menu 3431 corresponding to a shot command, the controller 180 of the first mobile terminal 100A captures the preview image 3430 output to the display unit 151 and can then save the captured image 3431 to the memory 170. According to the present embodiment, assume that the first user A photographs a receipt containing a history of approval of a payment of a prescribed amount using a specific card using the camera 121.

Referring to FIG. 34 (c), the controller 180 of the first mobile terminal 100A outputs the captured image 3431 to the display unit 151 and can display a menu option corresponding to an additional function related to the captured image 3431 on the display unit 151. For instance, the menu option may include a menu for modifying the captured image 3431, a menu for sending the captured image 3431, a menu for sharing the captured image 3431 with an external device, a menu for creating a pay room corresponding to the captured image 3431, and the like. Assume that the first user A selects the menu 3432 for creating a pay room corresponding to the captured image 3431 from the menu option.

In response to a command for selecting the menu 3432, the controller 180 of the first mobile terminal 100A can extract an amount information corresponding to the prescribed amount by analyzing the captured image 3431. For instance, the controller 180 of the first mobile terminal 100A detects a text information contained in the captured image 3431 using an OCR (optical character recognition) scheme and can then extract the amount information from the detected text information.

Referring to FIG. 34 (d), in response to a preset command, the controller 180 of the first mobile terminal 100A can output a GUI 3440 corresponding to the pay room to the running screen 3410 to collect an amount corresponding to the extracted amount information. For instance, the preset command may correspond to a command for selecting the menu for sending the obtained image shown in FIG. 34 (b). And, the GUI 3440 may be output by overlaying the chat room.

In response to the preset command, the payment service server 510 receives at least one portion of the amount information from the first mobile terminal 100A, creates a pay room for collecting the amount corresponding to the amount information, and can then send an information of the created pay room to the first mobile terminal 100A.

Although a case for the first user A to take an image including an amount information using the camera 121 is taken as an example for the description with reference to FIG. 34, the present embodiment is applicable to when the first user A sends an image including an amount information among images previously stored in the memory 170 to the chat room.

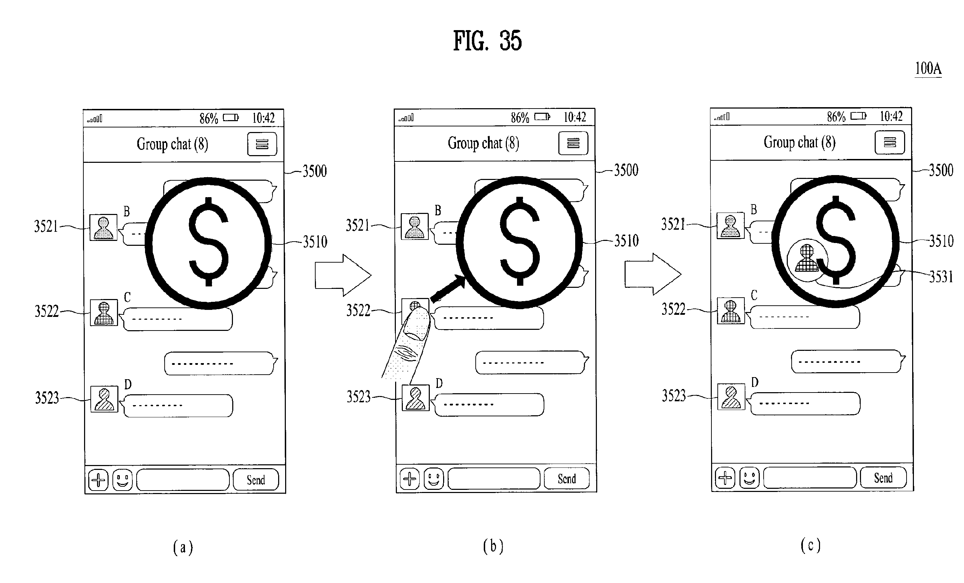

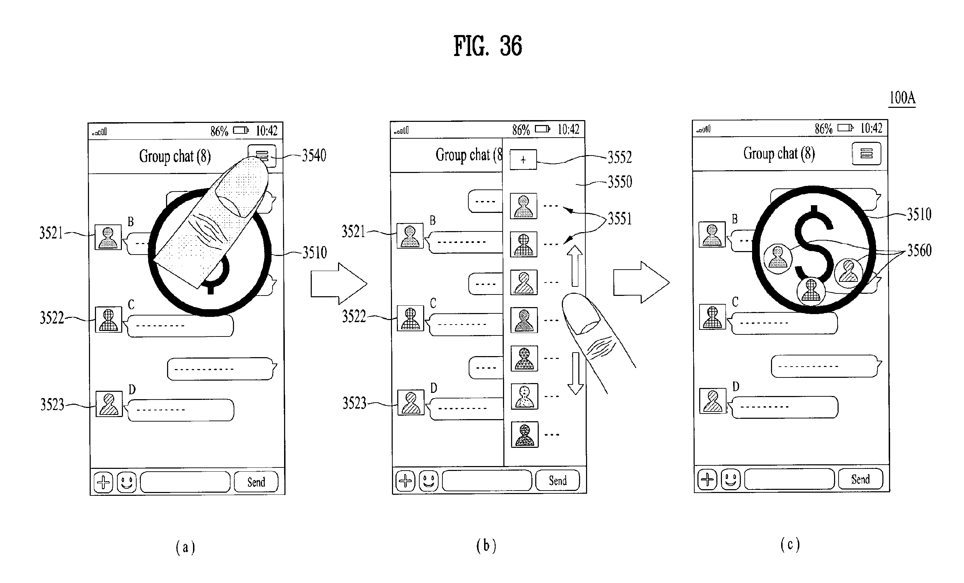

Meanwhile, according to one embodiment of the present invention, after a member to be invited to a pay room has been selected, the pay room can be created. Alternatively, a pay room may be created without a separate selection when a member to be invited to the pay room is already determined. After the pay room has been created, a member to be invited to the pay room may be selected or edited. In the following description, examples of a method of selecting/editing a member to invite to a pay room after creating the pay room are described with reference to FIG. 35 and FIG. 36.

FIG. 35 is a diagram illustrating one example of a method of selecting/editing a member to invite to a pay room after creating the pay room in a mobile terminal according to one embodiment of the present invention. Referring to FIG. 35 (a), the controller 180 of the first mobile terminal 100A outputs a running screen 3500 of a specific application to the display unit 151. In this instance, the specific application may include a messenger application supportive of a common fund administration service (or a mobile payment service) and the running screen 3500 may include a screen corresponding to a group chat room created using the messenger application to have at least two friends belong thereto.

The running screen 3500 may include a GUI 3510 corresponding to a pay room created to collect a common fund. The GUI 3510 may be output by overlaying the running screen 3500. Assume that no one belongs as a non-master member to the created pay room currently. Moreover, the running screen 3500 includes information 3521, 3522 and 3523 of friends participating in the chat among the at least two friends belonging to the group chat room.

Referring to FIG. 35 (b), after the first user A has selected the information (e.g., the information 3522 of the second user B) corresponding to a friend to invite to the pay room from the information 3521, 3522 and 3523 included in the running screen 3500, the first user A can invite the second user B as a member of the pay room by drag & drop. The controller 180 of the first mobile terminal 100A can output a visual effect, which shows that the information 3522 of the second user B moves on the running screen 3500 in response to a selection made by the first user A, through the display unit 151.

Referring to FIG. 35 (c), if the second user B is invited as the member of the pay room, the controller 180 of the first mobile terminal 100A can display an information 3531 of the second user B within the GUI 3510. Further, the information 3531 may be identical to the information 3522 or different from the information 3522 in at least one of a shape, a size, a type, a transparency, a color and the like.

Moreover, the first user A selects an information of a prescribed user included in the GUI 3510 and then places the selected information outside the GUI 3510 by drag & drop, thereby cancelling the invitation of the friend corresponding to the selected information of the prescribed user.

FIG. 36 is a diagram illustrating another example of a method of selecting/editing a member to invite to a pay room after creating the pay room in a mobile terminal according to one embodiment of the present invention. Details of the substances redundant with the former description with reference to FIG. 35 shall be omitted from the following description.

Referring to FIG. 36 (a), the controller 180 of the first mobile terminal 100A outputs a running screen 3500 of a specific application to the display unit 151. In this instance, the specific application may include a messenger application supportive of a common fund administration service (or a mobile payment service) and the running screen 3500 may include a screen corresponding to a group chat room created using the messenger application to have at least two friends belong thereto.

The running screen 3500 may include a GUI 3510 corresponding to a pay room created to collect a common fund. And, the running screen 3500 contains information 3521, 3522 and 3523 of friends participating in the chat among the at least two friends belonging to the group chat room. The first user A can select a menu option 3540 corresponding to a function for checking an information of a friend belonging to the group chat room.

Referring to FIG. 35 (b), in response to a command for selecting the menu option 3540, the controller 180 of the first mobile terminal 100A can output a GUI 3550 including an information 3551 of a friend belonging to the group chat room to the running screen 3500. After the first user A has selected the information 3551 of the friend to invite to the pay room from the information 3551 included in the GUI 3550, the first user A can select an icon 3552 corresponding to a friend invitation command.

Referring to FIG. 36 (c), the controller 180 of the first mobile terminal 100A can display an information 3560 of the friend invited to the pay room among the information 3551 of the friends included in the GUI 3550 within the GUI 3510 corresponding to the pay room. Further, the information 3560 may be identical to the information 3551 or different from the information 3551 in at least one of a shape, a size, a type, a transparency, a color and the like.

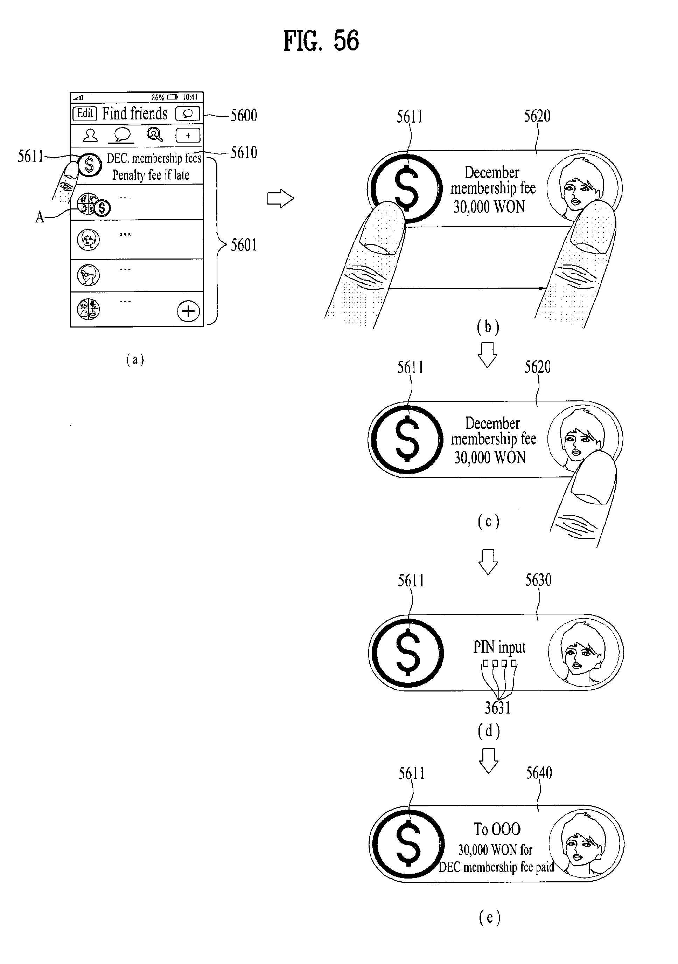

Moreover, the first user A selects an information of a prescribed user included in the GUI 3510 and then places the selected information outside the GUI 3510 by drag & drop, thereby cancelling the invitation of the friend corresponding to the selected information of the prescribed user. For instance, as described with reference to FIG. 35 and FIG. 36, if a pay room is created through a group chat room, the created pay room may be included in a list 5601 like a region A, which will be described with reference to FIG. 56.

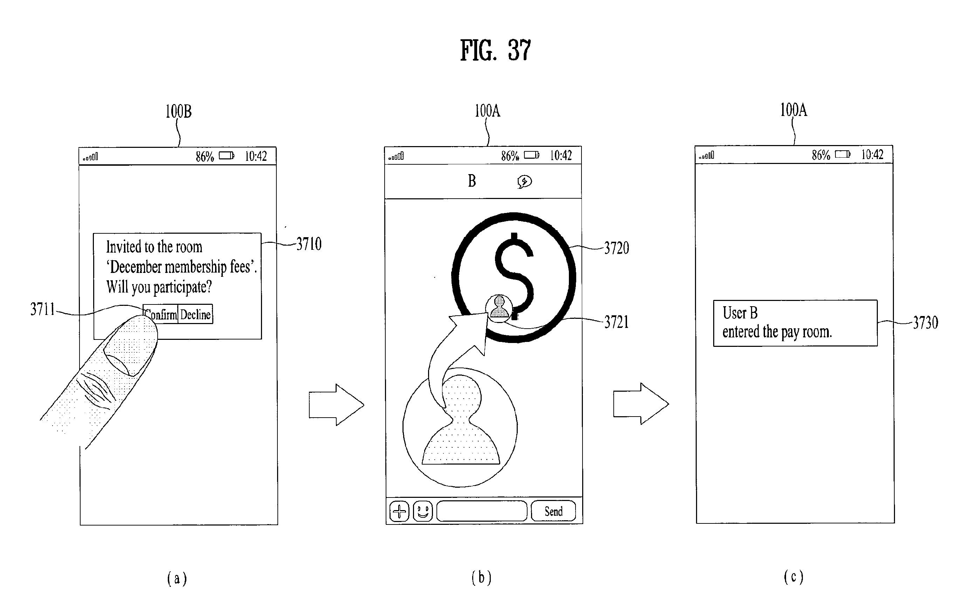

In the following description, examples of a method for a friend (or user) invited to a pay room to participate as a member of the pay room are described in detail with reference to FIGs. 37 to 39. FIG. 37 is a diagram illustrating one example of a method for a friend invited to a pay room to participate in as a member of the pay room in a mobile terminal according to one embodiment of the present invention.

First of all, as mentioned in the foregoing descriptions with reference to FIG. 27, FIG. 33 and FIG. 34, if a pay room is created, the payment service server 510 may recognize that a friend belonging to a corresponding chat room is automatically invited to the pay room. As mentioned in the foregoing descriptions with reference to FIG. 27, FIG. 33 and FIG. 34, after a pay room has been created, the payment service server 510 may recognize that a friend selected by the first user A from friends belonging to a corresponding chat room according to the procedure shown in FIG. 35 or FIG. 36 is invited to the pay room only. Moreover, as mentioned in the foregoing descriptions with reference to FIG. 28 and FIG. 29, if a pay room is created, the payment service server 510 may recognize that a friend selected by the first user A is invited to the pay room.

According to the present embodiment, assume that the first user A is a master member who opens a pay room. And, assume that the second user B is a friend invited as a non-master member to the pay room.

The first mobile terminal 100A or the payment service server 510 can send a first signal for indicating an invitation to the pay room to the second mobile terminal 100B corresponding to the second user B invited to the pay room. According to an embodiment, when a plurality of users are invited to the pay room, the first mobile terminal 100A or the payment service server 510 may send the first signal for indicating the invitation to the pay room to a mobile terminal corresponding to each user.

Referring to FIG. 37 (a), based on the first signal, the controller 180 of the second mobile terminal 100B can output an announcement message 3710, which is provided to check whether the invitation to the pay room will be accepted, to the display unit 151. In response to a command for selecting a confirm menu 3711 in the announcement message 3710, the controller 180 of the second mobile terminal 100B can control the wireless communication unit 110 to send a second signal indicating that the invitation to the pay room is accepted to the first mobile terminal 100A or the payment service server 510. Subsequently, based on the second signal, the payment service server 510 can register the second user B as a non-master member of the pay room.

Referring to FIG. 37 (b), in response to the second signal, the controller 180 of the first mobile terminal 100A can display an information 3721 of the second user B within a GUI 3729 corresponding to the pay room. Further, an animation effect may be applicable in a manner that the information 3721 of the second user B moves into an inside of the GUI 3720 from an outside of the GUI 3720. According to an embodiment, the present embodiment can be implemented in a manner that a friend (or user) invited to the pay room becomes a member of the pay room without a consent of the friend (or user).

According to an embodiment, referring to FIG. 37 (c), in response to the second signal, the controller 180 of the first mobile terminal 100A may output an announcement message 3730, which is provided to inform the first user A that the second user B has become the member of the pay room, to the display unit 151.

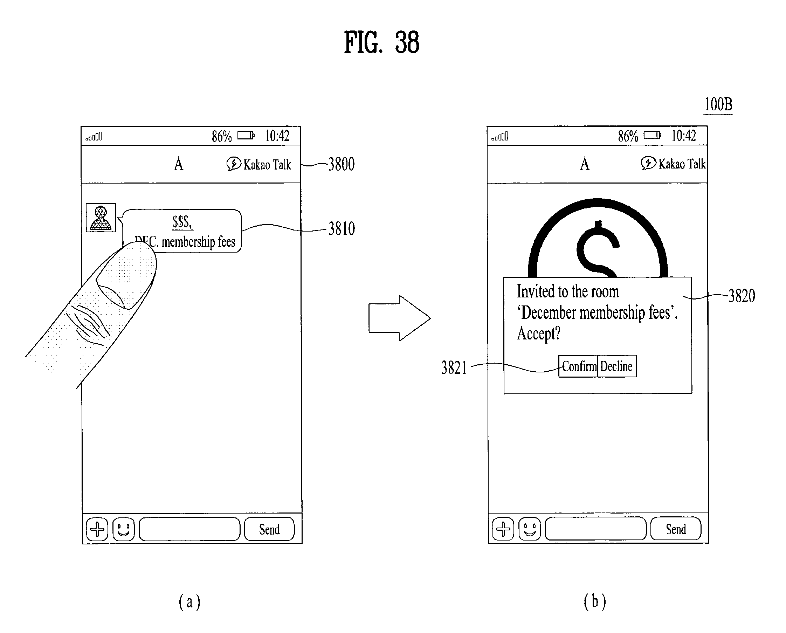

FIG. 38 is a diagram illustrating one example of a method for a user to participate in as a member of a pay room in a mobile terminal according to one embodiment of the present invention. Similarly to the former description with reference to FIG. 31, referring to FIG. 38 (a), the controller 180 of the second mobile terminal 100B can display a chat window 3810 including an address information, which is sent from the first mobile terminal 100A (or sent from the first mobile terminal 100A via the payment service server 510), corresponding to a pay room on a running screen 3800 of a specific application. In this instance, the running screen 3800 may include a screen corresponding to a chat room created between the first user A and the second user B.

The second user B can access the pay room by selecting the address information, which is included in the chat window 3810, corresponding to the pay room. In response to a command for selecting the address information corresponding to the pay room, the payment service server 510 can send a first signal for indicating an invitation to the pay rom to the second mobile terminal 100B.

Referring to FIG. 38 (b), based on the first signal, the controller 180 of the second mobile terminal 100B can output an announcement message 3820, which is provided to check whether the invitation to the pay room will be accepted, to the display unit 151. In response to a command for selecting a confirm menu 3821 in the announcement message 3820, the controller 180 of the second mobile terminal 100B can control the wireless communication unit 110 to send a second signal indicating that the invitation to the pay room is accepted to the first mobile terminal 100A or the payment service server 510. Subsequently, based on the second signal, the payment service server 510 can register the second user B as a non-master member of the pay room.

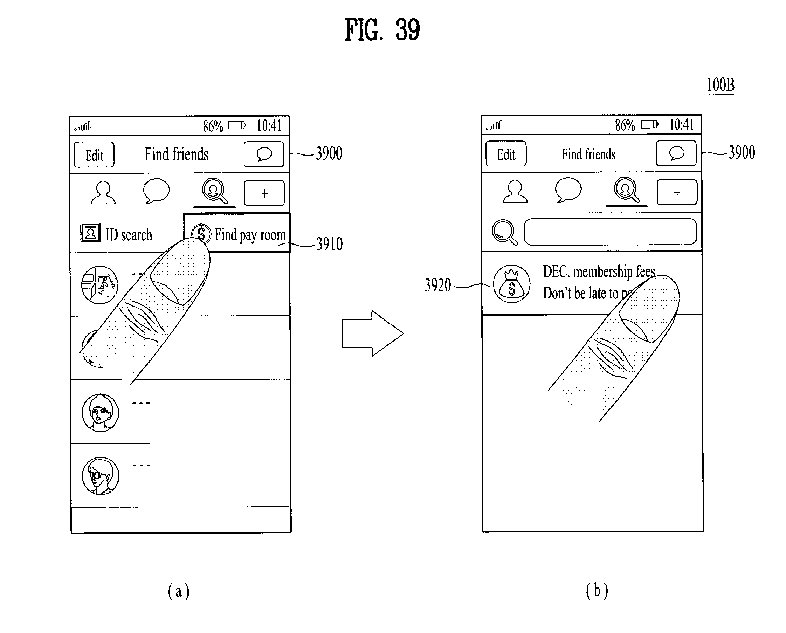

Although the embodiment shown in FIG. 38 is described based on the former embodiment described with reference to FIG. 31, the former embodiment described with reference to FIG. 30 is similarly applicable. Meanwhile, according to one embodiment of the present invention, although a master member does not invite a different user as a member of a pay room, the different user may aggressively make a request for participation in the pay room. This is described in detail with reference to FIG. 39 as follows.

FIG. 39 is a diagram illustrating one example of a method for a user to make a request for user's participation in a pay room in a mobile terminal according to one embodiment of the present invention. According to the present embodiment, assume that the first user A is a master member of a pay room. And, assume that the second user B intends to participate as a non-master member of the pay room.

As mentioned in the foregoing description with reference to FIG. 32, the controller 180 of the first mobile terminal 100A can control the short range communication module 114 to send a signal including data required for an external device to search for the pay room through a short range communication.

Referring to FIG. 39 (a), the controller 180 of the second mobile terminal 100B can output a running screen 3900 of a specific application to the display unit 151. In this instance, the running screen 3900 may include a menu option 3910 for searching for a random opened pay room. In response to a command for selecting the menu option 3910, the controller 180 of the second mobile terminal 100B activates the short range communication module 110 and can then search for a pay room opened through a communication capable external device using the short range communication module 110.

Referring to FIG. 39 (b), the controller 180 of the second mobile terminal 100B can display an information 3920 of the found pay room on the running screen 3900. The second user B can select an information of a pay room to participate in from the information 3920 of the found pay room. The controller 180 of the second mobile terminal 100B can control the wireless communication unit 110 to send a signal indicating an intention of participation in the pay room to the first mobile terminal 100A corresponding to the selected information of the pay room (or, to the first mobile terminal A via the payment service server 510).

The controller 180 of the first mobile terminal 100A outputs an announcement message, which is provided to determine a presence or non-presence of the participation of the second user B based on the signal, to the display unit 151. And, the first user A can determine a presence or non-presence of the participation of the second user B through the announcement message.

According to the descriptions with reference to FIGs. 27 to 39, a pay room may be created independently from or in association with chat room. For instance, as mentioned in the foregoing descriptions with reference to FIGs. 33 to 36, a pay room can be created within a chat room. In another instance, as mentioned in the foregoing descriptions with reference to FIGs. 28 to 32 and FIG. 39, a pay room can be created independently from a chat room.

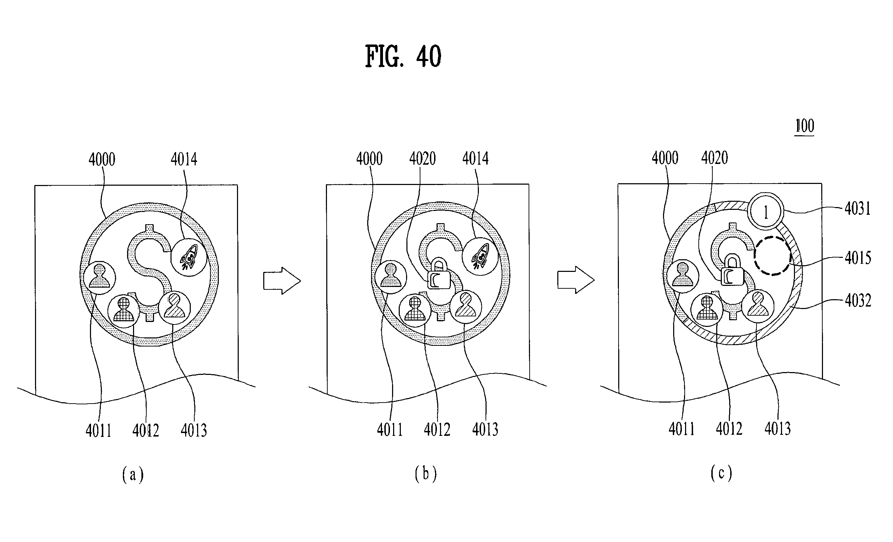

FIG. 40 is a diagram illustrating examples of a GUI of a pay room output through a display unit in a mobile terminal according to one embodiment of the present invention. In particular, a pay room shown in FIG. 40 may be created independently from or in association with chat room. And, the embodiment shown in FIG. 40 is applicable to a mobile terminal of a master member and a mobile terminal of a non-master member both.

Referring to FIG. 40 (a), the controller 180 of the mobile terminal 100 can display a GUI 4000 corresponding to a created pay room on the display unit 151. In this instance, the pay room is associated with a financial information of the first user A who is a master member. For instance, the pay room may be interconnected to an information of a specific account of the first user A. The payment service server 510 can interconnect the information of the specific account in financial information previously registered by the first user A to the pay room. And, the payment service serer 510 can store an amount information (and/or an amount information corresponding to each member) to correspond to the pay room. Moreover, the payment service server 510 can interconnect the amount information to the pay room.

The GUI 4000 may include information 4011 to 4014 of members associated with the pay room. According to an embodiment, the GUI 4000 may not include an information of the first user A corresponding to a master member. If the information of the first user A is output to the display unit 151 of the mobile terminal 100 of a non-master member, the GUI 4000 may include the information of the first user A. According to an embodiment, the GUI 4000 may include a financial information and an amount information interconnected (or mapped) to the pay room. Yet, the GUI 4000 may not visually display the financial information and the amount information interconnected to the pay room.

Members belonging to the pay room can leave or withdraw from the pay room voluntarily or randomly. If each of the members completes a payment of a preset amount corresponding to a membership fee to be collected, the corresponding member can withdraw from the pay room. For instance, each of the members belonging to the pay room can complete the payment by remitting an amount corresponding to the membership fee to the account of the first user A associated with the pay room using a balance at a corresponding member's account registered at the payment service server 510. If the remittance of the preset amount to the account of the first user A from a specific user is completed, the payment service server 510 can send an information, which indicates that the payment is made by the specific user, to the mobile terminals 100 of the master and non-master members belonging to the pay room.

Referring to FIG. 40 (b), in order to prevent the random withdrawals of the members belonging to the pay room or an invitation of an additional member to the pay room, the first user A of the master member can set a lock for preventing a state change of the pay room. If the lock is set for the pay room by the first user A, the controller 180 of the first mobile terminal 100A can deactivate a random withdrawal function of the pay room and a member adding function of the pay room. Moreover, if the lock is set for the pay room by the first user A, the controller 180 of each mobile terminal 100 can display an indicator 4020 indicating that the lock is set for the pay room. Further, the indicator 4020 may be displayed within the GUI 4000.

Referring to FIG. 40 (c), if a payment of an amount corresponding to a specific one of the members belonging to the pay room is completed, the controller 180 of the first mobile terminal 100A can display an information, which is provided to indicate that the payment by the specific member is completed, on the GUI 4000 based on an information for indicating the payment completion of the specific member, which is received from the payment service server 510. And, the specific member can withdraw from the pay room. According to an embodiment, if a payment is completed, the controller 180 of the mobile terminal 100 automatically withdraws from the pay room and may output a notification message, which is provided to indicate that an indicator indicating the withdrawal can be displayed on the pay room, to the display unit 151.

For instance, the controller 180 of the mobile terminal 100 may delete the information 4014 of the specific member from the information 4011 to 4014 of the members included in the GUI 4000 or may modify at least one portion of the information 4014 of the specific member. According to the present embodiment, an indicator 4015, which means that the specific member has withdrawn from the pay room by completing the payment, can be displayed on the GUI 4000 instead of the information 4014 of the specific member.

In another instance, the controller 180 of the mobile terminal 100 can display an indicator 4031, which indicates that one member among the members belonging to the pay room has completed the payment, on the GUI 4000. In still another instance, the controller 180 of the mobile terminal 100 can display a progress bar 4032, which indicates that 3/4 of a process still remains as one of four members belonging to the pay room has completed the payment, on the GUI 4000.

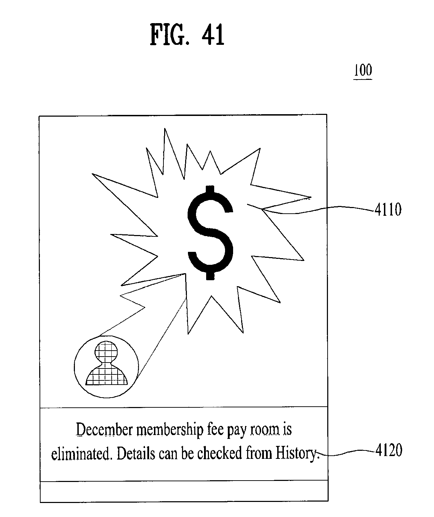

FIG. 41 is a diagram illustrating one example of a case of eliminating a pay room in a mobile terminal according to one embodiment of the present invention. Referring to FIG. 41, if all the members belonging to the pay room complete the payments, the pay room can be eliminated. Tet, according to an embodiment, although the pay room is eliminated, a menu for checking a history of the pay room can be used through the specific application.

If a signal indicating an elimination of the pay room is received from the payment service server 510, the controller 180 of the mobile terminal 100 can apply a visual effect for indicating the elimination of the pay room to the display unit 151. For instance, the controller 180 of the mobile terminal 100 can output a visual effect 4110, which is performed as if a GUI corresponding to the pay room disappears, to the display unit 151 or may output an announcement message 4120 indicating the elimination of the pay room to the display unit 151.

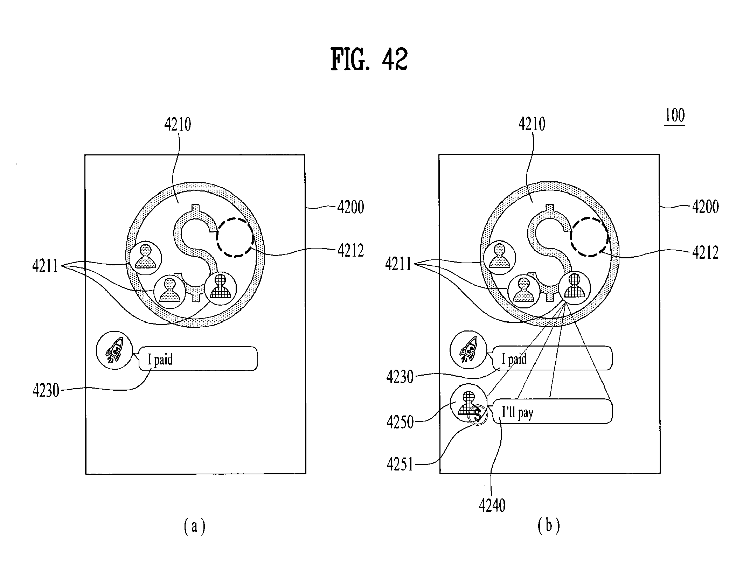

FIG. 42 is a diagram illustrating one example of a method of distinguishing a payment-complete member and a payment-incomplete member from each other in a mobile terminal according to one embodiment of the present invention. Details of the contents redundant with the former description with reference to FIG. 40 shall be omitted from the following description.

Referring to FIG. 42 (a), the controller 180 of the mobile terminal 100 can display a running screen 4200 of a specific application. In this instance, the specific application may include a messenger application supportive of a common fund administration service (or a mobile payment service) and the running screen 4200 may include a screen corresponding to a group chat room created using the messenger application to have at least two friends belong thereto. And, the controller 180 of the mobile terminal 100 can display a GUI 4210 corresponding to a pay room created for a common fund collection on the running screen 4200. In this instance, the pay room may be created in association with the group chat room.

The GUI 4210 may include an information 4211 of the members belonging to the pay room and an information 4212 indicating a first member withdrawing from the pay room due to a payment completion after belonging to the pay room. If the first member inputs a prescribed conversation to the group chat room, the controller 180 of the mobile terminal 100 can output a chat window 4230 indicating the conversation input by the first member to a chat room region of the running screen 4200.

Meanwhile, referring to FIG. 42 (b), a member (e.g., a second member) failing to complete the payment among the members belonging to the pay room can input a prescribed conversation to the group chat room. If the second member inputs a prescribed conversation to the group chat room, the controller 180 of the mobile terminal 100 can output an information indicating that the second member has not completed the payment to the running screen 4200.

For instance, controller 180 of the mobile terminal 100 can give a visual effect as if a chat window 4240 including the conversation input by the second member is output from a GUI 4212 corresponding to the pay room. In another instance, the controller 180 of the mobile terminal 100 can display an indicator 4251, which indicates that the second member has not completed the payment, on an information 4250 of the second member displayed on the chat room region of the running screen 4200.

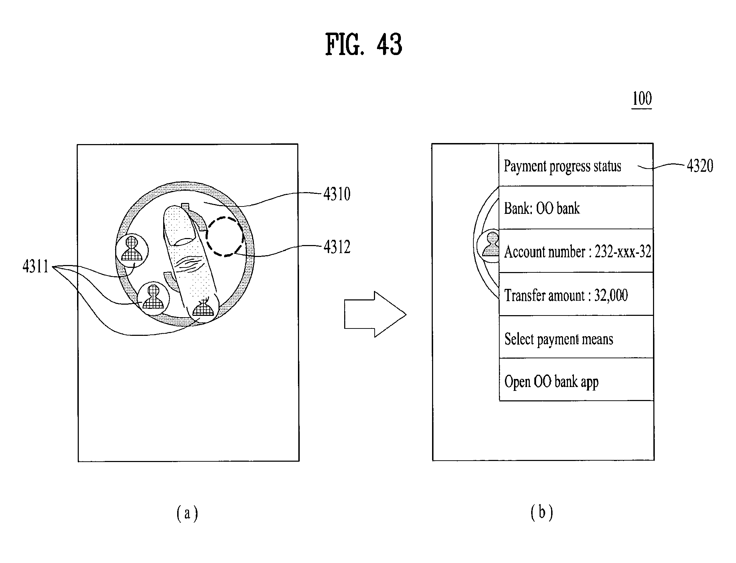

FIG. 43 is a diagram illustrating one example of information shown to a payment-incomplete member in a mobile terminal according to one embodiment of the present invention. Details of the contents redundant with the former description with reference to FIG. 40 shall be omitted from the following description. According to the present embodiment, assume that the mobile terminal 100 is a mobile terminal 100 corresponding to the first member failing to complete the payment among the members belonging to the pay room.

Referring to FIG. 43 (a), the controller 180 of the mobile terminal 100 can display a GUI 4310 corresponding to the pay room to the display unit 151. In this instance, the GUI 4310 may include an information 4311 of the members belonging to the pay room and an information 4312 indicating a member withdrawing from the pay room due to a payment completion after belonging to the pay room. The controller 180 of the mobile terminal 100 can detect a preset command. For instance, the preset command may include a command of touching the GUI 4310.

Referring to FIG. 43 (b), in response to the preset command, the controller 180 of the mobile terminal 100 can display a GUI 4320 including an information required for a payment of an amount corresponding to the first member on the display unit 151. In response to the preset command, the controller 180 of the mobile terminal 100 controls the wireless communication unit 110 to make a request for a signal for requesting an information required for a payment of an amount corresponding to the first member to the payment service server 510. Based on the information received from the payment service server 510, the controller 180 of the mobile terminal 100 can display the GUI 4320 on the display unit 151.

For instance, the GUI 4320 may include at least one of an information on a status of a payment made through the pay room, a bank information of a bank at which an account of the master member associated with the pay room, a number of an account of the master member associated with the pay room, an amount information of an amount supposed to be paid by the first member, and a payment mechanism information of a payment mechanism available for the first member through the payment service server 510.

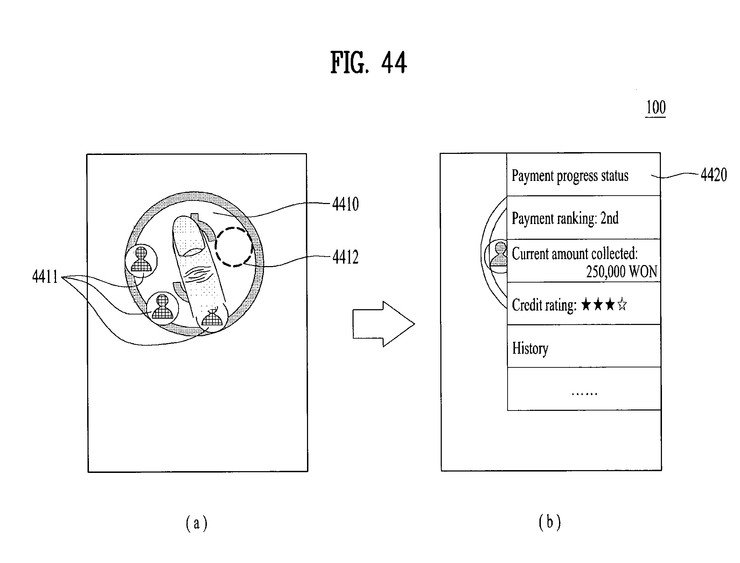

FIG. 44 is a diagram illustrating one example of information shown to a payment-complete member in a mobile terminal according to one embodiment of the present invention. Details of the contents redundant with the former description with reference to FIG. 40 shall be omitted from the following description. According to the present embodiment, assume that the mobile terminal 100 is a mobile terminal 100 corresponding to a second member having completed a payment among the members belonging to the pay room.

Referring to FIG. 44 (a), the controller 180 of the mobile terminal 100 can display a GUI 4410 corresponding to the pay room to the display unit 151. In this instance, the GUI 4410 may include an information 4411 of the members belonging to the pay room and an information 4412 indicating a second member withdrawing from the pay room due to a payment completion after belonging to the pay room. The controller 180 of the mobile terminal 100 can detect a preset command. For instance, the preset command may include a command of touching the GUI 4410.

Referring to FIG. 44 (b), in response to the preset command, the controller 180 of the mobile terminal 100 can display a GUI 4420 including a current status of the pay room and an ad interim history information on the display unit 151.Unlike the former embodiment shown in FIG. 43, according to the present embodiment, since the second member has completed the payment, an information different from that shown to the first member failing to complete the payment is shown to the second member.

In response to the preset command, the controller 180 of the mobile terminal 100 controls the wireless communication unit 110 to make a request for a signal for requesting the current status of the pay room and the ad interim history information to the payment service server 510. Based on the information received from the payment service server 510, the controller 180 of the mobile terminal 100 can display the GUI 4420 on the display unit 151.

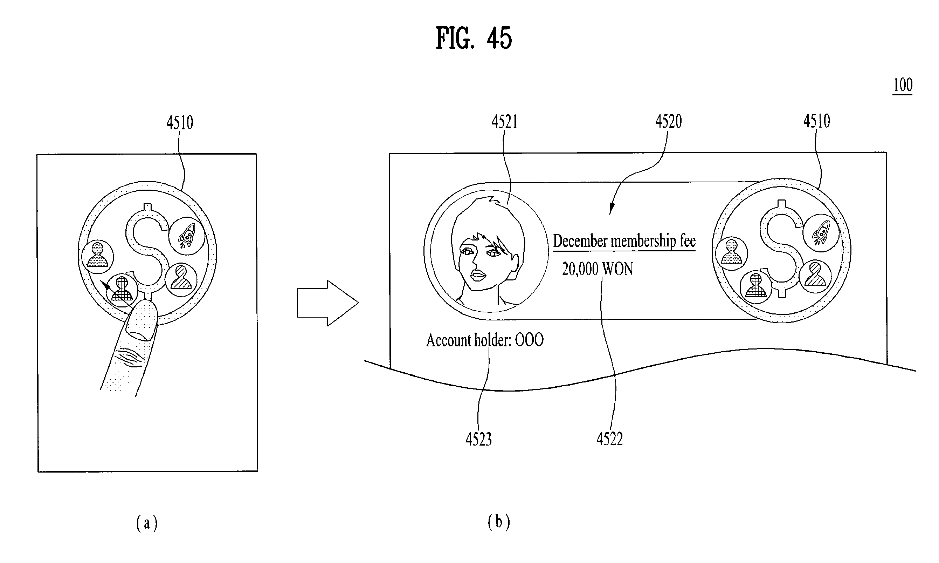

FIG. 45 is a diagram illustrating one example of a method of outputting information mapped to a pay room in a mobile terminal according to one embodiment of the present invention. Details of the contents redundant with the descriptions of the former embodiments shall be omitted from the following description. And, assume that the mobile terminal 100 shown in FIG. 45 is a mobile terminal 100 corresponding to a non-master member belonging to the pay room.

Referring to FIG. 45 (a), the controller 180 of the mobile terminal 100 displays a GUI 4510 corresponding to a pay room to the display unit 151. The controller 180 of the mobile terminal 100 detects a preset first command. For instance, the first command may include a command of applying a flicking touch to the GUI 450.

Referring to FIG. 45 (b), in response to the first command, the controller 180 of the mobile terminal 100 can output an information 4520 mapped to a pay room corresponding to the GUI 4510 to the display unit 151. After the pay room has been created, when the payment service server 510 sends an information of the created pay room to the mobile terminal 100, the payment service server 510 may send the information mapped to the pay room to the mobile terminal 100 as well. Alternatively, in response to the first command, the payment service server 510 may send the information mapped to the pay room to the mobile terminal 100.

For instance, the information 4520 mapped to the pay room may include at least one of an image information 4521 of the first user A corresponding to a master user of the pay room, a membership fee information 4522 of a membership fee supposed to be paid by the user of the mobile terminal 100, and an account holder information 4523 of a specific account interconnected to the pay room. For instance, a visual effect of being output from the GUI 4510 may apply to the information 4520 mapped to the pay room.

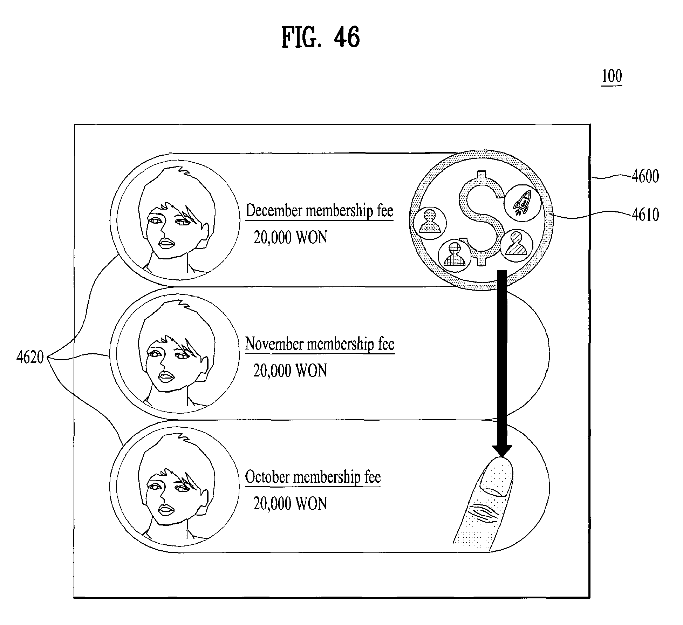

FIG. 46 is a diagram illustrating another example of a method of outputting information mapped to a pay room in a mobile terminal according to one embodiment of the present invention. Details of the contents redundant with the descriptions of the former embodiments shall be omitted from the following description. The mobile terminal 100 shown in FIG. 46 may include a mobile terminal 100 corresponding to a master member having opened a pay room or a non-master member belonging to the pay room.

The controller 180 of the mobile terminal 100 displays a first GUI 4610 corresponding to a pay room to the display unit 151. In this instance, the pay room may be opened by being associated with a chat room. In particular, the pay room may include a pay room created within the chat room by having members set to at least one portion of members belonging to the chat room. The first GUI 4610 may be displayed within a screen 4600 corresponding to the chat room. The controller 180 of the mobile terminal 100 detects a preset second command. For instance, the second command may include a command of touching and dragging the first GUI 4610 in a preset direction.

In response to the second command, the controller 180 of the mobile terminal 100 can output a second GUI 4620 including history information related to the chat room and the pay room to the display unit 151. The payment service server 510 may store the history information related to the chat room and the pay room. When the payment service server 510 sends the information of the created pay room to the mobile terminal 100, the payment service server 510 may send the history information related to the chat room and the pay room to the mobile terminal 100 as well. Alternatively, in response to the second command, the payment service server 510 may send the history information related to the chat window and the pay room to the mobile terminal 100.

For instance, the history information related to the chat window and the pay room may include a history information of pay rooms created in the chat room, a payment history information of the pay room, a payment reservation information of a payment previously reserved in conjunction with the pay room, and the like.

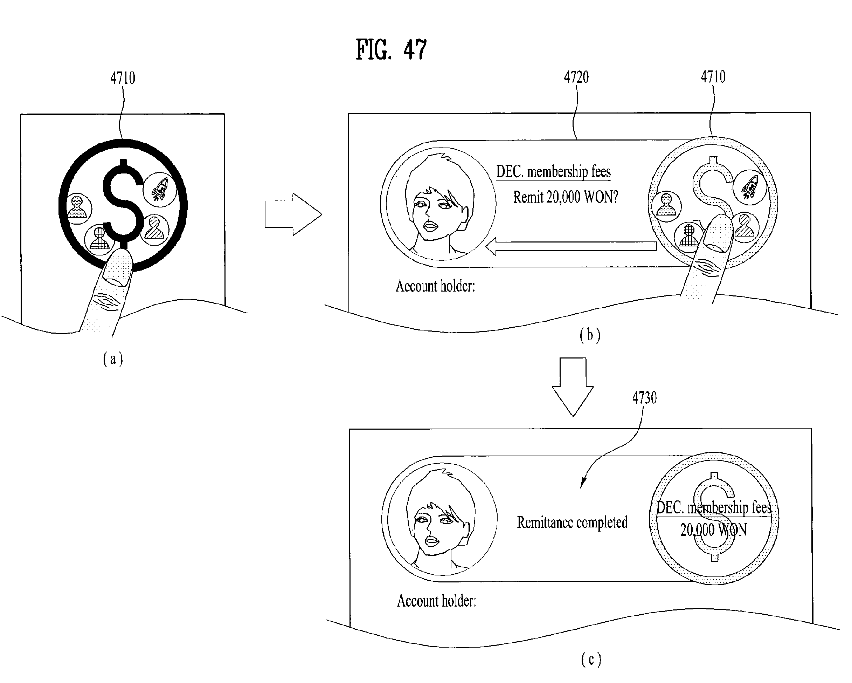

In the following description, examples of a method of making a payment of a prescribed amount in the pay room are described with reference to FIGs. 47 to 49. In this instance, according to the meaning of making a payment of a prescribed amount, using a financial information corresponding to a user of the mobile terminal registered at (saved in) the payment service server 510, the prescribed amount may be credited to an account of a master member of the pay room, which is mapped to the pay room.

FIG. 47 is a diagram illustrating one example of a method of making a payment of a prescribed amount using a pay room in a mobile terminal according to one embodiment of the present invention. Details of the contents redundant with the descriptions of the former embodiments shall be omitted from the following description. The mobile terminal 100 shown in FIG. 47 may include a mobile terminal 100 corresponding to a non-master member belonging to a pay room.

Referring to FIG. 47 (a), the controller 180 of the mobile terminal 100 displays a first GUI 4710 corresponding to a pay room to the display unit 151. According to the present embodiment, assume that a region corresponding to the first GUI 4710 in a screen of the display unit 151 includes a fingerprint recognition sensor.

The controller 180 of the mobile terminal 100 detects a preset first command. For instance, the first command may include a command for touching the first GUI 4710 over a preset time. Alternatively, the first command may include an action of dragging the first GUI 4710 in a prescribed direction or may consist of a combination of a touch of a prescribed time and a drag. According to an embodiment, the first GUI 4710 includes a prescribed amount information mapped thereto and the first command may include a command for touching the first GUI 4710 including the amount information over a preset time.

If the first command is detected, the controller 180 of the mobile terminal 100 activates the fingerprint recognition sensor included in the region corresponding to the first GUI 4710 and then obtains a fingerprint information through the fingerprint recognition sensor. In particular, while the first GUI 4710 is touched and/or dragged for a prescribed time or as soon as the touch and/or drag is applied, the fingerprint information may be obtained. Hence, the controller 180 can obtain the fingerprint information while the first command is received or as soon as the first command is received. Subsequently, the controller 180 of the mobile terminal 100 can compare the obtained fingerprint information to a fingerprint information previously registered by a user of the mobile terminal 100. According to an embodiment, the controller 180 of the mobile terminal 100 sends the obtained fingerprint information to the payment service server 510 through the wireless communication unit 110. Subsequently, the payment service server 510 can compare the fingerprint information to the fingerprint information previously registered by the user of the mobile terminal 100.

According to an embodiment, if a fingerprint recognition sensor is provided to the user input unit 123 corresponding to a hardware key provided to an exterior of the mobile terminal 100, the first command may include a command for touching the user input unit 123 over a preset time.

If the obtained fingerprint information matches the fingerprint information previously registered by the user of the mobile terminal 100, as shown in FIG. 47 (b), the controller 180 of the mobile terminal 100 can output a second GUI 4720, which induces a payment of an amount corresponding to the pay room, to the display unit 151. In this instance, the second GUI 4720 may include an account holder information of an account corresponding to the pay room, an information of an amount supposed to be paid by the user of the mobile terminal 100 in the pay room, a message of querying whether to pay the amount, and the like.

According to an embodiment, if the obtained fingerprint information matches the fingerprint information previously registered by the user of the mobile terminal 100 and a preset second command is detected, the controller 180 of the mobile terminal 100 may output a second GUI 4720, which induces a payment of the amount corresponding to the pay room, to the display unit 151. For instance, the second command may include a command for touching and then dragging the first GUI 4710 in a preset direction or an action of simply touching the first GUI 4710 for a prescribed time. Moreover, if the first command is a touch of a prescribed time and the second command is a drag, the first command and the second command can be input consecutively and both of the recognition of the fingerprint information and the amount payment can be simultaneously performed. The controller 180 of the mobile terminal 100 may give the second GUI 4720 a visual effect of being output from the first GUI 4710 in the preset direction.

The controller 180 of the mobile terminal 100 can detect a preset third command. For instance, the third command may include a command for touching a prescribed region within the second GUI 4720 over a preset time. In response to the third command, the controller 180 of the mobile terminal 100 can send a signal for requesting a payment to the payment service server 510 through the wireless communication unit 110.

The payment service server 510 can perform the payment of the amount using a financial information previously registered by a user of the mobile terminal 100. For instance, the payment service server 510 can remit an amount necessary for a payment in an amount belonging to a first account to a second account corresponding to a master member of the pay room using an information of the first account corresponding to the user of the mobile terminal 100. Further, the payment service server 510 may perform the payment of the amount using the financial company server 520. And, the payment service server 510 can send a payment approval result, which indicates that the payment of the amount is made, to the mobile terminal 100.

Referring to FIG. 47 (c), the controller 180 of the mobile terminal 100 receives the payment approval result through the wireless communication unit 110 and can then output a message 4730 containing the received payment approval result to the display unit 151.

Meanwhile, when the user of the mobile terminal is the master member of the pay room, since a remittance account and a recipient account are identical to each other, the payment service server 510 does not make a payment of a prescribed amount actually but can associate the prescribed amount at the account of the master member with the pay room.

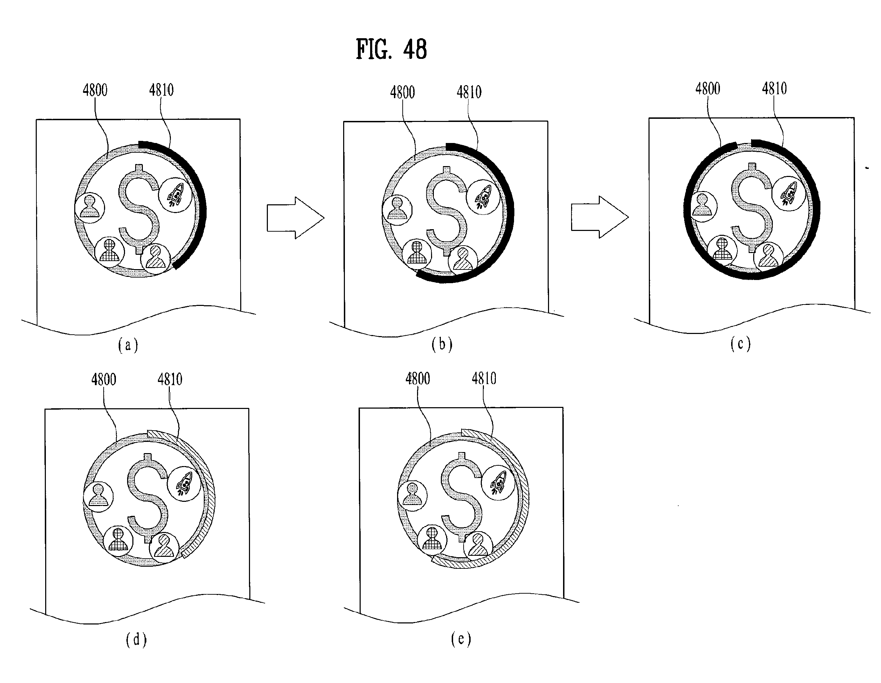

FIG. 48 is a diagram illustrating one example of a method of displaying a fingerprint recognizing procedure on a display unit in a mobile terminal according to one embodiment of the present invention. As mentioned in the foregoing description with reference to FIG. 47, a case of obtaining a fingerprint information through the display unit 151 or the user input unit 123 is taken as an example for the following description.

FIGs. 48 (a) to 48 (c) show one example of a UI output to the display unit 151 if a fingerprint information obtained through a fingerprint sensor of the mobile terminal 100 succeeds in authentication. FIG. 48 (d) and FIG. 48 (e) show one example of a UI output to the display unit 151 if a fingerprint information obtained through a fingerprint sensor of the mobile terminal 100 fails in authentication.

Referring to FIGs. 48 (a) to 48 (c), the controller 180 of the mobile terminal 100 can display a progress bar 4810 indicating a presence or non-presence of progress of a fingerprint recognition procedure on or near a GUI 4800 of a pay room. As the fingerprint recognition procedure proceeds, the controller 180 of the mobile terminal 100 can display a length of the progress bar 4810 to correspond to an extent of the progress.

Further, referring to FIG. 48 (d) and FIG. 48 (e), the controller 180 of the mobile terminal 100 can display a progress bar 4810 indicating a presence or non-presence of progress of a fingerprint recognition procedure on or near a GUI 4800 of a pay room. While the fingerprint recognition procedure is in progress, if it fails in fingerprint recognition or authentication, the controller 180 of the mobile terminal 100 can differently change a type, color, shape, and/ or transparency of the progress bar 4810.

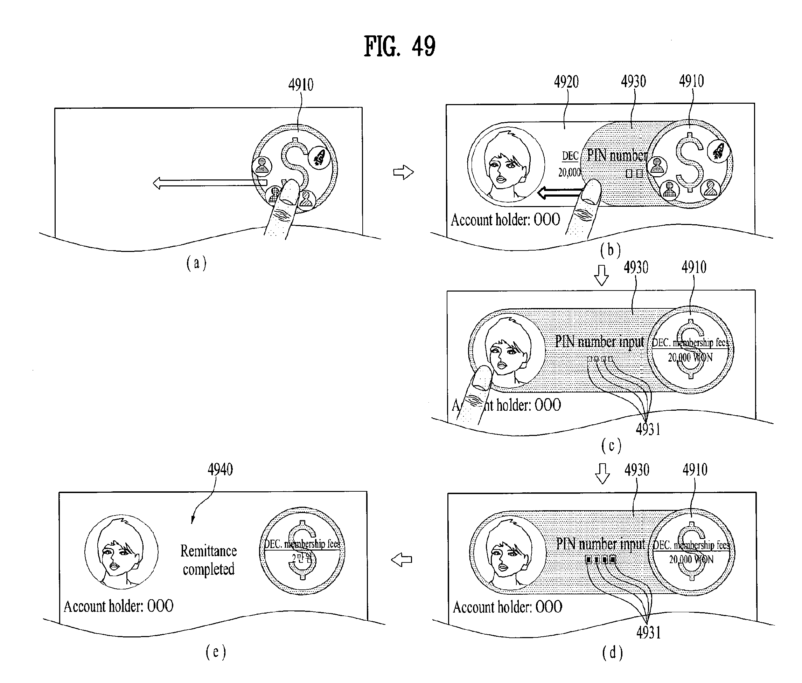

FIG. 49 is a diagram illustrating another example of a method of making a payment of a prescribed amount using a pay room in a mobile terminal according to one embodiment of the present invention. Details of the contents redundant with the descriptions of the former embodiments shall be omitted from the following description. The mobile terminal 100 shown in FIG. 49 may include a mobile terminal 100 corresponding to a non-master member belonging to a pay room.

Referring to FIG. 49 (a), the controller 180 of the mobile terminal 100 displays a first GUI 4910 corresponding to a pay room to the display unit 151. According to the present embodiment, assume a case that a region corresponding to the first GUI 4910 in a screen of the display unit 151 does not include a fingerprint recognition sensor, a case that the user input unit 123 of the mobile terminal 100 does not include a fingerprint recognition sensor, or a case that a user of the mobile terminal 100 does not select a fingerprint information as a security information for a payment.

The controller 180 of the mobile terminal 100 detects a preset first command. For instance, the first command may include a command for touching the first GUI 4910 over a preset time and then dragging it in a preset direction. According to an embodiment, the first GUI 4910 includes a prescribed amount information mapped thereto and the first command may include a command for touching the first GUI 4910 including the amount information over a preset time and then dragging it in a preset direction.

Referring to FIG. 49 (b), in response to the first command, the controller 180 of the mobile terminal 100 can output a second GUI 4920, which induces a payment of an amount corresponding to the pay room, to the display unit 151. Since the second GUI 4920 is similar to the former second GUI 4720 described with reference to FIG. 47, its details shall be omitted from the following description. Moreover, the controller 180 of the mobile terminal 100 detects a preset second command. In this instance, the second command may include a command of touching the first GUI 4910 and then dragging it in the preset direction.

Referring to FIG. 49 (b) and FIG. 49 (c), in response to the second command, the controller 180 of the mobile terminal 100 can output a third GUI 4930, which is provided to input a security information (e.g., PIN), to the display unit 151. For instance, the controller 180 of the mobile terminal 100 may apply a visual effect in a manner that the third GUI 4930 is output from the first GUI 4910 along a region on the display unit 151 to which the second command is input. In this instance, the third GUI 4930 may include a PIN input region 4931.

A user of the mobile terminal 100 can input prescribed numerals to the PIN input region 4931 using a virtual keyboard. The controller 180 of the mobile terminal 100 can compare the PIN obtained through the third GUI 4930 to a PIN previously registered by the user of the mobile terminal 100. According to an embodiment, the controller 180 of the mobile terminal 100 sends the PIN to the payment service server 510 through the wireless communication unit 110, and the payment service server 510 may compare the PIN to the PIN previously registered by the user of the mobile terminal 100.

If the PIN obtained through the third GUI 4930 matches the PIN previously registered by the user of the mobile terminal 100, the controller 180 of the mobile terminal 100 may send a signal for requesting a payment to the payment service server 510 through the wireless communication unit 110.

The payment service server 510 can perform the payment of the amount using a financial information previously registered by the user of the mobile terminal 100. For instance, the payment service server 510 can remit an amount necessary for a payment in an amount belonging to a first account to a second account corresponding to a master member of the pay room using an information of the first account corresponding to the user of the mobile terminal 100. Further, the payment service server 510 may perform the payment of the amount using the financial company server 520. And, the payment service server 510 can send a payment approval result, which indicates that the payment of the amount is made, to the mobile terminal 100.

Referring to FIG. 49 (e), the controller 180 of the mobile terminal 100 receives the payment approval result through the wireless communication unit 110 and can then output a message 4940 containing the received payment approval result to the display unit 151.

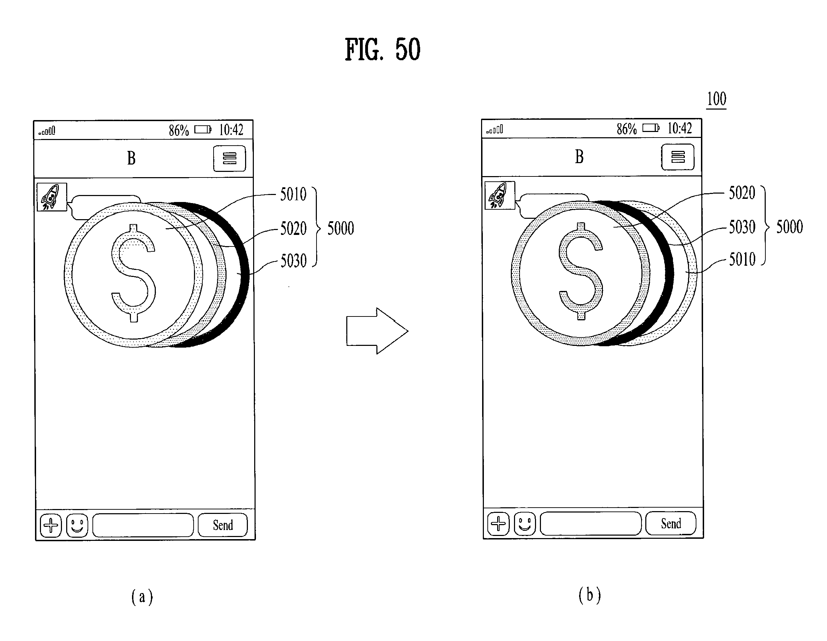

Meanwhile, when the user of the mobile terminal is the master member of the pay room, since a remittance account and a recipient account are identical to each other, the payment service server 510 does not make a payment of a prescribed amount actually but can associate the prescribed amount at the account of the master member with the pay room. Meanwhile, according to one embodiment of the present invention, a plurality of pay rooms associated with a same chat room may be created. This is described in detail with reference to FIG. 50 as follows.

FIG. 50 is a diagram illustrating one example of a GUI of a pay room output to a display unit of a mobile terminal according to one embodiment of the present invention. Referring to FIG. 50 (a), the controller 180 of the mobile terminal 100 displays a GUI 5000 of a pay room created for a common fund collection on the display unit 151. In this instance, the pay room may be created in association with a chat room.

When there are a plurality of pay rooms created in association with the chat room, the controller 180 of the mobile terminal 100 can display GUIs 5010, 5020 and 5030 respectively corresponding to a plurality of the pay rooms, which are not eliminated yet, on the display unit 151. According to the present embodiment, assume that the GUI 5000 includes a first GUI 5010 corresponding to a first pay room, a second GUI 5020 corresponding to a second GUI 5020, and a third GUI 5030 corresponding to a third pay room.

According to an embodiment, the first GUI 5010, the second GUI 5020 and the third GUI 5030 may overlap each other in part at least. The third pay room may be the latest created pay room among the pay rooms not eliminated yet, and the first pay room may be the earliest created pay room among the pay rooms not eliminated yet.

Referring to FIG. 50 (b), the controller 180 of the mobile terminal 100 can change an overlay order of the first GUI 5010, the second GUI 5020 and the third GUI 5030 in response to a preset command. For instance, the preset command may include a command for selecting a GUI of a pay room to check among the overlaid GUIs of the pay rooms. In this instance, the controller 180 of the mobile terminal 100 can dispose the selected GUI of the pay room on a top.

In another instance, the preset command may include a command for touching a top disposed GUI of a pay room. In this instance, the controller 180 of the mobile terminal 100 disposes the touched GUI of the pay room on a bottom and can also dispose a pay room GUI right below the touched pay room GUI on the top.

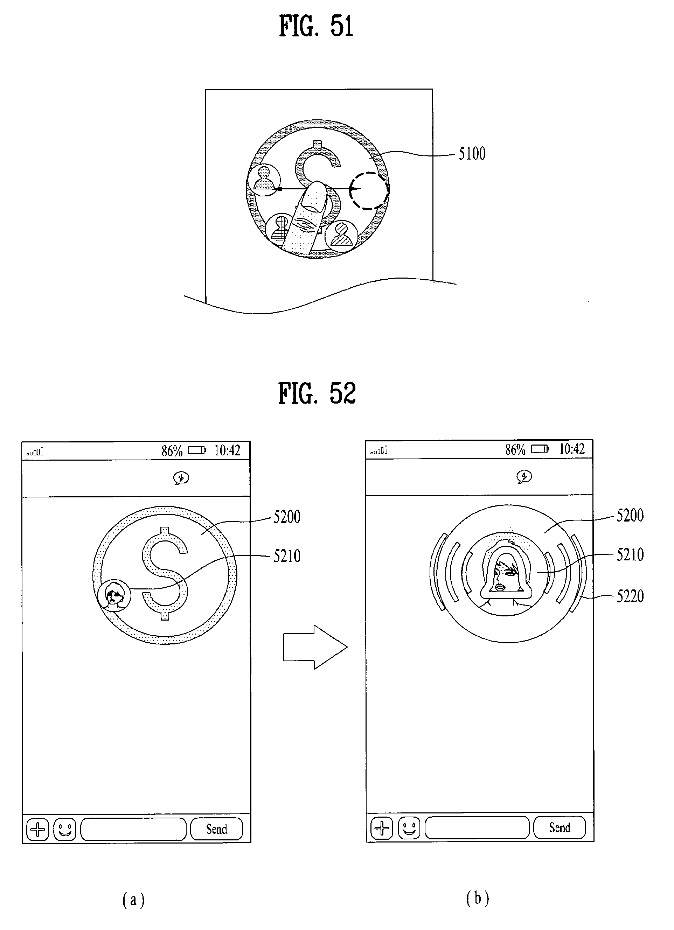

FIG. 51 is a diagram illustrating one example of a method of providing a notification to members failing to complete payments despite belonging to a payment member in a mobile terminal according to one embodiment of the present invention. Details of the contents redundant with the descriptions of the former embodiments shall be omitted from the following description.

Referring to FIG. 51, the controller 180 of the mobile terminal 100 can display a GUI 5100 corresponding to a pay room on the display unit 151. In response to a preset command, the controller 180 of the mobile terminal 100 can control the wireless communication unit 110 to send a signal for making a request for a payment to a mobile terminal 100 corresponding to each member failing to complete a payment despite belonging to the pay room.

According to an embodiment, the signal for requesting the payment may be indirectly sent through the payment service server 510. For instance, the preset command may include a command corresponding to a motion of shaking the GUI 5100 of the pay room, i.e., a touch command of moving the GUI 5100 in prescribed both directions several times while touching the GUI 5100.

FIG. 52 is a diagram illustrating another example of a method of providing a notification to members failing to complete payments despite belonging to a payment member in a mobile terminal according to one embodiment of the present invention. Details of the contents redundant with the descriptions of the former embodiments shall be omitted from the following description.

Referring to FIG. 52 (a), the controller 180 of the mobile terminal 100 displays a GUI 5200 corresponding to a pay room on the display unit 151. In this instance, the GUI 5200 may include an information 5210 of a member failing to complete a payment among members belonging to the pay room.

According to the present embodiment, assume that a time limit of a payment is set for the pay room. When a master member newly opens the pay room, the master member can set the time limit of the payment. Alternatively, after the pay room has been created, the master member can set the time limit of the payment.

Referring to FIG. 52 (b), if the time limit set for the pay room arrives, the controller 180 of the mobile terminal 100 can control the wireless communication unit 110 to send a signal for indicating the arrival of the time limit to the mobile terminal 100 of the member failing to complete the payment. According to an embodiment, if the time limit set for the pay room arrives, the controller 180 of the mobile terminal 100 can control the wireless communication unit 110 to send a signal for indicating the arrival of the time limit to the mobile terminal 100 corresponding to each of the whole members as well as to the mobile terminal 100 of the member failing to complete the payment. The signal for indicating the arrival of the time limit may be indirectly sent through the payment service server 510. Moreover, the signal for indicating the arrival of the time limit may include a signal for indicating the arrival of the time limit through vibration and/or sound.

If the time limit set for the pay room arrives, the controller 180 of the mobile terminal 100 can display the information 5210 of the member failing to complete the payment within the GUI 5200 by having a size greater than an original size and may display an indicator 5220 indicating the arrival of the time limit within the GUI 5200.

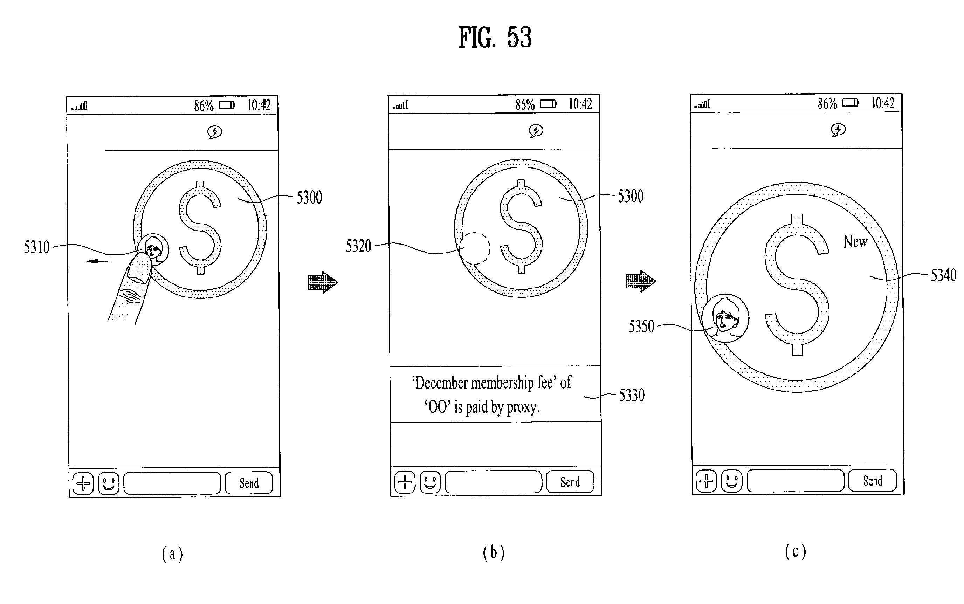

Meanwhile, according to one embodiment of the present invention, a member having completed a payment, a master member, or a different member failing to complete a payment may make a payment of an amount corresponding to a member failing to complete a payment despite belonging to a pay room by proxy. This is described in detail with reference to FIG. 53 as follows.

FIG. 53 is a diagram illustrating one example of a method for a payment-complete member to make a payment of an amount corresponding to a payment-incomplete member by proxy among members belonging to a pay room in a mobile terminal according to one embodiment of the present invention.

Referring to FIG. 53, the controller 180 of the mobile terminal 100 can display a GUI 530 corresponding to a pay room on the display unit 151. The GUI 5300 may include an information 5310 of a member failing to complete a payment among members belonging to the pay room.

The controller 180 of the mobile terminal 100 detects a preset command. For instance, the preset command is a command for selecting the member failing to complete the payment and may correspond to a command for touching the information 5310 of the member failing to complete the payment and then moving it out of the GUI 5300.

In response to the preset command, the controller 180 of the mobile terminal 100 can send a signal for a user of the mobile terminal 100 to make a payment of an amount corresponding to the member failing to complete the payment by proxy to the payment service server 510 through the wireless communication unit 110.

Using a financial information previously registered to correspond to the user of the mobile terminal 100, the payment service server 510 can make the payment of the amount corresponding to the member failing to complete the payment. For instance, the payment service server 510 can remit the amount, which corresponds to the member failing to complete the payment within an amount belonging to an account previously registered to correspond to the user of the mobile terminal 100, to an account previously registered by a master member of the pay room.

And, the payment service server 510 can send a signal, which indicates that the payment of the amount corresponding to the member failing to complete the payment has been made, to the mobile terminal 100.

Referring to FIG. 53 (b), the controller 180 of the mobile terminal 100 receives the signal, which indicates that the payment of the amount corresponding to the member failing to complete the payment has been made, through the wireless communication unit 110 and may delete the information 5310 of the member included in the GUI 5300 or may change at least one portion of the information 5310 of the member included in the GUI 5300. For instance, the controller 180 of the mobile terminal 100 can display an indicator 5320, which indicates that the payment of the member failing to complete the payment is completed, on the GUI 5300.

Moreover, the controller 180 of the mobile terminal 100 may display a message 5330, which indicates that the amount corresponding to the member failing to complete the payment is paid by proxy, on the display unit 151.

Referring to FIG. 53 (c), the controller 180 of the mobile terminal 100 can display a GUI 5340, which corresponds to a pay room separately created between the user of the mobile terminal 100 and the member failing to complete the payment, on the display unit 151. If the payment is made by proxy by the user of the mobile terminal 100, the payment service server 510 creates a pay room for collecting the amount of the payment made by proxy between the user of the mobile terminal 100 and the member failing to complete the payment and can then send an information of the created pay room to the mobile terminal 100. The GUI 5340 can include an information 5350 of the member failing to complete the payment.

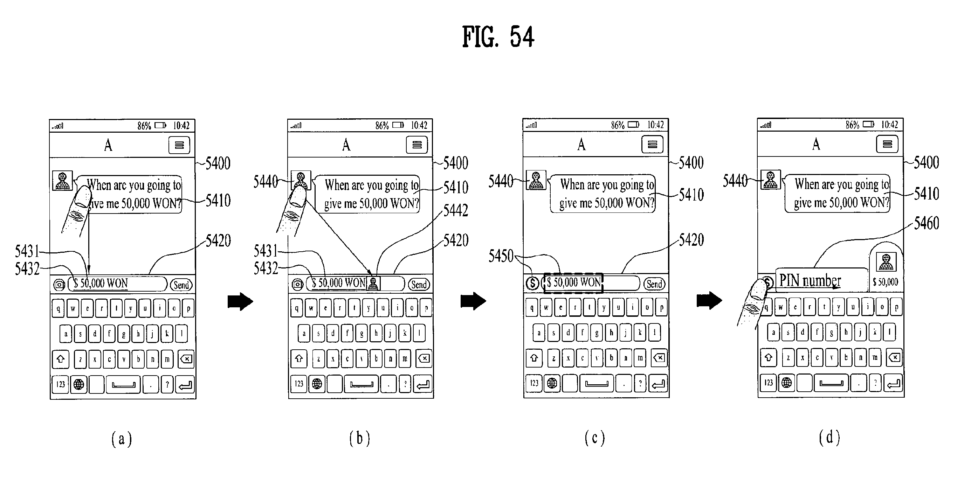

In the following description, examples of a method of making a payment of an amount corresponding to an amount information output not to a pay room but to a screen of the display unit 151 or an amount information mapped to a prescribed information output to the screen of the display unit 151 are described in detail with reference to FIGs. 54 to 58.

FIG. 54 is a diagram illustrating one example of a method of making a payment of a prescribed amount in a mobile terminal according to one embodiment of the present invention. Referring to FIG. 54 (a), the controller 180 of the mobile terminal 100 outputs a running screen 5400 of a specific application to the display unit 151. In this instance, the specific application may include a messenger application supportive of a common fund administration service (or a mobile payment service) and the running screen 5400 may include a screen corresponding to a chat room created using the messenger application for a chat with a different user A.

The running screen 5400 may include a chat window 5410 including an amount information (e.g., 50,000 WON). In this instance, the amount information may be mapped to a preset financial information. For instance, the preset financial information may include an account-A information of the different user A having sent a conversation included in the chat window 5410. According to an embodiment, if the amount information moves into a preset region 5420 within the running screen 5400 according to a preset condition, as mentioned in the following description, the amount information may be mapped to the preset financial information.

The controller 180 of the mobile terminal 100 detects a preset first command. For instance, the first command may include a command of touching the amount information within the chat window 5410 and then dragging it into the preset region 5420 within the running screen 5400. And, the preset region 5420 may correspond to a region to which a user inputs conversations in a chat room.

In response to the first command, the controller 180 of the mobile terminal 100 can display the amount information on the preset region 5420. According to an embodiment, the controller 180 of the mobile terminal 100 can display an indicator 5432, which indicates that the display amount information 5431 is related to a payment, on the preset region 5420.

Referring to FIG. 54 (b), the controller 180 of the mobile terminal 100 can detect a preset second command. For instance, the second command may include a command of touching an information 5440 of the different user A included in the running screen 5400 and then dragging it to the preset region 5420.

In response to the second command, the controller 180 of the mobile terminal 100 can display an information 5422, which is identical to the information 5440 of the different user A in part at least, on the preset region 5420. According to an embodiment, the step shown in FIG. 54 (b) may be skipped.

Referring to FIG. 54 (c), in response to the first command and the second command, the controller 180 of the mobile terminal 100 can activate a payment mode in the preset region 5420. In this instance, the payment mode may include a mode for providing an interface to make a payment of an amount corresponding to the amount information included in the preset region 5420. As the payment mode is activated, the controller 180 of the mobile terminal 100 can display an indicator 5450, which indicates that the payment mode is activated, on the preset region 5420.

Referring to FIG. 54 (d), the controller 180 of the mobile terminal 100 detects a preset third command. For instance, the third command may include a command of touching the indicator 5450 and then dragging it in a preset direction. In response to the third command, the controller 180 of the mobile terminal 100 can activate an interface for receiving a security information corresponding to the account-A mapped to the amount information. In this instance, although the security information is described on the assumption that the security information is a PIN previously registered to correspond to the account-A, it may include a security information of a different type (e.g., a fingerprint information) previously registered to correspond to the account-A.

As the interface for receiving the security information corresponding to the account-A is activated, the controller 180 of the mobile terminal 100 can display a GUI 5460, which is provided to input the PIN, on the display unit 151. If the PIN input through the GUI 5460 matches a PIN of an account-B previously registered by the user of the mobile terminal 100, the payment of the amount corresponding to the amount information can be made using the payment service server 510. In particular, if the PIN input through the GUI 5460 matches the PIN of the account-B previously registered by the user of the mobile terminal 100, the amount corresponding to the amount information within the amount belonging to the account-B can be remitted to the account-A through the payment service server 510. Since such a payment process is similar to that described with reference to FIG. 47 or FIG. 49, its details shall be omitted from the following description.

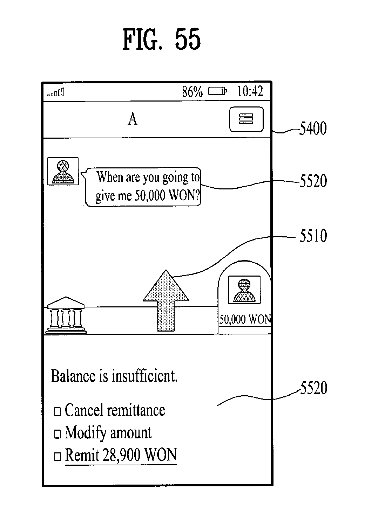

FIG. 55 is a diagram illustrating one example of a screen output to a display unit in case of a shortage of a balance in the course of making a payment in a mobile terminal according to one embodiment of the present invention. The description with reference to FIG. 55 shall be made on the basic assumption of the former embodiment described with reference to FIG. 54.

Referring to FIG. 55, while the payment is in progress according to the description with reference to FIG. 54 (d), if a balance belonging to the account-B is smaller than the amount corresponding to the amount information, the payment service server 510 can send a signal for indicating it to the mobile terminal 100.

Based on the signal sent from the payment service server 510, the controller 180 of the mobile terminal 100 can output an information, which is provided to indicate that the balance of the account-B is insufficient, to the display unit 151. For instance, the controller 180 of the mobile terminal 100 can output an indicator 510, which indicates that a payment process is interrupted at a specific timing point due to the insufficient balance, to the running screen 5400. Moreover, the controller 180 of the mobile terminal 100 can output a message 5520 indicating the insufficient balance to the running screen 5400. The message 5520 may include at least one of a menu for cancelling a payment, a menu for modifying an amount to pay, and a menu for making a payment progress within the balance of the account-B.

FIG. 56 is a diagram illustrating one example of a method of making a payment of a prescribed amount on a list of a pay room in a mobile terminal according to one embodiment of the present invention. Referring to FIG. 56 (a), the controller 180 of the t mobile terminal 100 outputs a running screen 5600 of a specific application to the display unit 151. In this instance, the specific application may include a messenger application supportive of a common fund administration service (or a mobile payment service) and the running screen 5600 may include a list 5601 of at least one chat room and at least one pay room created using the messenger application.

The list 5601 may include a region 5610 corresponding to a specific pay room. In this instance, the region 5610 may include an indicator 5611 indicating that the region 5610 corresponds to the pay room. The indicator 5611 may be mapped to a preset financial information. For instance, the preset financial information may include an account-A information of a master member having opened the chat room. Moreover, the indicator 5611 may include an amount information mapped to the preset financial information. In this instance, the amount information may not be visually displayed on the region 5610.

According to an embodiment, the region 5610 may correspond to a pay room found or discovered by the former method described with reference to FIG. 32 or FIG. 39. Referring to FIG. 56 (b), the controller 180 of the mobile terminal 100 can detect a preset first command. For instance, the first command may include a command of touching the indicator 5611 and then dragging it in a preset direction.

In response to the first command, the controller 180 of the mobile terminal 100 can output a first GUI 5620 including the information mapped to the pay room to the region 5610. For instance, the first GUI 5620 may include a membership fee information of a membership fee supposed to be paid by the user of the mobile terminal 100, an account holder information of the account-A, and the like.

Referring to FIG. 56 (c), the controller 180 of the mobile terminal 100 can detect a preset second command. For instance, the second command may include a command of touching a prescribed region in the first GUI 5620 over a preset time. Referring to FIG. 56 (d), in response to the second command, the controller 180 of the mobile terminal 100 can output a second GUI 5620, which is provided to input a security information (e.g., PIN), to the region 5610. In this instance, the second GUI 5620 may include a PIN input region 5631.

A user of the mobile terminal 100 can input prescribed numerals to the PIN input region 5631 using a virtual keyboard. The controller 180 of the mobile terminal 100 can compare the PIN obtained through the second GUI 5630 to a PIN previously registered by the user of the mobile terminal 100. According to an embodiment, the controller 180 of the mobile terminal 100 sends the PIN to the payment service server 510 through the wireless communication unit 110, and the payment service server 510 may compare the PIN to the PIN previously registered by the user of the mobile terminal 100.

If the PIN obtained through the second GUI 5630 matches the PIN previously registered by the user of the mobile terminal 100, the controller 180 of the mobile terminal 100 may send a signal for requesting a payment to the payment service server 510 through the wireless communication unit 110.

The payment service server 510 can perform the payment of the amount using a financial information previously registered by the user of the mobile terminal 100. For instance, the payment service server 510 can remit an amount necessary for a payment in an amount belonging to an account-B to an account-A corresponding to a master member of the pay room using an information of the account-B corresponding to the user of the mobile terminal 100. Further, the payment service server 510 may perform the payment of the amount using the financial company server 520. And, the payment service server 510 can send a payment approval result, which indicates that the payment of the amount is made, to the mobile terminal 100.

Referring to FIG. 56 (e), the controller 180 of the mobile terminal 100 receives the payment approval result through the wireless communication unit 110 and can then output a message 5640 containing the received payment approval result to the region 5610.

Meanwhile, when the user of the mobile terminal 100 is the master member of the pay room, since a remittance account and a recipient account are identical to each other, the payment service server 510 does not make a payment of a prescribed amount actually but can associate the prescribed amount at the account of the master member with the pay room. According to the present embodiment, the first to third commands are examples only. According to an embodiment, the number, types and shapes of commands required for a payment may be differentiated.

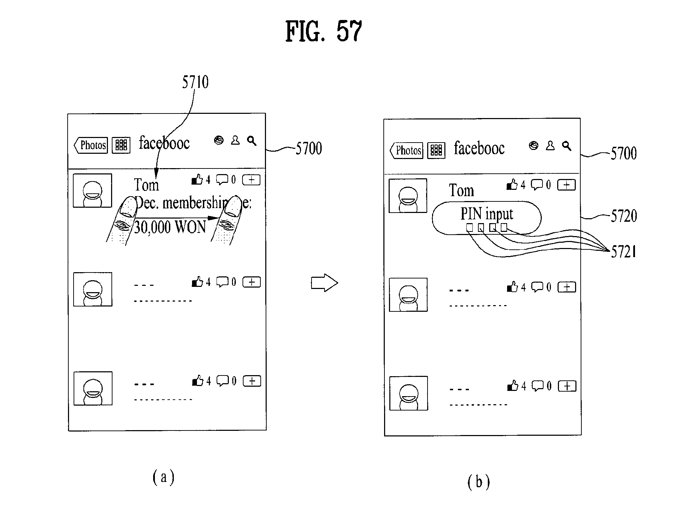

FIG. 57 is a diagram illustrating another example of a method of making a payment of a prescribed amount in a mobile terminal according to one embodiment of the present invention. Referring to FIG. 57 (a), the controller 180 of the mobile terminal 100 outputs a running screen 5700 of a specific application to the display unit 151. In this instance, the specific application may include a messenger application supportive of a common fund administration service (or a mobile payment service), an SNS (social network service) application, a web browser application and the like.

The running screen 5700 may include an amount information (e.g., 30,000 WON) 5710 mapped to a preset financial information. For instance, the preset financial information may include an account-A information of a person having uploaded the amount information. The controller 180 of the mobile terminal 100 detects a preset first command. For instance, the first command may include a command of selecting the amount information 5710 and then dragging it in a preset direction.

In response to the first command, the controller 180 of the mobile terminal 100 can output a GUI 5720, which is provided to input a security information (e.g., PIN), to the running screen 5700. And, the GUI 5720 may include a PIN input region 5721. Since a method of remittance from an account-B of a user of the mobile terminal 100 to the account-A Using the security information can refer to the former descriptions with reference to FIG. 47, FIG. 49, FIG. 54 and FIG. 56, its details shall be omitted from the following description.

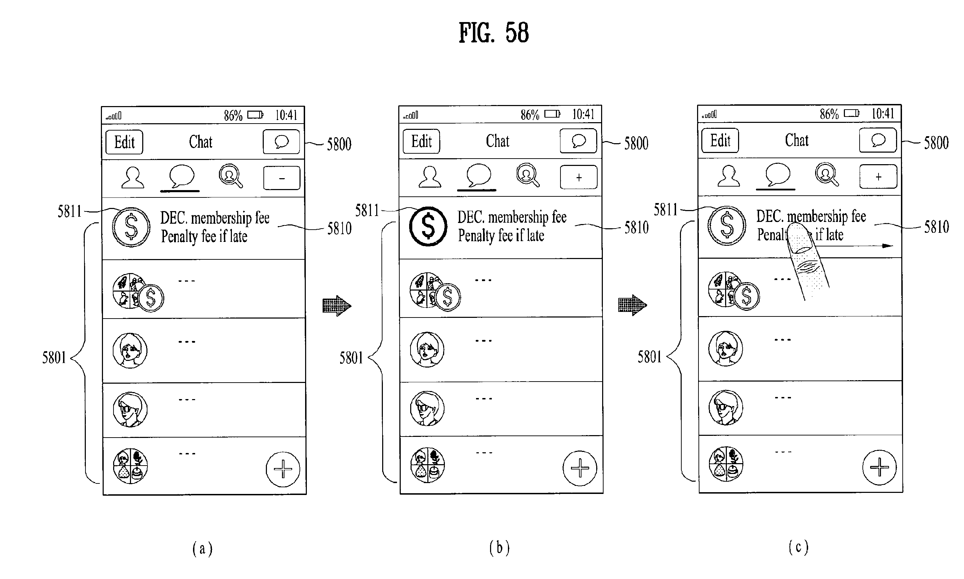

FIG. 58 is a diagram illustrating one example of a method of differentiating an information displayed on a display unit in accordance with a status of a pay room in a mobile terminal according to one embodiment of the present invention. Referring to FIG. 58, the controller 180 of the t mobile terminal 100 outputs a running screen 5800 of a specific application to the display unit 151. In this instance, the specific application may include a messenger application supportive of a common fund administration service (or a mobile payment service) and the running screen 5680 may include a list 5801 of at least one chat room and at least one pay room created using the messenger application.

The list 5801 may include a region 5810 corresponding to a specific pay room. In this instance, the region 5810 may include an indicator 5811 indicating that the region 5810 corresponds to the pay room. The payment service server 510 can send information on a status of the pay room to the mobile terminal periodically or aperiodically. And, the information on the status of the pay room may include an information on a presence or non-presence of payments of members belonging to the pay room.

Based on the information on the status of the pay room, the controller 180 of the mobile terminal 100 can differently display the indicator 5811 by distinguishing a case that a user of the mobile terminal 100 does not complete the payment from a case that the user of the mobile terminal 100 completed the payment.

For instance, FIG. 58 (a) is assumed as showing a case that a user of the mobile terminal 100 does not complete the payment. And, FIG. 58 (b) is assumed as showing a case that the user of the mobile terminal 100 completed the payment despite that other members of the pay room fail to complete the payments. The controller 180 of the mobile terminal 100 can control the indicator 5811 shown in FIG. 58 (a) and the indicator 5811 shown in FIG. 58 (b) to be displayed by differing from each other in at least one of type, shape, color, transparent and size.

FIG. 58 (c) assumes a case that all the members belonging to the pay room completed payments. If all the members belonging to the pay room complete the payments, the controller 180 of the mobile terminal 100 can display the indicator 5811 in a deactivated state.

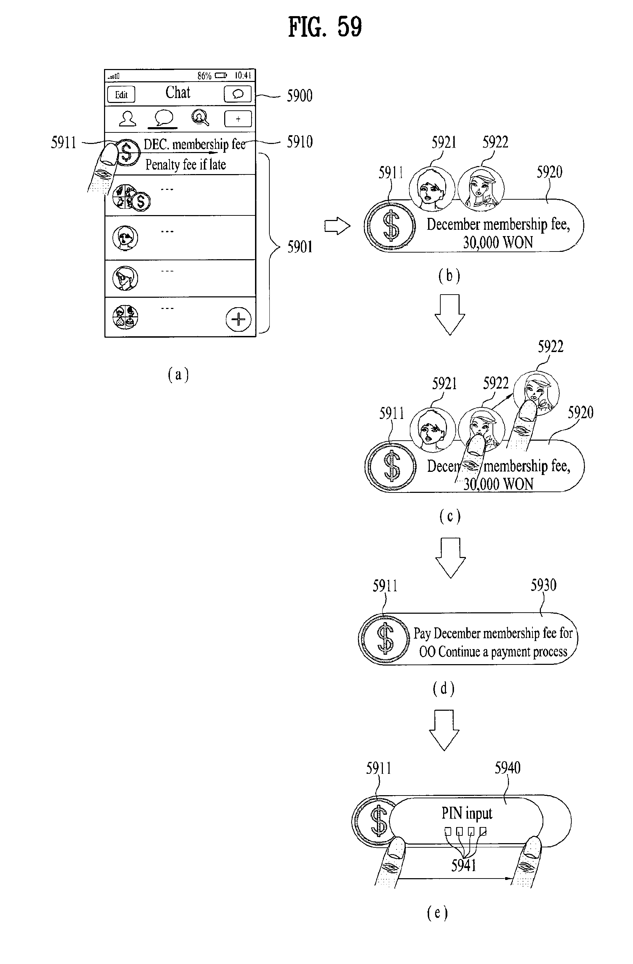

In this instance, the controller 180 of the mobile terminal 100 may delete the payment completed pay room from the list 5801 in response to a preset command. For instance, in response to a command of touching a prescribed point in the region 5810 and then dragging it in a preset direction, the controller 180 of the mobile terminal 100 may delete the payment completed pay room from the list 5801. Meanwhile, according to one embodiment of the present invention, a user of the mobile terminal 100 may make a payment of a different member in a list of pay rooms by proxy. This is described in detail with reference to FIG. 59 as follows.

FIG. 59 is a diagram illustrating one example of a method for a payment-complete member to make a payment for another member by proxy in a mobile terminal according to one embodiment of the present invention. Referring to FIG. 59 (a), the controller 180 of the t mobile terminal 100 outputs a running screen 5900 of a specific application to the display unit 151. In this instance, the specific application may include a messenger application supportive of a common fund administration service (or a mobile payment service) and the running screen 5900 may include a list 5901 of at least one chat room and at least one pay room created using the messenger application.

The list 5901 may include a region 5910 corresponding to a specific pay room. In this instance, the region 5910 may include an indicator 5911 indicating that the region 5910 corresponds to the pay room. According to the present embodiment, assume that a user of the mobile terminal 100 has completed a payment of an amount supposed to be paid by the corresponding user.

The controller 180 of the mobile terminal 100 detects a preset first command. For instance, the first command may include a command of touching the indicator 5911 and the dragging it in a preset direction. Referring to FIG. 59 (b), the controller 180 of the mobile terminal 100 can display a first GUI 5920 including information 5921 and 5922 failing to complete payments among the members of the pay room on the region 5910.

Referring to FIG. 59 (c), the controller 180 of the mobile terminal 100 can detect a second command for making a payment of a specific member by proxy among members failing to complete payments. For instance, the second command may include a command of touching the information 5922 of the specific member and then dragging it out of the first GUI 5920.

Referring to FIG. 59 (d), in response to the second command, the controller 180 of the mobile terminal 100 can output a message 5930, which is provided to check whether to make a payment of an amount corresponding to the specific member by proxy, to the region 5910. Referring to FIG. 59 (e), the controller 180 of the mobile terminal 100 can detect a preset third command. For instance, the third command may include a command of touching the indicator 5911 and then dragging it in a preset direction.

In response to the third command, the controller 180 of the mobile terminal 100 can output a second GUI 5940, which is provided to input a security information (e.g., PIN), to the region 5910. In this instance, the second GUI 5940 may include a PIN input region 5941. A user of the mobile terminal 100 can input prescribed numerals to the PIN input region 5941 using a virtual keyboard.

The controller 180 of the mobile terminal 100 can compare the PIN obtained through the second GUI 5940 to a PIN previously registered by the user of the mobile terminal 100. According to an embodiment, the controller 180 of the mobile terminal 100 sends the PIN to the payment service server 510 through the wireless communication unit 110, and the payment service server 510 may compare the PIN to the PIN previously registered by the user of the mobile terminal 100.

If the PIN obtained through the second GUI 5940 matches the PIN previously registered by the user of the mobile terminal 100, the controller 180 of the mobile terminal 100 may send a signal for making a payment corresponding to the specific member by proxy to the payment service server 510 through the wireless communication unit 110.

The payment service server 510 can perform the payment of the amount corresponding to the specific member using a financial information previously registered to correspond to the user of the mobile terminal 100. For instance, the payment service server 510 can remit an amount corresponding to the specific member in an amount belonging to an account previously registered to correspond to the user of the mobile terminal 100 to an account previously registered to correspond to a master member of the pay room

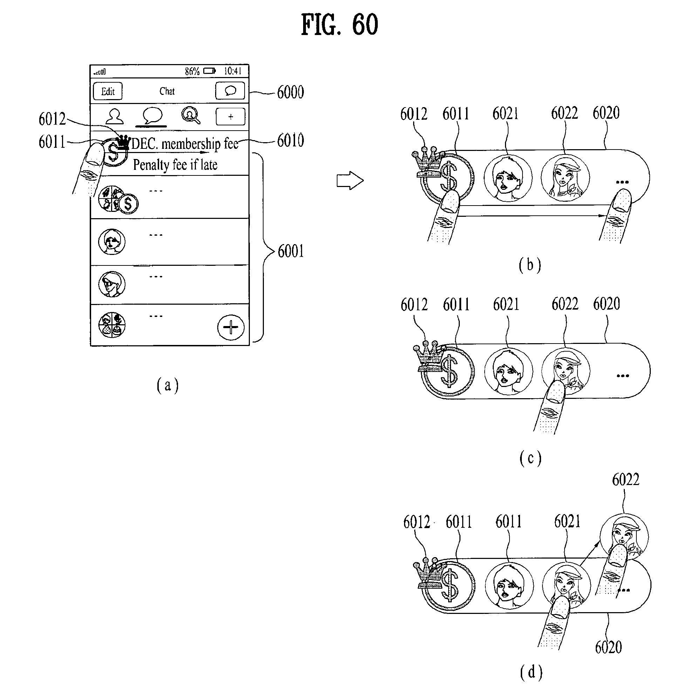

Meanwhile, according to one embodiment of the present invention, a master member of a pay room may administer the pay room. This is described in detail with reference to FIGs. 60 to 62 as follows.

FIG. 60 is a diagram illustrating one example of a method for a master member to administer a pay room in a mobile terminal according to one embodiment of the present invention. Referring to FIG. 60 (a), the controller 180 of the mobile terminal 100 outputs a running screen 6000 of a specific application to the display unit 151. In this instance, the specific application may include a messenger application supportive of a common fund administration service (or a mobile payment service) and the running screen 6000 may include a list 6001 of at least one chat room and at least one pay room created using the messenger application.

The list 6001 may include a region 6010 corresponding to a specific pay room. In this instance, the region 6010 may include an indicator 6011 indicating that the region 6010 corresponds to the pay room. And, the region 6010 may further include an indicator 6012 indicating that a user of the mobile terminal 100 is a master of the pay room.

Referring to FIG. 60 (b), the controller 180 of the mobile terminal 100 detects a preset first command. In this instance, the first command may include a command of touching the indicator 6011 and then dragging it in a preset direction. The controller 180 of the mobile terminal 100 can display a first GUI 6020, which includes information 6021 and 6022 of members failing to complete payments among members of the pay room, on the region 6010. A user of the mobile terminal 100 corresponding to the master member can check who the member failing to complete the payment through the first GUI 6020 is.

Referring to FIG. 60 (c), the controller 180 of the mobile terminal 100 can detect a preset second command. For instance, the second command is a command for having a 1:1 conversation with a specific member among the members failing to complete the payments and may include a command for touching an information of the specific member. In response to the second command, the controller 180 of the mobile terminal 100 can display a screen corresponding to a chat window created between the user of the mobile terminal 100 and the specific member on the display unit 151.

Meanwhile, referring to FIG. 60 (d), the controller 180 of the mobile terminal 100 can detect a preset third command. For instance, the third command is a command for releasing a payment duty of the specific member among the members failing to complete the payment and may include a command of touching the information of the specific member and then dragging it out of the first GUI 6020. In response to the third command, the controller 180 of the mobile terminal 100 sends a signal for requesting the release of the payment duty of the specific member to the payment service server 510 through the wireless communication unit 110. And, the payment service server 510 can release the payment duty of the specific member.

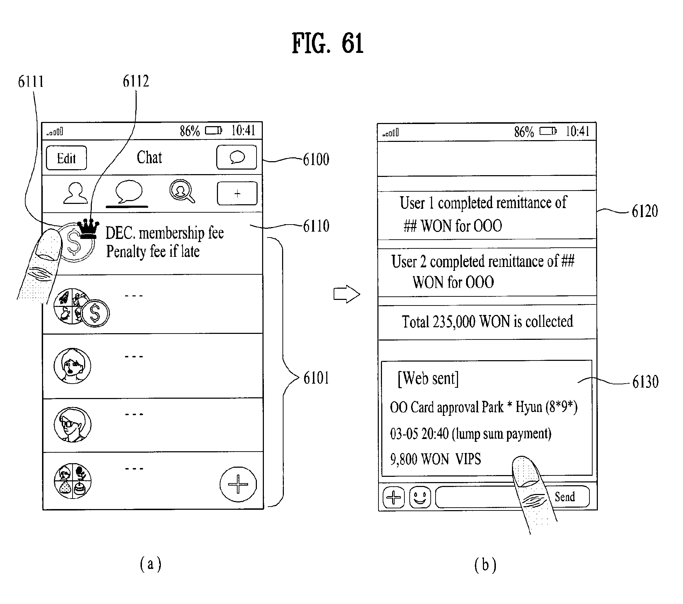

FIG. 61 is a diagram illustrating another example of a method for a master member to administer a pay room in a mobile terminal according to one embodiment of the present invention. Referring to FIG. 61 (a), the controller 180 of the mobile terminal 100 outputs a running screen 6100 of a specific application to the display unit 151. In this instance, the specific application may include a messenger application supportive of a common fund administration service (or a mobile payment service) and the running screen 6100 may include a list 6101 of at least one chat room and at least one pay room created using the messenger application.

The list 6101 may include a region 6110 corresponding to a specific pay room. In this instance, the region 6110 may include an indicator 6111 indicating that the region 6110 corresponds to the pay room. And, the region 6110 may further include an indicator 6112 indicating that a user of the mobile terminal 100 is a master of the pay room.

According to the present embodiment, assume that all members belonging to the pay room completed payments. The user of the mobile terminal 100 corresponding to the master member can continue to administer the pay room through a list of a pay room deactivated due to a payment completion. For instance, in response to a command of touching the region 6110, as shown in FIG. 61 (b), the controller 180 of the mobile terminal 100 can display a screen 6120 on the display unit 151.

The screen 6120 may include a history information of the pay room. For instance, the history information of the pay room may include a payment history information of the member belonging to the pay room, a use history information of membership fees collected through the pay room, and the like.

For instance, the user of the mobile terminal 100 copies a text message 6130 containing a use history of a prescribed amount received through a text message application and can paste it on the screen 6120. The controller 180 of the mobile terminal 100 can recognize the use history of the prescribed amount contained in the text message 6130 as a use history of the membership fees.

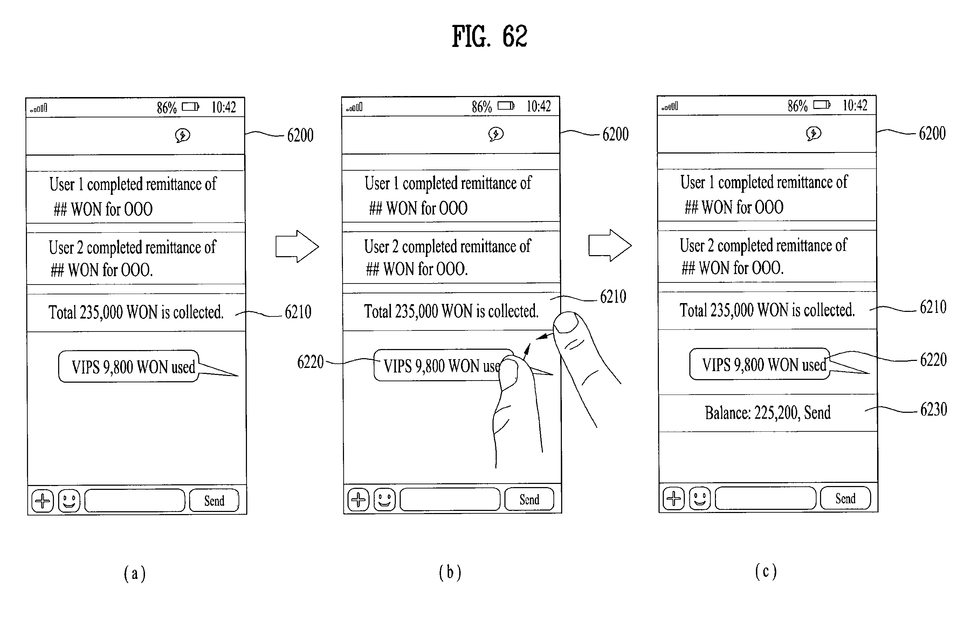

FIG. 62 is a diagram illustrating further example of a method for a master member to administer a pay room in a mobile terminal according to one embodiment of the present invention. Details of the contents redundant with the former description with reference to FIG. 61 shall be omitted from the following description.

Referring to FIG. 62 (a), the controller 180 of the mobile terminal 100 can output a running screen 6200, which includes a history information of membership fees collected through the pay room, to the display unit 151. In this instance, the history information may include a total amount information 6210 of the membership fees collected through the pay room.

A user of the mobile terminal 100 corresponding to a master member of the pay room can input an amount information 6220 of a used amount of the collected membership fees to the running screen 6200. In this instance, the amount information 6220 may be directly input by a user through a virtual keyboard. Alternatively, as shown in FIG. 61 (b), the amount information 6220 may be input to the running screen 6200 by copying a use history from a running screen of a different application and then pasting it.

Referring to FIG. 62 (b), the controller 180 of the mobile terminal 100 detects a preset first command. For instance, the first command may include a command of simultaneously touching both of the total amount information 6210 and the amount information 6220 and then dragging them toward each other.

Referring to FIG. 62 (c), in response to the first command, the controller 180 of the mobile terminal 100 calculates a new total amount information resulting from subtracting an amount corresponding to the amount information 6220 from an amount corresponding to the total amount information 6210 and can then display the calculated total amount information 6230 on the running screen 6200. According to an embodiment, in response to the first command, the controller 180 of the mobile terminal 100 sends a signal including the amount information 6220 to the payment service server 510 through the wireless communication unit 110. Subsequently, the payment service server 510 calculates (or updates) a new total amount information based on the signal and may be then able to send the calculated total amount information to the mobile terminal 100.

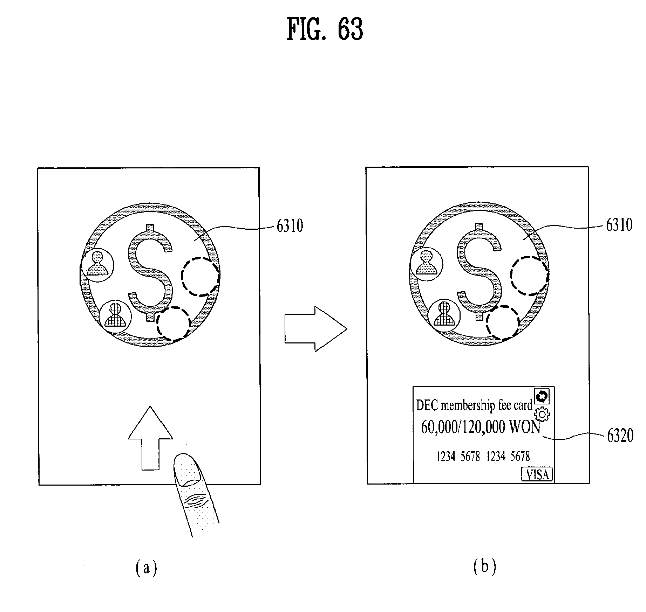

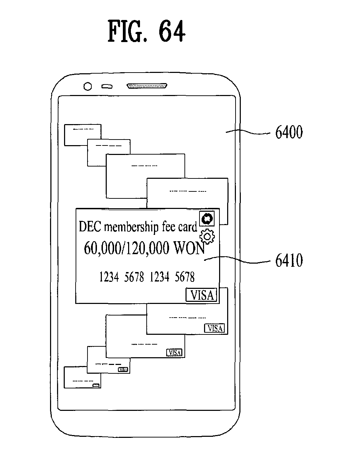

Meanwhile, the payment service server 510 may create a virtual card within a limit of membership fees collected through the pay room. This is described in detail with reference to FIG. 63 and FIG. 64 as follows. FIG. 63 is a diagram illustrating one example of a virtual card output to a display unit in a mobile terminal according to one embodiment of the present invention. FIG. 63 assumes that the mobile terminal 100 corresponds to a master member of the pay room.

Referring to FIG. 63 (a), the controller 180 of the mobile terminal 100 displays a GUI 6310, which is created to collect a common fund, on the display unit 151. The controller 180 of the mobile terminal 100 can detect a preset command. For instance, the preset command may include a command of applying a flicking touch to an edge of a screen bottom end of the display unit 151 in a top direction.

Referring to FIG. 63 (b), in response to the preset command, the controller 180 of the mobile terminal 100 can display a GUI 6320 of the virtual card, which is created within the limit of the membership fees collected through the pay room, on the display unit 151. The payment service server 510 creates a virtual card corresponding to the pay room and can then send at least one portion of the information of the created card to the mobile terminal 100. The virtual card may be associated with a specific account registered at the payment service server 510 by the master member. For instance, the information of the virtual card may include at least one of an information of the mobile terminal 100 corresponding to the master member of the pay room, an information of the master member, an account information of an account associated with the virtual card, a card number information of the virtual card, an amount information corresponding to the virtual card, a valid period information of the virtual card, and an information of a plurality of members associated with the virtual card (i.e., an information of members belonging to the pay room).

The controller 180 of the mobile terminal 100 can save at least one portion of the information, which is sent from the payment service server 510, to the memory 170. According to an embodiment, when the GUI 6320 of the virtual card is displayed, it may apply a visual effect in a manner that the GUI 6320 rises in a top direction from an edge of a screen bottom end of the display unit 151.

The GUI 6320 of the virtual card may include at least one of a name information of the pay room, an information on an amount collected currently, an amount information corresponding to the virtual card (e.g., a total membership fee information of total membership fees to be collected), a card number information of the virtual card, and a valid period information of the virtual card.

According to an embodiment, as collection of preset total membership fees is completed in the pay room corresponding to the virtual card, if the corresponding pay room is eliminated, the GUI 6320 of the virtual card may be activated. Alternatively, if a preset amount possibly smaller than total membership fees is collected in the pay room corresponding to the virtual card, the GUI 6320 of the virtual card may be created. According to an embodiment, the GUI 6320 of the virtual card may further include at least one of an information of a member having paid the membership fee through the pay room, an information of a member failing to pay a membership fee yet, a history information of the pay room, a history information of the virtual card, and the like. Meanwhile, using the created virtual card, the master of the pay room may make a payment of a prescribed amount online or offline. This is described in detail with reference to FIG. 64 as follows.

FIG. 64 is a diagram illustrating one example of a method of making a payment using a virtual card in a mobile terminal according to one embodiment of the present invention. Basically, since a master member of a pay room has a use authority of a virtual card, the following description shall be made on the assumption that the mobile terminal 100 shown in FIG. 64 corresponds to the master member.

Referring to FIG. 64, the controller 180 of the mobile terminal 100 can display a running screen 6400 of a specific application on the display unit 151. And, the running screen 6400 may include a GUI 6410 of a virtual card created to correspond to the pay room. In this instance, the running screen 6400 of the specific application may be the screen including the GUI 6310 of the pay room and the GUI 6320 of the virtual card, as shown in FIG. 63 (b), or a running screen of a mobile payment application, as shown in FIG. 64. In the latter case, the running screen 6400 may further include a GUI corresponding to each of a different card and a different virtual card registered at the mobile payment application as well as the GUI 6410 of the virtual card.

A user of the mobile terminal 100 corresponding to the master member of the pay room selects the GUI 6410 of the virtual card from the running screen 6400, thereby making a payment of a prescribed amount within an amount corresponding to the virtual card online or offline. Moreover, according to an embodiment, the master member can grant a use authority of the virtual card to a different non-master member of the pay room. In this instance, the master member may grant the use authority of the virtual card within a specific amount and/or a specific period to the different non-master member of the pay room. The embodiments of the virtual cards described with reference to FIGs. 7 to 26 may be applicable to the virtual cards described with reference to FIG. 63 and FIG. 64.

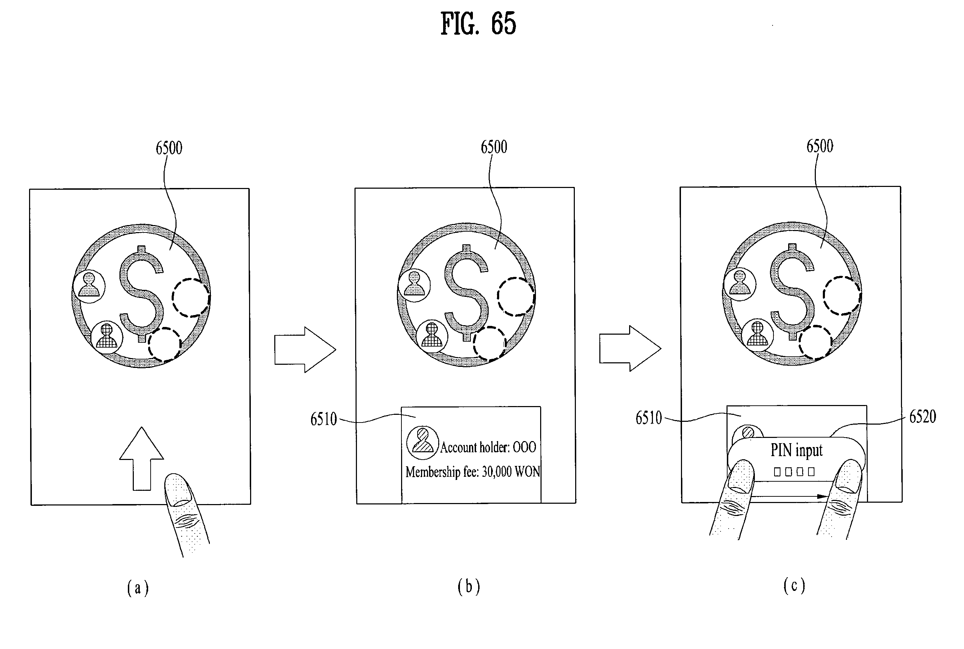

FIG. 65 is a diagram illustrating one example of a screen output to a display unit in a mobile terminal according to one embodiment of the present invention. FIG. 65 assumes that the mobile terminal 100 is a non-mater member of a pay room and corresponds to a member failing to complete a payment yet.

Referring to FIG. 65 (a), the controller 180 of the mobile terminal 100 displays a GUI 6500 created for collection of a common fund on the display unit 151. The controller 180 of the mobile terminal 100 can detect a preset first command. For instance, the first command may include a command of applying a flicking touch to an edge of a screen bottom end of the display unit 151 in a top direction.

Referring to FIG. 65 (b), in response to the first command, the controller 180 of the mobile terminal 100 can display a first GUI 6510 including an information mapped to the pay room on the display unit 151. For instance, the information mapped to the pay room may include at least one of an account information of an account associated with the pay room, an account holder information of an account associated with the pay room, and a membership fee information of a membership fee supposed to be paid by a user of the mobile terminal.

According to an embodiment, when the first GUI 6510 is displayed, it may apply a visual effect in a manner that the GUI 6510 rises in a top direction from an edge of a screen bottom end of the display unit 151. Referring to FIG. 65 (b) and FIG. 65 (c), the controller 180 of the mobile terminal 100 can detect a preset second command. For instance, the second command may include a command of touching a preset region in the first GUI 6510 and then dragging it in a preset direction.

In response to the second command, the controller 180 of the mobile terminal 100 can display a second GUI 6520, which is provided to input a security information (e.g., PIN), on the display unit 151. Since a method of remittance to an account of a master member from an account of a user of the mobile terminal using the security information can refer to the former descriptions with reference to FIG. 47, FIG. 49, FIG. 54 and FIG. 56, its details shall be omitted.

According to the embodiments of the present invention mentioned in the foregoing description, it can provide a user environment capable of administering and using a common fund using an application installed on a mobile terminal. According to the embodiments of the present invention mentioned in the foregoing description, it can provide a method of simplifying a payment process using an application installed on a mobile terminal.

The above-described present invention can be implemented in a program recorded medium as computer-readable codes. The computer-readable media may include all kinds of recording devices in which data readable by a computer system are stored. The computer-readable media may include ROM, RAM, CD-ROM, magnetic tapes, floppy discs, optical data storage devices, and the like for example and also include carrier-wave type implementations (e.g., transmission via Internet). Further, the computer may include the controller 180 of the terminal. It will be appreciated by those skilled in the art that various modifications and variations can be made in the present invention without departing from the spirit or scope of the inventions. Thus, it is intended that the present invention covers the modifications and variations of this invention provided they come within the scope of the appended claims and their equivalents.

## Claims

1. A mobile terminal, comprising:
a display;
a communication device configured to communicate with an external device; and
a controller configured to:
display a first interface on the display including information of a multitude of members participating in raising a common fund by being associated with a prescribed account for the common fund,
obtain security information on a prescribed first account from a first member among the members, in response to a first command received through the first interface,
if the obtained security information matches preset security information for the first account, deposit a prescribed amount into the prescribed account using the first account, and
automatically delete the information of the first member from the first interface after payment of the first member.

2. The mobile terminal of claim 1, wherein the controller is further configured to display the first interface on an execution screen of a specific application, and the specific application comprises a contact application, a messenger application and a chat application, and
wherein the controller is further configured to obtain the security information from the first member while receiving the first command.

3. The mobile terminal of claim 1 or 2, wherein the first command comprises touching the first interface for a prescribed time and/or dragging the first interface in a prescribed direction, and
wherein the controller is further configured to obtain a fingerprint of the first member in response to the first member touching and/or dragging on the first interface.

4. The mobile terminal of any of claims 1-3, wherein the controller is further configured to display the payment of the first member on the first interface instead of deleting the information of the first member, and
wherein the controller is further configured to provide terminals of the members except the first member with a notification indicating that the prescribed amount is not paid.

5. The mobile terminal of any of claims 1-4, wherein the members comprise a master member designated to administer the common fund,
wherein the prescribed account comprises an account of the master member,
wherein the first member comprises a user of the mobile terminal, and
wherein the first account comprises an account of the first member.

6. The mobile terminal of any of claims 1-5, wherein the controller is further configured to:
send a notification requesting to participate in raising the common fund to terminals of a multitude of candidates, and
if receiving an indication of a consent to participation from each of the terminals of the candidates, control the candidates to be included as the members in the first interface, and
wherein the candidates comprise users using a same specific application.

7. The mobile terminal of any of claims 1-6, wherein if the first member selects information of a second member failing to pay the prescribed amount from the first interface, the controller is further configured to deposit the prescribed amount into the prescribed account on behalf of the second member using the first account and automatically delete the information of the second member from the first interface after payment of the first member.

8. The mobile terminal of any of claims 1-7, wherein the controller is further configured to:
display a second interface on the display for creating a virtual card connected to an account of the raised common fund, and
if the virtual card is created through the second interface, display a third interface on the display for selecting a member to be associated with the virtual card.

9. The mobile terminal of claim 8, wherein the controller is further configured to save information of the virtual card received from an external network to a memory installed in the mobile terminal, and
wherein the information of the virtual card comprises at least one of information of the mobile terminal, user information of the mobile terminal, information of the preset account information, card number information of the virtual card, amount information corresponding to the virtual card, valid period information of the virtual card, and information of a plurality of members associated with the virtual card.

10. The mobile terminal of claim 8 or 9, wherein the controller is further configured to display the second interface and the third interface on an execution screen of a specific application, and
wherein the specific application comprises a contact application, a messenger application and a chat application.

11. The mobile terminal of any of claims 8-10, wherein in response to a member to be associated with the virtual card being selected through the third interface, the controller is further configured to provide a terminal of the selected member with a notification indicating the creation of the virtual card.

12. The mobile terminal of any of claims 8-11, wherein the controller is further configured to:
display a fourth interface configured to select at least one member having a use authority of the virtual card from members associated with the virtual card, and
transmit the information of the virtual card to the terminal of the selected member.

13. The mobile terminal of any of claim 12, wherein the fourth interface comprises a first menu for setting a term for the selected member to use the virtual card and/or a second menu for setting a limit of an amount payable by the selected member using the virtual card.

14. The mobile terminal of any of claims 8-13, wherein the controller is further configured to:
make a payment of a prescribed amount using the virtual card, and
provide a notification including information on the payment to the terminal of the member associated with the virtual card.

15. The mobile terminal of any of claims 8-14, wherein if a payment of an amount exceeding a preset amount is attempted using the virtual card, the controller is further configured to:
provide a notification indicating the attempt of the payment over the preset amount to the terminal of the member associated with the virtual card, and
receive an instruction about a presence or non-presence of an approval to the payment of the amount exceeding the preset amount from the member.
